# FASCICULE DE BREVET EUROPEEN

(11) **EP 2 974 260 B1**
(45) Date de publication et mention de la délivrance du brevet: **05.05.2021**
(21) Numéro de dépôt: 14713576.8
(22) Date de dépôt: 14.03.2014
(51) Int. Cl.: H04N 1/32

(54) **PROCÈDÉ DE TATOUAGE DE LA PARTIE TEXTUELLE D'UN DOCUMENT**
VERFAHREN ZUR WASSERZEICHENMARKIERUNG DER TEXTREGION EINES DOKUMENTS
METHOD FOR WATERMARKING THE TEXT PORTION OF A DOCUMENT

(30) Priorité: 15.03.2013 FR 1352330
(43) Date de publication de la demande: 20.01.2016
(73) Titulaire: Send Only Oked Documents (SOOD), 17000 La Rochelle (FR)
(72) Inventeur: LAHMI, Paul, 75015 Paris (FR); DENIS, Patrice, 17220 Saint Medard d'Aunis (FR); DIACONO, Yan, 92800 Puteaux (FR); OGIER, Jean-Marc, 17340 Chatelaillon Plage (FR)
(74) Mandataire: IPAZ
(86) Numéro de dépôt international: PCT/IB2014/000356
(87) Numéro de publication internationale: WO 2014/140770

(56) Documents cités:
- EP-A1- 1 953 752
- EP-A1- 2 402 885
- US-A1- 2003 118 211
- US-A1- 2006 075 241
- US-A1- 2009 136 082
- JACK T BRASSIL ET AL: "Copyright Protection for the Electronic Distribution of Text Documents", PROCEEDINGS OF THE IEEE, IEEE. NEW YORK, US, vol. 87, no. 7, 1 juillet 1999 (1999-07-01), XP011044225, ISSN: 0018-9219
- Rohit Verma: "A-Survey of Feature Extraction and Classification Techniques in OCR Systems", International Journal of Computer Applications & Information Technology Vol. I, Issue III, vol. ISSN, 1 November 2012 (2012-11-01), pages 2278-7720, XP055493249,

## Description

L'invention concerne d'une part une méthode d'encodage d'information de type informatique en superposition de la partie textuelle d'un document et d'autre part la méthode correspondante de décodage. Cet encodage et ce décodage sont particulièrement adéquats pour gérer l'authentification d'un document ainsi que pour sécuriser tout processus de reproduction de ce document, les informations ainsi superposées au texte pouvant en particulier servir de « règles » de reproduction dudit document. Cette technologie est particulièrement pertinente pour pérenniser tout transfert d'information liée à un document lorsque celui-ci est flashé, c'est-à-dire soumis à une prise photographique ou vidéo, par un dispositif nomade tel que téléphone intelligent également appelé Smartphone ou tablette numérique.

Il existe à ce jour différentes technologies de tatouage numérique permettant l'insertion de données de type informatique sur un document. De façon générale, ces techniques utilisent des portions de document riches en information telle que les images ou nécessitent lorsque le document est trop pauvre la superposition d'une trame permettant le support du tatouage. En effet dans le cas d'une image couleur, chaque point élémentaire est codé en RVB (Rouge, Vert, Bleu) avec un niveau de codage pour chacune de ces couleurs d'une valeur de 0 à 255, ce qui autorise un encodage efficace moyennant des variations élémentaires sur chacun de ces points. L'insertion d'un code à barres simple ou 2D peut également se substituer à ce tatouage.

Dans le cas de la partie texte d'un document, chaque point élémentaire est à l'origine soit noir et représentatif de la forme, soit blanc et représentatif du fond. Bien qu'il soit possible d'attribuer à chaque point d'une telle partie textuelle, une valeur de niveau de gris de 0 à 255, cette valeur est peu fiable car ne résultant pas d'un codage réel mais d'une mesure elle-même dépendante de la qualité de l'impression et de l'acquisition qui est en général une numérisation. La difficulté de séparation entre l'information « ajoutée » et le bruit naturel de numérisation et/ou d'impression sont donc des obstacles à ce type de stratégie.

Il existe donc un besoin pour une solution qui permette le tatouage de tels documents sans en dénaturer l'esthétique, le document tatoué étant quasiment identique visuellement au même document non tatoué.

Une telle solution permettant le tatouage d'une partie textuelle devrait être simple à mettre à œuvre et nécessiter très peu de puissance de calcul. Ceci permettrait d'insérer la phase de tatouage dans un processus de production d'un nombre important de documents sans le ralentir. Cela peut être le cas pour la production batch d'un fournisseur de services (Téléphone, Electricité ...) liée aux factures de ses clients.

Afin de mieux définir le champ d'utilisation de notre invention, nous rappelons certaines notions basiques évoquées dans des brevets antérieurs. En effet le tatouage proposé pour la présente invention est particulièrement adapté à la mise en œuvre de ces brevets.

On pourra se référer notamment à FR2732532 qui introduit la notion de « documents sensibles », c'est-à-dire un ensemble de documents dont la reproduction n'est pas libre contrairement aux « documents classiques » dont la reproduction n'est pas soumise à des contraintes ou restrictions.

Des travaux nous ont permis de définir un mode plus élaboré de transmission de documents avec authentification. Les « documents authentifiés » représentant une des quatre catégories de « documents sensibles » inventoriée dans FR2732532. Les « documents d'auteur » inventoriés également dans FR2732532 sont également concernés dans le cadre de la présente invention puisque l'ajout d'un tatouage propre à chaque copie transforme celle-ci en « copie authentifiable ». La rapidité de l'encodage proposé est aussi efficace pour définir des « règles » dans le cadre des « documents confidentiels » également inventoriés avec de plus l'avantage que celles-ci sont difficilement neutralisables par un utilisateur mal intentionné.

Nous reprenons ci-après un certain nombre de définitions de ces brevets qui seront utiles dans certains aspects de l'exposé de notre invention.

Nous devons tout d'abord définir les différents types de documents impactés par notre invention, en particulier nous pouvons faire une première distinction en considérant le média utilisé qui permet de distinguer « document matériel » et « document immatériel ».

Un « document matériel » est un document sous sa forme imprimée sur un média assimilable à du papier par tout moyen technique existant ou futur telle que, et de façon non limitative, une impression offset et/ou une impression obtenue par une imprimante pilotée par un système d'information éventuellement complété d'éléments additionnels tels des éléments manuscrits ainsi que toute combinaison de ces moyens. Le média pourra soit être du papier standard ou tout autre média pouvant supporter une telle impression afin d'obtenir un document physique. Le format n'a pas d'incidence sur cette définition : un document format A4 ou A3 (format standard européen), letter (format standard américain) ainsi que tout autre format standard ou non, recto simple ou recto-verso ou composé de plusieurs feuilles voire un livre reste un « document papier » y compris si le support (média) n'a rien à voir avec du papier : matière synthétique, métallique ou de toute composition.

Un « document électronique » à l'opposé du « document matériel » est un « document immatériel ». Il peut se présenter sous plusieurs formes.

Un « document électronique » peut être sous forme d'un fichier informatique dans un format directement visualisable tel le format PDF et tel que l'impression de ce document produise un « document matériel » visuellement identique à ce document lorsqu'il est visualisé sur un écran de type informatique. De façon non limitative cet écran peut être l'écran associé ou piloté par un ordinateur fixe ou portable ou de format tablette mobile ainsi que tout autre écran géré par une intelligence informatique tel que les écrans de téléphone intelligent (Smartphone). Le format de ce type de fichier a une importance pour la suite de la description du brevet, il faut donc distinguer deux types de format de « documents électroniques », format pouvant qualifier également les autres « documents électroniques », ce sont les « documents électroniques image » et les « documents électroniques descriptifs ».

Le format de fichier des « documents électroniques images » privilégie la vision du document et inventorie l'ensemble des constituants élémentaires de ce document liés à la visualisation du document, cela sera par exemple la définition d'un certain nombre de points élémentaires ou tout ensemble d'éléments graphiques permettant la reconstitution de l'image du document en vue d'une visualisation sur écran ou d'une impression. Dans ce cas, les « caractères unitaires » ne sont pas identifiables par une analyse directe du fichier mais peuvent éventuellement être détectés par des technologies d'OCR (Reconnaissance de caractères) appliquées à l'image complète d'une page ou à une partie de celle-ci. De façon générale, nous considérerons comme « document électronique image » tout document électronique où la détermination des caractères ne peut être obtenue par une analyse directe du contenu du fichier mais doit être retrouvée indirectement à partir des images que ce document permet de reconstituer. Par exemple les documents au format Tiff ou JPEG sont en règle générale des « documents électroniques images ».

Le format de fichier des « documents électroniques descriptifs » privilégie l'identification des composants du document et le positionnement de chacun de ses composants dans les pages du document. De façon générale, nous considérerons comme «document électronique descriptif » tout document dont le format permet d'identifier les « caractères unitaires » qui le compose sans avoir à en reconstituer l'image ou les images qu'il matérialise en cas d'impression ou de visualisation. Par exemple les documents au format WORD (.doc, .docx ...) EXCEL (.xls, .xlsx ...) ou PDF sont en règle générale des « documents électroniques descriptif » lorsqu'ils résultent d'un processus informatique. Il existe toutefois certains cas ou ces mêmes documents sont des « documents électroniques images » en particulier lorsque ces documents sont les résultats d'une opération de numérisation ou incorporent des ressources externes.

Dans certains cas, les « documents électroniques descriptifs » se présentent sous forme d'un fichier de type déclaratif, tel par exemple un fichier XML, qui comporte dans ce cas un certain nombre de données et d'instructions de formatage. Ces éléments peuvent soit être définis explicitement dans le fichier ou de façon implicite via l'appel à des systèmes de données externes et l'utilisation d'algorithmes adaptés. Par extrapolation, un document peut se limiter à une collection d'informations à condition qu'une intelligence informatique soit capable par des algorithmes adaptés à produire soit un « document électronique » visualisable tel que défini précédemment soit un « document matériel » tel que défini précédemment en complétant ces données par des données complémentaires et/ou des opérations de formatage définis gérés par cette intelligence informatique et/ou par un ou des systèmes d'informations tiers en relation avec celui-ci.

Un document visualisé sur un écran informatique est à la foi assimilable à un « document matériel » lorsqu'il est associé à son support écran et un « document électronique » lorsqu'il est associé à un fichier de type informatique ou équivalent comme défini ci-dessus. Ainsi un document visualisé sur tout type d'écran est un « document matériel » lorsqu'il est par exemple soumis à une prise photographique ou vidéo par un dispositif tel qu'un téléphone intelligent par exemple. Il est par contre considéré comme un « document électronique » lorsque l'utilisateur qui le visualise décide de le sauvegarder ou de le transmettre via un système d'information.

Un « document conceptuel » est l'ensemble des informations nécessaires à l'obtention d'un « document électronique » et/ou en « document matériel ». Un « document conceptuel » est matérialisé par un ensemble de données informatiques que celles-ci soient stockées sur un même fichier physique une même base de données ou une pluralité de ces éléments réparties sur un ensemble d'unités de stockage répartis sur différents supports informatiques tels que un ou des fichiers informatique ou équivalent, et/ou, une ou des bases de données ou équivalent, eux-mêmes présents sur un ou une pluralité de système d'information. Ces données peuvent être intégrées dans un objet informatique comme par exemple un fichier XML. Ces données intègrent ou non des éléments de définition de formatage. Le formatage dans ce cas consiste à la définition de la présentation des données lorsque celles-ci sont intégrées à un « document électronique » et/ou un « document matériel ».

Un « document exploitable » est dans le cadre de l'invention un document sur lequel peuvent être appliquées les étapes de décodage de l'invention. Ces étapes sont de nature informatique ; elles nécessitent la reconnaissance d'éléments graphiques et/ou de caractéristiques graphiques. Ce document sera sous une forme de « document électronique » permettant une telle reconnaissance. Ainsi si le document à traiter est un « document matériel », on obtiendra un « document exploitable » par une phase de numérisation, soit par utilisation d'un scanner soit par une prise photographique ou une opération équivalente. Le format du « document électronique » obtenu doit permettre les phases de décodage par analyse graphique du résultat de la numérisation. Dans le cas, ou le document à traiter est déjà un « document électronique », ce document est un « document exploitable » si les phases de décodage explicitées dans la présente invention sont capables d'y détecter le cas échéant les « marques » présentes et/ou , les « règles » présentes, ou, de manière générale toute portion d'encodage destinée à être décodée.

Nous complétons ces définitions par des définitions techniques générales :
- Une « unité requérante » est une entité qui prend la décision d'encoder un « document conceptuel ». L' « unité requérante » peut être de nature humaine, c'est-à-dire un utilisateur ou toute personne ou groupe de personne ayant défini un besoin d'encodage compatible avec la présente invention sur un document pour un but fonctionnel particulier. L'« unité requérante » peut être également tout processus informatique ou non qui lors du processus de création d'un « document matériel » et/ou d'un « document électronique » nécessite un encodage compatible avec la présente invention.
- L'élément « règles » lorsqu'il est inséré sur un « document sensible » permet au système de reproduction d'identifier les règles et restrictions de reproduction associées à ce document soumis à la reproduction, cette définition résulte de mes brevets précédents. Ces informations peuvent inclure non exclusivement des informations de référencement permettant d'atteindre les informations préalablement stockées associées au document soumis à une reproduction. Dans ce cas, les « règles » peuvent également se définir de façon complémentaire aux autres éléments de référencement classiquement insérés dans le document sous forme par exemple de codes à barres à une ou deux dimensions, voire des données insérées sous forme visuellement exploitables tel qu'un numéro de contrat. Toute information de type informatique, c'est-à-dire pouvant être traitée par un algorithme de type informatique afin de permettre à cet algorithme de répondre à une requête de reproduction sur un « document sensible » afin de gérer les modalités et les restrictions de cette reproduction est dénommée « règles » pour la suite. Ces « règles » sont définies graphiquement sur un « document matériel ». Pour un « document électronique », celles-ci sont définies librement à condition que toute obtention d'un « document matériel » à partir de ce média puisse intégrer des « règles » définies graphiquement soit via un processus d'impression standard soit via un processus d'impression spécifique assurant la transposition des règles du document électronique en règles dans le document imprimé, que ces deux occurrences soient identiques ou non.
- L'élément « marque » lorsqu'il est inséré sur un « document sensible » permet à un système de reproduction intégrant une technologie adaptée de détecter le caractère « sensible » du document soumis à la reproduction indépendamment du décodage des « règles », cette définition résulte de mes brevets précédents. Dans le cas d'un « document matériel », les « marques » sont des éléments graphiques intégrés au graphisme général du document et pouvant être détectées après une phase de numérisation de ce document et par recherche directe dans le résultat de cette numérisation. La numérisation d'un « document papier » consiste à modéliser un document en un ensemble de points ou équivalents avec des attributs particuliers pour chacun d'eux tels que des attributs de couleur. Le résultat de cette numérisation permet de transformer ce « document matériel » en un « document électronique image» pouvant faire l'objet de traitements informatiques adaptés tels que par exemple la possibilité de visualiser ce document sur un écran de type informatique. Il existe aujourd'hui de nombreuses méthodes pour modéliser un « document matériel » après numérisation, on peut citer de façon non limitative les formats suivants : TIFF, JPEG, PDF. Dans le cas d'un « document électronique », la « marque » peut être intégrée comme un attribut spécifique comme par exemple la définition d'une valeur informatique stockée dans le corps du « document électronique » ou dans une zone dédiée. Elle peut également correspondre à des modifications élémentaires du contenu du document proprement dit qui dans ce cas pourront éventuellement correspondre à la « marque » du document matériel obtenu par impression directe du « document électronique ».
- Un «système de LAD/RAD » (LAD est l'acronyme de « Lecture automatique de documents » et RAD est l'acronyme de « Reconnaissance automatique de document ») est appliqué principalement sur le résultat de numérisation d'un « document matériel » et consiste à reconnaître ou d'identifier sa structure éventuellement par identification du formulaire utilisé. Différentes techniques existent concernant la RAD ou généralement la LAD, notre invention pouvant mettre en oeuvre ce type de technologie, nous en rappelons l'état de l'art ci-après avant l'exposé de notre invention.
- Un « OCR » (reconnaissance optique de caractères). Différentes techniques existent. Notre invention mettant en œuvre ce type de technologie, nous en rappelons l'état de l'art ci-après avant l'exposé de notre invention.

Nous nous proposons ici de faire un bref rappel de l'état de l'art concernant l'interprétation d'image dans le cadre de l'application à la lecture automatique de document (LAD/RAD) et à la reconnaissance optique de caractères (OCR) :
La définition de l'état de l'art qui suit prend appui sur le schéma 11.

L'interprétation des images numériques au sens large repose de manière générale sur un enchaînement d'opérateurs adaptés, visant à reconstruire des informations de haut niveau sémantiques, à partir des pixels résultants de l'acquisition. Le plus souvent, les traitements les plus utilisés sont décomposables en couches dépendant du niveau d'abstraction considéré. Suivant les auteurs, le nombre de niveaux peut être plus ou moins variable, mais il est néanmoins possible de dégager des invariants relativement stables et caractéristiques d'une chaîne classique d'analyse.

Ces invariants peuvent s'intégrer dans des stratégies très variables, suivants les priorités définies par les équipes de développement. On trouve ainsi dans la littérature et sur le marché « classique » deux grandes catégories de méthodologies.

Tout d'abord, on trouve les approches ascendantes, dont le principe est de partir du pixel à l'objet, en regroupant progressivement suivant des critères d'homogénéité ou de connexité les informations pixellaires de l'image pour construire des objets de haut niveau sémantique (exemple : pixel->caractère-> mot-> ligne-> paragraphe-> page, dans le cas d'un page de texte imprimé simple).

On trouve également les approches antagonistes à celles-ci, les approches descendantes, dont le principe est de décomposer progressivement suivant des critères d'homogénéité ou de connexité- l'image du document en éléments de plus en plus simples, pour arriver aux composants élémentaires de la page.

D'autres approches, plus originales s'appuient sur des mécanismes dits « hétérarchiques » ou « cycliques », consistant à alterner ces différentes approches, en fonction des intentions et de critères de cohérence ou de qualité de reconnaissance.

Ces grandes catégories de méthodes s'appuient toutes sur des composants de traitement élémentaires dont les grandes lignes sont présentées dans la suite. Nous présentons sur le schéma 11 un synoptique résumant ces grandes étapes au travers d'une approche ascendante. Ainsi suivant un schéma relativement "classique", il est possible de distinguer les opérateurs de bas niveau, visant à filtrer/restaurer l'image. Ils consistent à identifier la nature de la dégradation ainsi que ses paramètres afin d'améliorer la qualité de l'image au regard de traitements ultérieurs. Suivant l'objectif recherché, différentes classes de traitement peuvent être intégrées à ce niveau. Parmi celles-ci, il est possible de citer les techniques de rehaussement de contraste. Généralement, ces outils consistent à redéployer l'histogramme de l'image sur une gamme d'analyse optimale, lorsque les images sont peu informatives, généralement à cause des conditions d'acquisition. Ce type de situation est rencontré quand des scènes sont sous-exposées ou quand le capteur ne fournit pas d'informations suffisamment discriminantes pour la suite des opérations. Les techniques de filtrage entrent également dans cette catégorie de traitement. Elles visent à éliminer les perturbations introduites lors de l'acquisition/numérisation de l'image. Différents types de bruits sont rencontrés (additif, multiplicatif, impulsionnel, ...) et les méthodologies utilisées sont généralement adaptées. Leur but peut aussi être de binariser l'image, lorsque le concepteur de la chaîne d'analyse ne souhaite pas utiliser la "boîte noire" de binarisation fournie avec le capteur, généralement un scanner. En effet, bien que les algorithmes de binarisation livrés avec les dispositifs d'acquisition aient fait de réels progrès en intégrant la dynamique de l'histogramme, ceux-ci restent relativement inadaptés lorsque l'image comporte des caractéristiques locales non analysables par ces techniques globales. Ces outils de binarisation globaux posent particulièrement des problèmes pour la segmentation des documents localement denses, tels que certaines cartes, les enveloppes, les journaux, ou les formulaires. Le problème majeur soulevé par ces techniques est la segmentation des caractères, qui peuvent, en cas de mauvaise binarisation, se retrouver connectés entre eux ou à des éléments n'appartenant pas à la couche textuelle. Cette étape peut s'avérer déterminante pour la suite des opérations car la gestion des informations textuelles connectées à d'autres éléments est une phase de traitement très délicate. Enfin, à ce niveau de traitement se trouvent également les outils de restauration visant à éliminer le bruit et/ou le flou de l'image, dégradation introduite en générale par le dispositif et les conditions d'acquisition. De manière générale, la plupart des techniques utilisées à ce niveau se veulent "aveugles ou semi-aveugles", c'est-à-dire avec une introduction minimale de connaissances a priori. Il s'agit là de toute la problématique des problèmes inverses.

Ces traitements précèdent une phase de segmentation des informations, visant à séparer du fond de l'image l'aspect informationnel.

En complément des méthodes précédemment évoquées, on trouve ensuite une batterie de traitements permettant d'extraire l'information élémentaire de l'image, en vue de débuter la phase de structuration de l'information. En analyse de document, ces techniques de segmentation s'appuient généralement sur des données relatives à des connaissances sur les propriétés des informations recherchées. Ces données peuvent concerner des attributs propres aux objets recherchés, comme des caractéristiques géométriques sur les formes à reconnaître : taille des formes, surfaces, ... Des extracteurs de composantes connexes sont alors exploités pour séparer les couches d'informations.

De manière générale, on rencontre ensuite un ensemble de traitements dont le but est d'extraire des primitives pour la reconnaissance. Suivant le contexte, les techniques utilisées sont opérationnalisables directement sur les formes à reconnaître ou nécessitent une phase de segmentation préalable (le terme segmentation est également employé ici, même si il ne s'agit pas du même type d'opération, puisqu'il s'agit ici de découper l'information utile en « particules élémentaires », simples à reconnaître).

Dans le cas de documents imprimés, les informations textuelles peuvent être simplement segmentées, les caractères étant naturellement séparés les uns des autres lors de l'impression. Une simple extraction des composantes connexes du document suffit à extraire les caractères. Dans ce type de cas, les techniques d'extraction de primitives sont directement appliquées sur les formes matérialisées par les composantes connexes.

Dans d'autres cas comme la reconnaissance de l'écriture manuscrite cursive par exemple, le problème de l'extraction de primitives pour la reconnaissance est plus délicat puisque les formes à reconnaître sont connectées les unes aux autres. Les techniques généralement appliquées visent alors à « découper » l'information en « morceaux » (opération de segmentation forme-forme), et à alimenter le dispositif de reconnaissance avec les « morceaux » résultant de la segmentation. Suivant la nature du problème analysé, les morceaux pourront être des lettres, des groupes de lettres, ou encore des portions de lettres généralement appelés graphèmes (ce terme sera utilisé en ce sens dans la suite du brevet). Bien que les caractères cursifs résultant d'une écriture manuscrite ne sont pas potentiellement porteurs d'information au sens de notre invention, leur reconnaissance sur un document qui comporte un encodage conforme à notre invention permet par exemple d'identifier des annotations ajoutées sur un « document sensible » et de pouvoir associer un traitement adapté à celles-ci.

Au cours de ces phases de traitement, ces étapes préalables à la reconnaissance sont généralement combinées avec des phases d'extraction d'informations sur les objets à reconnaître. Ainsi, dans le cas de caractères déconnectés par exemple, les outils d'extraction de composantes connexes précédemment cités permettent d'extraire de nombreuses informations utiles pour la reconnaissance (centre de gravité, excentricité, ....)

Dans le cas de l'écriture manuscrite cursive, la phase de segmentation peut permettre de procéder à un codage de l'information analysée, pour les futures étapes de reconnaissance. Par exemple, sur de l'écriture manuscrite, les graphèmes extraits seront mis en correspondance avec des graphèmes stockés dans des bases (exemple de graphème : une hampe ou un jambage de lettre, une boucle, ....) et on stockera éventuellement leur enchaînement séquentiel (exemple : une hampe suivie d'une boucle peut constituer un indice pour la reconnaissance de la lettre manuscrite « k ». Cet enchaînement séquentiel est généralement utilisé dans des phases ultérieures de traitement dans des mécanismes probabilistes par exemple (exemple d'enchaînement séquentiel : dans le cas de la reconnaissance des chèques, la probabilité d'avoir le mot « Cinquante » avant le mot « cent » est nulle : si le procédé de reconnaissance tend à prendre ce type de décision des informations sur ces probabilités de transition sont alors utilisables pour rejeter l'information).

Suivant le contexte concerné, on pourra alors procéder à une méthode de caractérisation des formes avant la reconnaissance. Ces méthodes de caractérisation visent à représenter l'image des formes à reconnaître dans un espace stable et facilitant la reconnaissance. Certaines approches utilisent directement l'image pour représenter les formes, mais ces approches souffrent généralement de problème de stabilité, et sont souvent en difficultés dès lors qu'il faut traiter des problèmes d'invariance à l'échelle ou à l'orientation.

Les techniques utilisées pour caractériser les formes sont de manière générale « structurelles » ou « statistiques ». Les approches structurelles tentent de représenter les formes au travers d'informations structurelles de la forme, telles que le nombre de fin de trait, le nombre de nœuds du squelette, ou encore le nombre de concavités, .... Les informations structurelles peuvent également dans certains cas concerner les relations topologiques qui peuvent exister entre primitives élémentaires constituant les formes. Suivant les cas, on constitue alors des bases d'informations représentatives des formes à reconnaître sous forme de « vecteurs de caractéristiques », et la phase de reconnaissance revient alors à rechercher, pour une forme inconnue, celle qui s'en rapproche le plus dans la base. Dans d'autres cas, on pourra décrire les formes à reconnaître par des états dans un graphe, et des mécanismes probabilistes ou syntaxiques permettent alors de procéder à la reconnaissance.

Les approches statistiques visent à représenter elles aussi les formes dans un autre espace, stable, permettant de procéder à la reconnaissance. Les techniques généralement utilisées peuvent s'appuyer sur des outils mathématiques plus ou moins sophistiqués pour représenter les formes (représentation fréquentielle, par des moments géométriques, par des invariants, .....) Dans ce type de cas, la sortie de cette étape est généralement une description des formes par des vecteurs de descripteurs, utilisables pour la reconnaissance.

L'étape suivant cette phase de caractérisation est généralement une phase de reconnaissance qui dépend de la façon dont on a caractérisé la forme. Si les formes à reconnaître sont décrites sous forme structurelle, une analyse syntaxique (une analyse syntaxique peut, de manière vulgarisée, être comparée à l'analyse de la structure d'une phrase qui est correcte ou non suivant la façon dont les mots sont enchaînés) ou structurelle peut permettre de procéder à la reconnaissance.

Suivant la nature du problème, on pourra ici également utiliser des méthodes probabilistes pour procéder à la reconnaissance.

Dans le cas où les formes sont décrites par des vecteurs issus de transformées mathématiques -approches statistiques-, la problématique de reconnaissance consiste alors à comparer les vecteurs représentant des formes inconnues avec ceux représentant des formes connues a priori. Il s'agit dès lors de mesurer des ressemblances entre vecteurs de caractéristiques dans des espaces à n-dimensions (n correspondant aux nombres de caractéristiques retenues pour représenter une forme). La décision s'appuie alors généralement sur des critères de distance entre les formes à reconnaître et les formes inconnues pour prendre une décision. Les techniques utilisées peuvent alors s'appuyer sur des mécanismes très variés, tels que la classification probabiliste, les approches connexionnistes (neuronales), les méthodes floues, .... Ou encore la combinaison/fusion de ces approches. Les méthodes de référence actuelles en matière de reconnaissance sont généralement les Machines à Vecteurs de Supports (généralement appelées SVM) et les techniques connexionnistes à base de réseaux de neurones récurrents.

Cette technologie d'identification d'une forme inconnue pour l'associer à une valeur connue par une analyse statistique d'un vecteur de caractéristiques est dénommée « classification statistique » par la suite, et lorsque un OCR utilise une telle méthode de reconnaissance pour reconnaître un caractère inconnu pour l'identifier par rapport à des caractères connus est dénommé « OCR utilisant un méthode de classification statistique » pour la suite.

Suivant la méthodologie employée, la sortie de ces techniques peut-être « la classe » de l'objet reconnu, éventuellement associée à une confiance ou probabilité liée à la décision.

Dans ces mécanismes de reconnaissance, il va de soi que des étapes préalables sont nécessaires, pour « apprendre » au système à reconnaître les formes à analyser. Les méthodes d'apprentissage sont elles aussi très variables suivant la technique de reconnaissance retenue.

Si l'on considère les méthodes de reconnaissance statistique, très souvent, les approches sont dites « supervisées » et consistent à amener en entrée du dispositif de reconnaissance une base importante d'échantillons étiquetés représentatifs du problème et à calibrer le système de reconnaissance en s'appuyant sur ces échantillons.

Par exemple, en reconnaissance de caractère, on pourra amener une base de caractères étiquetés (pour laquelle on connaît la réponse que doit fournir le système de reconnaissance). Ces bases sont généralement très importantes car elles conditionnent la suite des traitements. La dimension de ces bases est en relation directe avec la taille des vecteurs représentant les formes (pour pallier à un problème qualifié de malédiction de la dimensionnalité).

Si l'on considère les méthodes de reconnaissance structurelles, la démarche est un peu la même et consiste à amener des bases d'éléments connus a priori au système.

A noter ici que, suivant le dispositif de reconnaissance considéré, les systèmes seront ou non en mesure de procéder à des apprentissages qualifiés « incrémental », permettant au système d'apprendre dynamiquement de nouveaux échantillons, ou de corriger des erreurs qu'ils pourraient avoir commises et qui seraient détectées par l'utilisateur. Dans de nombreux systèmes, l'apprentissage est non incrémental et s'appuie sur une phase d'apprentissage amont qui n'est pas remise en cause par la suite.

Le problème des interfaces est multi-facettes suivant que l'on considère les interfaces entre l'homme et le dispositif ou entre les traitements impliqués dans la chaîne.

S'il s'agit d'IHM (Interface Homme-Machine), on recherchera à accentuer l'ergonomie du dispositif pour les phases de correction et d'apprentissage, soit au travers de phases dédiées à la correction, soit au travers de corrections interactives.

S'il s'agit d'interfaces entre traitements, on visera à définir des formalismes les plus génériques possibles, dans des formats standards (XML par exemple) pour garantir la plus grande flexibilité et l'interchangeabilité des composants logiciels impliqués dans la chaîne.

Cet aspect « interface » est essentiel dans le cas où l'on considère des systèmes dotés de capacités d'apprentissage incrémental puisque l'opérateur humain interfère avec le dispositif, pour l'aider dans la construction de sa solution.

Tous ces mécanismes complexes sont généralement intégrés dans des systèmes plus ou moins dynamiques qui s'appuient sur de nombreuses connaissances de catégories très différentes.

Parmi celles-ci, les connaissances du domaine concernant la problématique analysée et ses spécificités sont généralement noyées dans le code du dispositif, rendant le système difficilement évolutif et adaptable. Des approches innovantes visent à externaliser ces connaissances et à rendre celles-ci les plus indépendantes possible du dispositif de reconnaissance, de sorte que celui-ci s'organise dynamiquement en fonction de chaque application.

D'autres catégories de connaissances sont implicitement utilisées dans de tels dispositifs, telles que les connaissances de l'expert en traitement des images, qui dispose du savoir faire pour choisir un opérateur de traitement d'image en fonction du contexte, et qui sait comment le paramétrer. Certaines approches tentent également d'externaliser ces connaissances, de sorte que la partie traitement des images s'auto-adapte en fonction du contexte.

Ainsi, suivant le contexte analysé, de nombreuses voies sont possibles à chaque étape de la chaîne. Comme indiqué précédemment, l'implémentation d'une chaîne de traitement implique de nombreuses connaissances qu'il est fondamental d'externaliser pour garantir la pérennité, l'adaptabilité et l'évolutivité du dispositif. En effet, en fonction du contexte rencontré, la chaîne de traitement déployée et son paramétrage peuvent être très variés.

La présente invention permet d'utiliser la partie textuelle d'un document pour encoder une information de type informatique elle-même pouvant entre autre faire office de « règles » telles que définies ci-dessus. Afin de faciliter la description de l'invention, nous explicitons les notions suivantes :
- Une « relation d'ordre strict» est une notion mathématique. Dans le cas présent, nous définissons une « relation d'ordre strict » lorsque pour deux éléments distincts de même nature nous pouvons associer un indice tel que :
   o Si x est le premier élément,
   o Si y est le second élément,
   o Si f est la fonction qui permet d'associer un indice (dans notre cas un entier positif est suffisant, toute autre type de donnée est toutefois compatible) tel que f(x) est l'indice associé à x,
   ∘ Si nous considérons que x précède y suivant la méthode de classification retenue, alors f(x) < f(y) strictement (c'est-à-dire que f(x) est différent de f(y)),
   o Cette relation est transitive, c'est-à-dire que si x précède y et y précède z suivant la méthode de classification retenue, alors x précède z, ce qui se traduit au niveau des indices associés, si f(x) < f(y) et f(y) < f(z) alors f(x) < f(z).
   o La relation telle que nous la définissons est mathématiquement une relation d'ordre strict total, c'est-à-dire que deux éléments ne peuvent pas avoir le même indice s'ils sont distincts.
   o Par simplification nous considérons, sauf stipulation contraire, pour la suite que les « relations d'ordre strict » qui seront utilisées pour la mise en œuvre de l'invention correspondront à des indexations continues débutant à 1. C'est-à-dire que le premier élément identifié est associé à 1, le second à 2 et ainsi de suite en n'utilisant que des nombres entiers. Il est évident que toute autre numérotation non continue et ne débutant pas à 1 ou non basée sur des nombres entiers est également satisfaisante pour la mise en œuvre de notre invention. Il est ainsi possible d'utiliser une indexation utilisant des nombre relatifs, des nombres décimaux ou de toute nature tant que la définition précédente est respectée. De même, il est possible d'utiliser un n-uplet c'est-à-dire un élément de la forme (a1,a2,....,an). Ainsi pour créer une « relation d'ordre strict » d'un caractère dans un document : a1 pourra identifier la page, a2 la ligne, a3 le mot et a4 la position dans le mot en supposant que des relations d'ordre strict » sont définissables pour les pages, pour les lignes d'une page, pour les mots d'une ligne puis pour les caractères d'un mot. Dans ce cas un caractère associé au n-uplet (a1,a2,a3,a4) précède le caractère associé au n-uplet (b1,b2,b3,b4) si a1 < b1 ou si (a1=b1 et a2<b2) ou si ((a1=b1 et a2=b2) et a3 <b3) ou si ((a1=b1 et a2=b2 et a3=b3) et a4 <b4).
- Une « page unitaire» représente l'équivalent de la face recto ou de la face verso d'un « document matériel ». La page recto ou la page verso peut être considérée comme ne faisant pas partie du « document matériel » lorsque par exemple cette page est vierge ou ne comporte pas d'information exploitable. Un « document matériel » de plusieurs feuilles comportera ainsi au maximum autant de « pages unitaires » que de face recto et de faces verso. Il incombe au concepteur du document original ou à celui qui sera chargé d'inclure l'encodage objet de notre invention de définir quelles sont les faces recto et ou verso qui sont des « pages unitaires ». Sur les « pages unitaires » ainsi définies, il est possible de définir une « relation d'ordre strict » qui permet de définir des numéros de page. Cette notion est applicable également aux « documents électroniques » qui identifient également des « pages unitaires ». En général ces pages correspondent aux « pages unitaires » qui seront obtenues après impression, toutefois cette correspondance est optionnelle. Pour certains documents, la notion de pagination n'existe pas, dans ce cas nous considéreront que ces « documents électroniques » sont constituées d'une et une seule « page unitaire ». De même, dans certains cas, il pourra être considéré qu'un ensemble de plusieurs pages telles que définies ci-dessus constitue un même document ou un même sous-document et que dans ce cas, l'encodage ne doit pas tenir compte de la pagination, en dehors de l'établissement d'une éventuelle relation d'ordre strict. Dans ce cas les processus décrits dans la présente invention s'appliqueront globalement à ce document ou ce sous-document de la même manière que s'il était constitué d'une page unique. Il peut également être considéré qu'une même page recto ou qu'une même page verso contienne une pluralité de pages unitaires, celles-ci doivent donc pouvoir être identifiées lors de la phase de numérisation par un algorithme adapté.
- Une « ligne unitaire » est un ensemble de mots et/ou de caractères qui sont alignés au sein d'une même « page unitaire », ce qui signifie que si une « relation d'ordre strict » est définie pour les « lignes unitaires » alors :
   o Si deux caractères appartiennent à la même « ligne unitaire », il n'est pas possible uniquement en se basant sur cette appartenance à savoir quel caractère précède l'autre.
   o Si deux caractères appartiennent à deux « lignes unitaires » distinctes, il est possible uniquement en se basant sur ces appartenances à savoir quel caractère précède l'autre,
- Une « police» est pour une langue donnée, ou pour un ensemble de langues, la collection des caractères de l'alphabet associée à cette langue, ou à ces langues, proposés suivant un graphisme particulier défini par l'auteur de la « police ». Il existe de nombreuses polices disponibles à ce jour surtout depuis la popularisation des logiciels de traitements de textes. On peut énumérer de façon non limitative les polices Arial, Times, Courrier. L'utilisation de certaines de ces polices est soumise à droits d'auteur. Dans le cadre de l'invention, une « police » correspond à toute collection de caractères déterminée indépendamment de l'invention ou spécifiquement lors de la mise en œuvre de l'invention en dépendance ou non des usages. Ainsi une « police » usuelle pourra correspondre à l'intégration de caractères de plusieurs « polices » définies dans le cadre de l'invention et inversement une « police » définie dans le cadre de l'invention pourra correspondre à l'intégration de caractères de plusieurs polices usuelles. Lorsqu'une « police » ainsi définie est mise en correspondance avec des caractères issus de plusieurs « polices », elle n'intègre pas nécessairement tous les caractères définis par cette pluralité de « polices ».
- Un « style de police » représente un mode spécifique de représentation de la « police ». Ainsi le « style de police » le plus courant est le style Romain (texte dans sa version courante). Il existe également le Gras, l'Italique ou le « Gras Italique », cette liste n'est pas limitative et certains de ces styles existent en plusieurs variations. Dans la suite nous considérerons qu'une « police » est associée à un seul « style de police », ainsi les caractères « Arial romain » appartiennent à une « police » distincte de celle qui intègre les caractères « Arial Gras ». Il y a donc autant de « polices » Arial que de « styles de polices » Arial.
- Un « Corps de Police » est caractéristique de la taille des caractères de la « police » correspondante. Le « corps d'une police » détermine classiquement sa taille exprimée en points (en points typographique, notion issue de l'imprimerie). Par exemple les caractères d'une « police » en corps 12 sont plus gros que les mêmes caractères de la même « police » en corps 10 (environ 20% aux niveaux de la hauteur et environ 44% au niveau de la superficie).
- La « résolution » indique la précision avec laquelle un caractère est transcrit principalement dans le cas d'un « document matériel ». Rappelons que la visualisation d'un document sur un écran est également considérée comme un « document matériel » et intègre donc cette notion de résolution. En général la résolution est définie globalement pour le « document matériel » mais techniquement il n'est pas impossible qu'un même document intègre des éléments utilisant des « résolutions » différentes. La « résolution » est souvent définie en « dpi » (dots per inch, soient « points par pouce ») ou en PPI (pixels per inch, soient « pixels par pouce »). Aujourd'hui dans le cadre d'impression, des résolutions de 300 ou 600 dpi sont courantes, pour des travaux de qualité une résolution de 1200 dpi peut être utilisée. Des résolutions encore plus denses (au-delà de 1200 dpi) pourront être utilisées dans le futur soit de façon exceptionnelle soit de façon courante. La « résolution » peut être définie différemment suivant la direction, on peut avoir ainsi une résolution horizontale de 600 dpi et une résolution verticale de 300 dpi. D'autre part, cette résolution est associée pour les documents de type électronique au format utilisé : JPEG, TIFF ... et des paramètres associés à ces formats qui peuvent avoir une influencé sur la qualité du document obtenu. Pour les documents de type « document matériel » cette qualité est elle-même dépendante de la technologie d'impression (papier) ou de la technologie d'affichage (écran). Par la suite le terme « résolution » englobera cette notion de précision (dpi/ppi) associée au format utilisé et/ou aux technologies de production (impression/affichage).
- Un « caractère unitaire» est la représentation graphique d'une lettre de l'alphabet tel que a, b, c, d, etc... La représentation minuscule d'un caractère (a par exemple) est un caractère différent de sa représentation majuscule (A par exemple), les caractères minuscules et les caractères majuscules peuvent être intégrés ou non à une même « police » dans le cadre de l'invention. De même les différentes versions accentuées d'une même lettre sont autant de « caractères unitaires » différents, ainsi le « é », le « è », le « ê » et le « e » sont quatre caractères différents. Dans la cadre de notre invention lorsque les traitements d'encodage ou de décodage permettent de ne pas tenir compte de l'accent, éventuellement par l'utilisation d'un traitement adapté, ces variantes pourront être considérées comme un seul et même caractère. Dans les langues latines, certains caractères peuvent exister dans une langue spécifiquement et pas dans les autres langues latines. Ainsi les caractères utilisés en langue anglaise ne comportent pas d'accent de façon native (si on exclut les points sur les i). Les autres langues européennes tels que le français, l'espagnol ou l'allemand intègrent un jeu de caractères quasi identique à celui de la langue anglaise mais en y intégrant des accents (é, è, à, ù, ñ, ô, ...). Dans le cadre de l'invention, une « police » pourra intégrer les variantes de caractères de plusieurs langues ou être définie exclusivement pour une langue particulière. La solution pourra également s'appliquer à tout alphabet comportant un nombre prédéfini de caractères tels que les alphabets cyrillique, grec (utilisant les lettres de l'alphabet grec ancien tels que α,β etc.), hébreu, arabe ainsi que les alphabets asiatiques simplifiés comportant un nombre limité de caractères de base (même ordre de grandeur que l'alphabet latin). Dans le cadre de la solution, une « police » pourra intégrer les caractères de différents alphabets incluant ou non l'intégration de plusieurs langues associées à ces alphabets ou être définie spécifiquement pour un alphabet de façon combinée ou non aux différentes langues associées à cet alphabet. De la même manière que pour les « pages unitaires » et les « lignes unitaires », on peut associer aux « caractères unitaires » une « relation d'ordre strict » permettant de résoudre le problème d'ordonnancement des deux caractères d'une même « ligne unitaire » précédemment énoncé.
- Un « graphème » est une portion de lettre et est ainsi défini dans le cadre de l'invention est un élément graphique constitutif d'un caractère. Les alphabets traditionnels asiatiques comportent un grand nombre de caractères (jusqu'à plusieurs milliers) voire un nombre illimité (possibilité de définir de nouveaux idéogrammes). Toutefois dans ce cas, il est possible de définir ces caractères par le biais d'une combinaison de graphèmes. Ces graphèmes bien que plus nombreux que les caractères de l'alphabet latin sont en nombre limité. Cette technique usuelle pour les alphabets asiatiques traditionnels peut à son tour être utilisée pour les alphabets classiques. Ainsi on peut considérer par exemple que l'ensemble des caractères de l'alphabet latin utilise une même base de graphèmes communs. Ainsi, dans de nombreuses « polices », la barre verticale du « d » est la même que celle du « b » qui tous les deux utilisent une même boucle (avec une différence d'orientation). Ainsi plutôt que de d'intégrer classiquement des « caractères unitaires », dans le cadre de notre invention, une « police » pourra être constituée de « graphèmes » soit exclusivement soit en complément ou en combinaison de « caractères unitaires » tel que définis précédemment.
- Un « encodage unitaire » comporte la partie utile à encoder soit par exemple et de façon non limitative dans le cadre de notre invention, la valeur de « règles » associée à une « page unitaire ». Associé à cette partie utile, l'« encodage unitaire » intègre tout complément nécessaire à son exploitation tel que, de façon non exhaustive, les éléments suivants dont certains font l'objet d'explicitation spécifique dans le cadre de la présente invention:
   o Une entête ou équivalent permettant de définir le début de l'encodage,
   o Une terminaison ou équivalent permettant de définir la fin de l'encodage,
   o Un indice ou équivalent permettant d'identifier une section élémentaire d'un encodage en comportant plusieurs,
   o Une clé de hachage déterminée à partir d'autres éléments de l'encodage permettant lors de l'exploitation d'en vérifier la validité. Une fonction de hachage élémentaire est définie par exemple par la somme de contrôle ou la clé RIB des comptes bancaires. Il existe des fonctions de hachage définissant des calculs d'empreinte plus évolués. Le résultat du hachage ainsi défini peut ainsi être intégré à l'encodage afin de vérifier la validité de celui-ci lors de la phase de décodage.
   o Un cryptage afin d'éviter que le message puisse être décodé librement par des entités non habilitées.

L'encodage proposé dans la présente invention est une solution parfaitement adaptée à la notion de « règles » déjà évoquée car l'encodage est de nature graphique lorsque le document est un « document matériel », il est inséré au corps du document lorsqu'il s'agit d'un document de type « document électronique ». De plus l'impression d'un « document électronique » possédant notre encodage est un « document matériel » intégrant ce même encodage sans nécessiter un processus d'impression particulier. Car de fait les « règles » du « document électronique » ainsi définies sont automatiquement transformées en « règles » du « document matériel » produit. Cela n'exclue pas de concevoir un processus d'impression spécifique à l'invention pour transformer un « document électronique » possédant l'encodage de l'invention pour le transformer un « document matériel » possédant également l'encodage de l'invention dans des modalités de transposition ou de transformation de celui-ci qui lui seraient propres. La transposition dans ce cas peut s'accompagner d'une définition de « règles » pour le document obtenu par impression différente de la définition de « règles » du « document électronique ».

L'invention consiste principalement à
- Une police spécifique comportant un jeu de caractères suffisant pour assurer tout ou partie de la partie textuelle d'un document et utiliser cette police pour encoder une information en superposition de la partie textuelle du document,
- Adapter cette police spécifique en sélectionnant un ensemble de caractères dénommés « caractères encodables » destinés à potentiellement supporter une portion d'encodage. Les « caractères encodables » sont identifiables par un processus adapté de Reconnaissance optique de caractères (OCR) dénommé « OCR classique » à partir d'une image du document exploitable informatiquement. A chacun des « caractères encodables » ainsi sélectionnés, il est défini un nombre de variantes graphiques prédéfini de façon à ce que le caractère original ainsi que ses variantes puissent être identifiés comme un seul et même caractère par le processus adapté d'« OCR Classique ». Un autre processus adapté de Reconnaissance optique de caractères dénommé « OCR particulier » permet lorsqu'un « caractère encodable » a été identifié par l' « OCR Classique » de déterminer s'il s'agit du caractère original ou d'une de ses variantes et dans ce cas permet la détermination de la variante représentée. Chaque variante correspond à une valeur particulière de la portion d'encodage supportée par le « caractère encodable ». Ainsi la définition de 4 variantes permet l'encodage de 2 bits d'information dans le cas où le caractère original n'est pas utilisé pour encoder de valeur.
- Encoder le document en sélectionnant les « caractères encodables » de la partie textuelle le composant puis à définir une relation d'ordre stricte sur ces « caractères encodables » afin d'établir dans quel ordre ces « caractères encodables » seront traités lors de la phase de décodage puis à sélectionner un sous-ensemble suffisant de « caractères encodables » pour effectuer l'encodage requis dans le document. Chaque « caractère encodable » ainsi sélectionné est remplacé par la variante correspondant à la valeur nécessaire à l'encodage pour la portion d'encodage devant être portée par ce caractère.
- Produire le document ainsi défini porteur d'un encodage adapté superposé à sa partie textuelle,
- Lorsque ce document ainsi produit doit supporter un traitement conditionné par l'encodage ainsi défini, décoder le document à partir de son image informatique en identifiant les « caractères encodables » qui le compose par application d'un « OCR classique » adapté puis établir une relation d'ordre stricte sur ces caractères encodables afin de déterminer leur séquencement dans le document en conformité à celui défini lors de l'encodage. L'application d'un « OCR particulier » sur ces caractères encodables identifiés par l'« OCR Classique » permet pour chaque caractère encodable de déterminer s'il s'agit du caractère original ou d'une de ses variantes et dans ce cas de déterminer quelle est la variante utilisée et en conséquence quelle est la valeur encodée pour la portion d'encodage supportée par ce caractère encodable. L'ensemble de ces valeurs est assemblé en respectant le séquencement défini par la relation d'ordre stricte afin de tenter de reconstruire tout ou partie de l'encodage effectué. Le résultat de cette reconstruction est appelé « encodage extrait ». L' « encodage extrait », qu'il soit exploitable ou non, entraine un traitement adapté modulé par la ou les valeurs le composant.

La police spécifique est construite soit à partir d'une police existante soit spécialement créée dans le cadre de l'invention.

L'encodage proposé consiste à partir d'une « police » déjà existante ou spécialement créée pour l'invention de créer pour tout ou partie des caractères de cette « police » un certain nombre de variantes. Chaque variante prédéterminée d'un « caractère unitaire » donné encode une valeur spécifique. Ainsi l'utilisateur du document pourra lire son document classiquement sans être perturbé par l'encodage alors qu'un processus spécial lié à l'invention pourra à partir d'un traitement de type informatique de ce document en déduire un message encodé indépendant de la signification usuelle directe du texte porteur de ce message. Le traitement informatique peut intégrer une phase de numérisation lorsque le document est de type « document matériel ».

Pour chaque caractère encodable, le nombre de variantes pour chaque caractère peut être fixe ou variable. Dans ce cas le nombre de variables dépend du caractère encodable.

Par exemple un caractère compact comme le « i » pourra être associé à moins de variantes que le caractère « m ». De même le nombre de variantes pourra dépendre du « corps de police » utilisé.

Le nombre de variantes associées à un caractère encodable peut dépendre du corps de la police.

Par exemple les caractères d'une police en corps 12 pourront intégrer plus de variantes qu'une police en corps 10, le nombre de variantes pouvant dépendre alors à la fois du corps et du caractère encodable.

Les alphabets traditionnels asiatiques sont plus complexes à transformer dans le cadre de notre invention car comportant un grand nombre de caractères (jusqu'à plusieurs milliers) voire un nombre illimité (possibilité de définir de nouveaux idéogrammes).

Toutefois dans ce cas, il est possible d'adapter notre invention aux « graphèmes » utilisés par ces caractères, qui bien que plus nombreux que les caractères de l'alphabet latin sont en nombre limité. En s'intéressant aux graphèmes les plus utilisés il est ainsi possible en assimilant ces derniers à des caractères à appliquer notre invention.

Un des modes de réalisation préféré de l'invention est sur la base d'une police unique (par exemple Arial ou Times ou spécialement conçue pour l'application de l'invention) et éventuellement d'un corps unique (par exemple corps 12) de sélectionner les lettres les plus utilisées et possédant un graphisme suffisamment élaboré (ce qui n'est pas le cas par exemple du « i »).

Pour chacune de ces lettres, seule une sous-partie du caractère pourra être soumise à la définition de variantes, ainsi seule la partie principale sans accent ou point d'un caractère pouvant être accentué pourra être sélectionnée afin de définir des variantes.

A partir de cette partie principale définir quatre graphismes très voisins de la lettre d'origine mais discernable après impression puis numérisation par un algorithme adapté lorsque le document est de type « document matériel ». Cet algorithme doit être capable pour une même lettre de reconnaître s'il s'agit de la lettre d'origine ou d'une de ses variantes et dans ce dernier cas de reconnaître quelle est la variante parmi les quatre variantes prédéfinies. Dans le cas où le document à traiter est de type « document électronique », la reconnaissance des variantes peut être simplifiée.

Ainsi il est possible d'encoder l'équivalent de deux bits d'information par lettre. Un bit est une information binaire valant 0 ou 1, il faut 8 bits pour coder un octet (un « byte » en anglais, terme également utilisé en français). Ainsi pour coder l'équivalent d'un octet, quatre caractères sont nécessaires. L'encodage sous forme d'octets est une des possibilités de l'invention mais pas une nécessité.

L'encodage proprement dit consiste en six étapes. Il est effectué sur le « document conceptuel » en vue de produire un ou des « documents matériels » et/ou un ou des « documents électronique ». Les étapes qui suivent peuvent être conditionnées par la nature du ou des documents à produire : « document matériel » et/ou « document électronique » et des moyens de productions mis en œuvre.

Pour effectuer l'encodage sur le « document conceptuel », une première étape optionnelle consiste à déterminer les « pages unitaires » qui constitueront les documents à produire. S'il existe plusieurs définitions de « pages unitaires » pour les documents à produire et/ou si l'encodage n'est pas commun à tous les documents à produire du fait de nécessité technique et/ou d'un choix technologique, il sera procédé à autant d'encodage que nécessaires produisant autant de « documents conceptuels » encodés que nécessaire. Les étapes suivantes d'encodage sont déroulées pour chaque encodage nécessaire soit de façon indépendante soit en mutualisant tout ou partie des traitements qui peuvent l'être. Cela peut être par exemple le cas pour l'étape suivante (seconde étape d'encodage).

Pour effectuer l'encodage d'un document, la seconde étape consiste à identifier dans le « document conceptuel » les caractères ou équivalent susceptibles de supporter l'encodage sur le « document conceptuel » ou sur chacune des « pages unitaires » le composant. Cette identification pourra se limiter aux seuls caractères pouvant supporter l'encodage ou à un sur-ensemble de ces caractères. A l'issue de cette étape, un diagnostic est effectué sur la possibilité d'encoder le document dans sa globalité et/ou la possibilité d'encoder tout ou partie des pages le composant. Suite à ce diagnostic, la décision d'encodage et/ou la définition des paramètres qualitatifs de celui-ci pourront dépendre de ce diagnostic que cela soit pour le document global ou pour les pages le composant. Ce diagnostic peut ainsi influer sur le contenu de l'encodage du document ou de chaque « page unitaire » le composant ainsi que sur la définition de redondance de l'encodage. L'enchainement et/ou l'exécution de tout ou partie des étapes suivantes peuvent être conditionnés à ce diagnostic. Ainsi dans certains cas, la phase d'encodage pourra être close à la présente étape.

La troisième étape consiste à créer une relation d'ordre strict dans chacune des pages si le document est paginé ou dans l'intégralité du document si ce n'est pas le cas. Le résultat de cette opération revient à identifier et à attribuer un numéro d'ordre à tous les caractères du document ou de chaque page. La numérotation permet ainsi de connaître quel est l'ordre d'apparition de chaque caractère, ou des caractères dans la page ou le document en corrélation avec leur identification au sein du « document conceptuel ». Cette relation d'ordre stricte est définie de façon à ce qu'elle puisse être déduite par l'algorithme de décodage appliqué au document encodé que celui-ci soit sous forme de « document matériel » ou de « document électronique ». Dans un souci de performance, la deuxième étape peut être exécutée de façon concomitante à la première étape. Dans ce cas, en cas d'abandon de l'encodage, la numérotation qui est établie n'est pas exploitée.

La quatrième étape consiste à définir la teneur de l'« encodage unitaire » proprement dit. Le contenu exploitable de celui-ci ainsi que les paramétrages associés peuvent être dépendant des résultats des étapes précédentes. Les paramétrages associés concernent en particulier les caractéristiques de dissémination du message encodé, son éventuelle redondance, la présence ou la définition de ses éléments constitutifs tels que son éventuel cryptage ainsi que l'intégration de tout résultat de hachage. Si l'encodage impose des contraintes sur ces paramètres, ceux-ci ont été pris en compte dans la définition du diagnostic de l'étape 2.

La cinquième étape consiste à définir les « caractères unitaires » du document ou de chaque page de celui-ci devant porter une partie de l'information codée ainsi que la partie de l'information codée par chacun de ces caractères en corrélation avec la potentialité d'encodage de ces « caractères unitaires ». Pour chacun de ces caractères, celui-ci est remplacé par le caractère correspondant à l'encodage devant être porté par ce caractère. Cette substitution n'entraine pas de modification dans la lecture proprement dite du caractère.

La sixième étape consiste à produire le ou les documents résultants de ces étapes d'encodage suivant leur nature : « document matériel » et/ou « document électronique ». Les moyens de production utilisés pour cette production peuvent être spécialement sélectionnés pour cette mise en œuvre en fonction de leurs caractéristiques techniques. Par exemple, il ne pourra être sélectionné que des imprimantes utilisant une technologie éligible tel que jet d'encre et/ou laser, et possédant une précision d'impression compatible (par exemple au moins 300 dpi ou caractéristiques couleurs). S'il est prévu d'insérer des « marques » sur le document afin que celui-ci puisse être considéré comme un document sensible, celles-ci sont introduites à la présente étape.

Le décodage consiste en 6 étapes qui s'appliquent sur un « document matériel » ou un « document électronique » ou une combinaison de ces types de documents.

La première étape dénommée « transformation préalable » consiste à transformer le document à traiter en un « document exploitable ». Pour un « document matériel », cette étape peut consister à une étape de numérisation.

La seconde étape consiste à détecter la nature « sensible » du document par la détection de « marques » dans le document dans le cas ou l'encodage prévoit une telle insertion. Les étapes suivantes sont alors conditionnées par le résultat de cette recherche. Ainsi si l'encodage est associé à l'insertion de « marques », les autres étapes du décodage ne sont effectuées que si la détection de celui-ci est positive suivant des critères à définir. Dans le cas contraire, les autres étapes sont enchainées jusqu'à qu'un encodage soit détecté et décodé positivement suivant des critères à définir soit que cette recherche soit considérée comme infructueuse suivant des critères à définir.

La troisième étape consiste à définir quelles sont les « pages unitaires » du document à traiter. Si des pages sont ainsi définies, chaque page est traitée indépendamment. En l'absence de pages identifiées, le document dans son ensemble est traité.

La quatrième étape consiste pour chaque « page unitaire » définie par l'étape précédente de déterminer l'ensemble des « caractères unitaires » la composant, et susceptibles de supporter une partie de l'information codée si celle-ci existe.

La cinquième étape consiste à définir une relation d'ordre sur les « caractères unitaires » éligibles résultants de l'étape précédente.

La sixième étape consiste à extraire la partie d'information codée éventuellement portée par chaque « caractère unitaire » éligible et de reconstituer grâce à la relation d'ordre stricte l'encodage effectué sur chaque « page unitaire » définie à la troisième étape. Le résultat de cette étape est pour chaque « page unitaire », un diagnostic indiquant la présence d'un encodage ou caractérisant la potentialité de celui-ci. Il peut ainsi être indiqué qu'un encodage a été détecté mais pas décodé ou pas de façon certaine. Si l'encodage a été décodé avec succès ou de façon incertaine mais avec une valeur potentiellement exploitable malgré sa non fiabilité absolue, la valeur décodée est un résultat de cette étape pour chacune des « pages unitaires » où une telle valeur peut être déterminée.

Le décodage ainsi déterminé peut être intégré à un processus général de gestion de reproduction et/ou d'authentification de documents suivant des modalités qui lui sont propres.
Schémas.
- Le schéma 1 illustre le processus d'encodage d'un document,
- Le schéma 2A illustre le processus de décodage d'un document potentiellement encodé lorsque l'encodage est associé à un « marquage » et s'applique soit à un « document matériel » soit à un « document électronique image »,
- Le schéma 2B illustre le processus de décodage d'un document potentiellement encodé lorsque l'encodage n'est pas associé à un « marquage » et s'applique soit à un « document matériel » soit à un « document électronique image »,
- Le schéma 2C illustre le processus de décodage d'un document potentiellement encodé lorsque l'encodage est associé à un « marquage » et s'applique à un « document électronique descriptif »,
- Le schéma 2D illustre le processus de décodage d'un document potentiellement encodé lorsque l'encodage n'est pas associé à un « marquage » et s'applique à un « document électronique descriptif »,
- Le schéma 3 illustre le mode d'association d'une portion d'encodage sur un caractère et dans le cas du schéma pour une sélection de 4 caractères associés chacun à 4 variantes,
- Le schéma 4 illustre le mode d'encodage de valeur par utilisation des variantes de caractères,
- Les schémas 5 (5A à 5D) illustrent différentes structures possibles de messages dans le cadre du support de l'encodage sujet de l'invention,
- Les schémas 6 (6A et 6B) illustrent différentes structures possibles de messages dans le cadre du support de l'encodage sujet de l'invention lorsque l'encodage est effectué via plusieurs sous-séquences d'encodage,
- Le schéma 7 illustre le mode d'imposition d'encodage dans un texte lorsque cet encodage est constitué de séquences multiples,
- Le schéma 8 illustre la compatibilité de décodage lorsque celui-ci est constitué de séquences multiples et que l'acquisition est effectuée par une prise de type photographique. Le schéma identifie ainsi des Zones photographiques autosuffisantes pour détecter un jeu complet de sous-séquences d'encodage
- Le schéma 9 illustre la compatibilité de décodage lorsque celui-ci est constitué de séquences multiples et que l'acquisition est effectuée par un balayage vidéo. Le schéma identifie ainsi des Zones de balayage vidéo autosuffisantes pour détecter un jeu complet de sous-séquences d'encodage
- Le schéma 10 illustre la décomposition d'un caractère en graphèmes pouvant être support d'une information encodée ainsi que la définition complémentaires de zones remarquables pouvant également contribuer à la définition d'un encodage.
- Le schéma 11 illustre l'état de l'art relatif aux technologies de RAD/LAD et d'OCR (schéma déjà explicité),
- Le schéma 12 illustre le principe de la synthèse additive des couleurs, utilisée dans les dispositifs d'affichage, ce schéma n'est pas explicité mais évoqué dans l'explicitation des schémas 2A à 2D,
- Le schéma 13 illustre le principe de le synthèse soustractive des couleurs, utilisée par les dispositifs d'impression, ce schéma n'est pas explicité mais évoqué dans l'explicitation des schémas 2A à 2D,
- Le schéma 14 illustre la définition de connexité, ce schéma n'est pas explicité mais évoqué dans l'explicitation des schémas 2A à 2D,
- Le schéma 15 illustre l'ordonnancement des caractères d'un paragraphe avant et après traitement de correction d'alignement, ce schéma n'est pas explicité mais évoqué dans l'explicitation des schémas 2A à 2D.

Pour l'ensemble des schémas, l'encodage est défini à partir de l'utilisation de la partie textuelle du document à encoder ou à décoder. Un des cadres d'utilisation de l'encodage tel que défini dans la présente invention est l'encodage de « règles » au sens des brevets antérieurs déjà cités. Les « documents sensibles » devant intégrer de telles « règles » comportent en général des parties textuelles importantes voire ne comportent que du texte. Un document en complément de sa partie textuelle peut intégrer des images, des graphiques ainsi que différents composés multimédia surtout si le document est de type « document électronique ». L'ensemble de ces éléments que nous appellerons « éléments structurels » peuvent être disposés de façon complémentaire dans le document sans se chevaucher ou faire l'objet de superposition simples ou complexes. Il existe déjà des procédés permettant de tatouer de tels « éléments structurels » en particulier pour les images. Lors de la phase d'encodage dans le cadre de l'invention, ces « éléments structurels » autres que textuels pourront être utilisés pour supporter également un encodage suivant les procédés déjà existants ou futurs afin de compléter ou de renforcer l'encodage effectué sur la partie textuelle conformément à notre procédé. Il en est de même pour d'éventuels tatouages s'appliquant également à la partie textuelle différant de celui objet de l'invention qui pourront être utilisé en complément de celui objet de l'invention si cela a un sens. Ainsi une « règle » pourra être en partie encodée sur la partie textuelle comme indiqué dans la présente invention et en partie dans les autres « éléments structurels » du document suivant des procédés déjà existants ou à venir. Dans ce cas, l'encodage ou le décodage défini dans notre inventions tiendra compte de cette complémentarité pour :
- Décider de la partie devant être encodée sur la partie textuelle et de celle devant être encodée suivant d'autres procédés de tatouage sur les autres « éléments structurels » du document,
- Décider de la viabilité de l'encodage en tenant compte de la potentialité d'encodage de l'ensemble du document, parties textuelles ou non.
- Intégrer une phase d'encodage complémentaire dans les « éléments structurels » non textuels suivant des procédés déjà existants ou à venir,
- Intégrer une phase d'encodage complémentaire dans les « éléments structurels » textuels suivant des procédés complémentaires déjà existants ou à venir si cela a un sens,
- Intégrer une phase de décodage complémentaire dans les « éléments structurels » non textuels suivant des procédés déjà existants ou à venir,
- Intégrer une phase de décodage complémentaire dans les « éléments structurels » textuels suivant des procédés complémentaires déjà existants ou à venir si cela a un sens,
- Décider du caractère exploitable de l'encodage lors de la phase de décodage en tenant compte de l'encodage complémentaire éventuellement effectué sur l'ensemble des « éléments structurels » textuels ou non textuels,

La partie textuelle permettant le support de l'encodage suivant l'invention est tout texte utilisant une « police » tel que défini dans la présente invention. Dans certains cas, un « caractère unitaire » peut être considéré comme un élément graphique, c'est le cas par exemple des lettrines utilisées dans les documents anciens. Les documents actuels permettent également de concevoir des caractères comme des éléments graphiques plus ou moins complexes comme par exemple et de façon non limitative: graphisme artistique, utilisation de couleurs, de dégradés, de fonds. Dans ce cas, ces caractères peuvent porter un tatouage suivant les méthodes déjà existantes ou à venir concernant de façon générale les images, ce tatouage étant exclusif ou non de l'application de l'encodage spécifique à l'invention.

Le schéma 1 illustre le processus d'encodage d'un document. Pour que le document puisse être encodé, il doit comporter une partie textuelle suffisante et que celle-ci soit compatible avec un encodage tel que défini dans l'invention. Ce schéma définit un enchainement de plusieurs étapes qui ont pour but d'encoder un document suivant le besoin exprimé par une « entité requérante ». Ces étapes sont définies de façon séquentielle afin de faciliter leur description, cela n'interdit pas, de fusionner ces étapes ou de les paralléliser. Cela peut avoir un intérêt, en particulier pour un souci de performance.

Si plusieurs documents doivent être produits à partir d'un même « document conceptuel », les étapes nécessaires à la production de chacun des documents peuvent être mutualisées partiellement ou totalement y compris au niveau chronologique. Ainsi, par exemple, l'inventaire des caractères du « document conceptuel » pourra dans certains cas n'être effectué qu'une fois pour tous les documents à produire. Le processus d'encodage est effectué de façon complète pour chaque document à produire à partir du « document conceptuel ». Les étapes qui suivent sont définies pour une production unitaire soit pour un « document matériel » soit pour un « document électronique ». Ces définitions peuvent être adaptées pour une production multiple, mixte (« document électronique » et « document matériel ») ou non en tenant compte des possibilités de mutualisation ici évoquées.

La première étape consiste à la prise en charge d'un « document conceptuel » qui comporte les informations nécessaires à la production par un. processus informatique à un ou des « documents matériels » et/ou à un ou des « documents électronique ». Pour chaque document à produire, il est défini la pagination correspondante, soit l'ensemble des « pages unitaires » qui constitueront le document à produire, cette pagination dépend à la fois des définitions du document conceptuel, des caractéristiques du moyen de production du document à produire et du paramétrage de ce moyen de production. Ce paramétrage peut être établi indépendamment de la soumission en cours et/ou spécifiquement pour celle-ci. Ainsi la pagination ne pouvant être déterminée que lors de cette soumission, certaines des étapes suivantes peuvent être exécutées préalablement à la présente étape avec une éventuelle rectification une fois la pagination finale déterminée si nécessaire :
- L'inventaire des caractères,
- L'établissement de la relation d'ordre stricte ou une prédétermination de celle-ci,
- Le diagnostic de viabilité de l'encodage ou un premier diagnostic de viabilité devant éventuellement être confirmé par la suite,
- La sélection des caractères encodables,
- L'encodage partiel ou total des caractères encodables avec une éventuelle possibilité de rectification,
- L'insertion éventuelle d'un « marquage » avec une éventuelle possibilité de redéfinition.

Suivant un mode de réalisation préféré de l'invention, l'encodage est défini pour chacune des pages identifiées lors de l'étape 1. Cet encodage peut être distinct sur chacune de ces pages ou commun à plusieurs pages. Il peut identifier un même document pour chacune des pages mais avec des variantes pour chacune d'elle, ainsi, par exemple, l'encodage pourra identifier à la fois le document concerné et la page sur lequel il est inséré.

Suivant un autre mode de réalisation, l'encodage pourra être effectué à cheval sur les différentes pages d'un même document lorsque cela présente un intérêt. Ainsi un encodage unitaire peut être défini pour une fiche de paie qui classiquement n'utilise qu'une page lorsqu'elle est produite sous forme de document matériel. Dans certains cas, si le nombre de rubriques comptables par exemple le justifie, cette fiche de paie pourra nécessiter plus d'une page, avec souvent très peu d'information textuelle sur la dernière page. Dans ce cas, il pourra suivant ce mode particulier de réalisation être défini un encodage sur l'ensemble des pages constituant le document comme si celui-ci n'occupait qu'une seule page. Dans ce cas le reste de l'invention reste inchangé sauf que, pour les traitements décrits, le document dans son intégralité est équivalent à une page dans le cadre du mode de réalisation préféré.

Dans certains cas, il est possible d'intégrer plusieurs encodages distincts dans un même page. Ainsi par exemple, dans le cas d'insertion de citations externes dans un document, en respect du droit d'auteur, chaque citation pourra comporter son propre encodage indiquant l'origine de la citation et en conséquence plusieurs citations distinctes pourront être intégrées à une même page qui pourra par ailleurs avoir son propre encodage global. Dans ce cas le processus de décodage devra être capable d'interpréter cette multiplicité d'encodage comme normale et adopter si nécessaire un processus de traitement adapté des différents encodages présents sur la page.

La seconde étape consiste pour chaque « page unitaire » à faire l'inventaire des « caractères unitaires » encodables, c'est-à-dire pouvant servir de support à un encodage dans le cadre de l'invention. Dans un mode de réalisation particulier de l'invention, cet inventaire pourra ne pas se limiter aux seuls « caractères unitaires » encodables et pourra intégrer tout ou partie des « caractères unitaires » non encodables, un tel mode de réalisation peut être adopté pour faciliter l'établissement d'une relation d'ordre stricte dans les étapes suivantes. La relation d'ordre stricte des seuls caractères encodables peut aisément être déduite de celle définie à partir d'un sur-ensemble de ceux-ci. La détermination des « caractères unitaires » encodables est effectuée en fonction des caractéristiques de ces derniers :
- « Police » utilisée,
- « style de police » utilisé,
- « corps de police » utilisé,
- Caractère proprement dit (a, b, c ...)
- Eléments graphiques du « caractère unitaire » tel que couleur, niveau de gris, dégradé ou fond appliqué au caractère ainsi que tout élément d'arrière plan du « caractère unitaire » (fond, graphisme, image ...),
- « Résolution » utilisée,
- Choix ou contraintes de l'émetteur du document ou de toute autre entité associée au document à produire ayant une influence sur l'éligibilité des caractères choisis. Ainsi, par exemple, certaines zones du document peuvent être soumises à des contraintes de chartre graphique interdisant localement les modifications qu'engendreront l'encodage tel que défini dans l'invention. De même, certaines procédures de « hachage » calculent une valeur déduite de la disposition des éléments graphiques dans le document, si cette procédure ne tient pas compte de l'encodage tel que décrit dans l'invention, celui-ci invalidera la valeur déterminée par ce « hachage » interdisant tout contrôle basé sur l'interprétation de cette valeur.

Dans le cas où la page à encoder comporte des parties textuelles déjà encodées, comme par exemple des citations d'ouvrage externe, les caractères composant ces parties déjà encodées ne seront pas considérées comme des caractères encodables pour la « page unitaire » en cours, sauf si l'encodage global de la page permet de respecter les contraintes imposées par ces parties textuelles déjà encodées que ce soit sur le plan légal ou applicatif. En effet, par exemple, une partie textuelle déjà encodée relative à une citation externe peut permettre grâce à l'exploitation, automatique ou non, de son encodage d'identifier et d'atteindre l'ouvrage duquel elle est extraite, voire d'identifier la propriétaire de la copie qui a été utilisée pour l'import du passage dans le document traité. Dans ce cas ces parties codées devront être identifiées afin qu'elles soient exclues de l'encodage propre de la page traitée ou que leur encodage soit redéfini en respect des contraintes liées à l'insertion d'un tel passage dans le document traité comme par exemple les contraintes de propriété intellectuelle.

De façon générale, les applications informatiques s'intéressent principalement à la partie variable d'un document. La partie fixe, celle qui autrefois correspondait à la partie « préimprimée » n'est souvent pas prise en compte par ces applications et ainsi rarement intégrée au « document conceptuel ». Dans le cadre de l'invention chaque caractère du document à produire peut être le support d'un encodage qu'il soit un caractère faisant partie des données variables du document ou de la partie fixe assimilable à un préimprimé. Ainsi, les textes fixes du document tels que les entêtes de tableau, les titres, les paragraphes légaux peuvent être intégrés, dans le cadre de l'invention à l'inventaire des caractères encodables. Dans ce cas, les étapes de l'encodage sont adaptées pour pouvoir porter également sur ces caractères si nécessaire.

Cette étape d'inventaire permet de référencer l'ensemble des caractères encodables ainsi que leur emplacement, ou toute information équivalente, permettant leur substitution par un caractère encodé lors de la phase d'encodage proprement dite. Cette étape se fait avec modification ou non du « document conceptuel », l'identification des caractères encodables ainsi que la définition de leur emplacement pouvant se faire dans le « document conceptuel », à l'extérieur de celui-ci ou de façon mixte.

Les messages encodés possèdent une partie utile, c'est-à-dire l'information exploitable, et une partie technique destinée à assurer dans les meilleures conditions l'encodage de la partie utile.

Cette étape permet de connaitre le nombre de caractères encodables ainsi que la potentialité d'encodage de chacun de ces caractères en fonction des informations contextuelles (police, corps, résolution ...). Il est ainsi déterminé si cette potentialité est suffisante par rapport à l'encodage devant être inséré dans chacune des pages identifiées. Il doit donc être défini à cette étape et/ou préalablement à cette étape :
- Les informations devant être intégrées à l'encodage suivant la définition de l'« entité requérante », ces informations font partie de la partie utile du message,
- Les informations complémentaires optionnelles, suivant la définition de l'« entité requérante », pouvant être intégrées à l'encodage si la page unitaire correspondante possède une potentialité d'encodage suffisante, ces informations font partie de la partie utile du message,
- Les caractéristiques de redondance d'information imposées à l'encodage. Il pourra ainsi être imposé que l'ensemble de l'encodage soit inséré un nombre minimal de fois dans la page : deux, trois fois ou plus. Cette redondance peut également être définie spécifiquement pour toute information ou groupe d'information intégré à l'encodage, que ces informations soient optionnelles ou non. La redondance concerne principalement la partie utile des messages, la multiplication correspondante des messages entraine de fait la création de nouvelles parties techniques,
- Les éléments structurels de l'encodage. L'encodage se fait sous forme de messages élémentaires dont le début et la fin sont définis afin de pouvoir être identifiés, chaque message intégrant tout ou partie de l'information utile à encoder. Ainsi en dehors de la partie utile de l'encodage, il peut être nécessaire d'introduire des éléments d'encodage tel qu'entête et fin de message qui n'encodent pas d'informations mais qui sont nécessaires aux phases de décodage et qui nécessiteront eux-mêmes l'usage de caractères encodables. De même, l'encodage peut utiliser plusieurs sous-séquences qui doivent être identifiées également lors du décodage. L'identification de ces sous-séquences utilise également des caractères encodables. Ces informations font partie de la partie technique du message,
- Les caractéristiques de contrôle de l'information encodée. Le décodage pouvant, surtout sur les documents de type « document matériel » se faire avec des erreurs de lecture, il peut être nécessaire d'intégrer des informations complémentaires de contrôle tels que les CRC (Contrôle de redondance cyclique) qui sont calculés à l'encodage et intégrés de façon complémentaire à l'encodage. Leur lecture au décodage comparé au CRC recalculé avec la partie utile de l'encodage (hors CRC) permet de valider ou d'invalider le message décodé. L'adjonction d'un CRC ou équivalent a pour effet de rallonger la longueur du message encodé par rapport à la longueur utile de celui-ci. Ces informations font partie de la partie technique du message,
- Les paramètres de cryptage, afin de ne pas permettre que le message encodé soit lu aisément par des personnes ou des entités non autorisées, un cryptage de celui-ci peut être effectué. L'introduction d'un encryptage ou équivalent a généralement pour effet de rallonger la longueur du message encodé par rapport à la longueur utile de celui-ci. Ces informations font partie de la partie technique du message,

Pour déterminer la potentialité d'encodage d'une page, il pourra être appliqué une marge d'erreur afin de simplifier cette étape, ainsi l'encodage sera considéré comme possible si la potentialité d'encodage de la page dépasse un certain ratio par rapport à la nécessité d'encodage minimale identifiée. Par exemple si la capacité d'encodage dépasse les 110% de l'encodage minimal identifié ou s'il dépasse 50% de l'encodage optimum identifié.

L'étape 2 fournit ainsi un diagnostic de faisabilité de l'encodage conditionnant la poursuite des étapes d'encodage comme suit :
- L'encodage est possible ou non,
- Si l'encodage est possible, ces caractéristiques sont définies, à savoir le contenu utile de l'encodage, la détermination de redondance que celle-ci soit définie globalement ou de façon particulière en fonction des données utiles concernées, l'insertion de données de contrôle (CRC) et leurs caractéristiques, l'adoption d'un mode de cryptage et ses caractéristiques. L'ensemble de ces paramètres définis à l'issue de cette étape peuvent être affinés ou redéfinis partiellement ou totalement lors du déroulement des étapes suivantes,
- Le résultat du diagnostic est éventuellement communiqué à l'« entité requérante » soit de façon brute soit sous une forme adaptée. L'analyse de ce résultat par l'« entité requérante » peut avoir pour effet de resoumettre l'encodage en adaptant ou non le document à encoder et/ou la définition de l'encodage,

Pour les pages pour lesquelles l'encodage est considéré comme possible à la suite de l'étape 2, les étapes suivantes sont exécutées.

Pour chacune des pages pour lesquelles, un encodage a été déterminé comme possible par l'étape précédente, la troisième étape consiste à établir une « relation d'ordre stricte » sur les caractères encodables identifiés à l'étape précédente. Cette étape peut utiliser des résultats fournis par les étapes précédentes. En particulier l'identification des caractères encodables peut être accompagnée de l'identification d'un positionnement dans la page facilitant l'établissement de la relation d'ordre.

La relation d'ordre stricte établie dans cette troisième étape identifie l'ordre d'extraction des caractères lors de la phase de décodage.

L'établissement de la relation d'ordre est déterminé non pas en fonction de l'ordre d'apparition ou d'écriture de chaque caractère dans le document conceptuel voire dans la production des « documents matériel » et/ou « documents électronique » mais en fonction de la capacité d'identifier celle-ci lors du décodage effectué sur le « document exploitable » produit à partir d'un « document conceptuel ».

Ainsi un premier caractère qui apparaîtrait avant un deuxième caractère dans le « document conceptuel » mais qui lors de l'exploitation du « document exploitable » serait identifié postérieurement à l'identification de ce second caractère induit une relation d'ordre stricte inverse à celle déterminée par une exploitation directe du « document conceptuel ». Cette remarque est applicable à tout couple de caractères quelles que soient leur position d'apparition dans la page en cours de traitement. Pour illustrer ce point, dans le « document conceptuel », le bas de page peut être défini avant le corps de celle-ci, lors du décodage du « document exploitable » issu de ce « document conceptuel », le décodage pourra analyser d'abord le corps de la page avant le bas de page.

Pour établir cette relation d'ordre stricte, un système d'axe peut être défini dans chacune des pages à traiter. Un système orthonormé à deux coordonnées x,y établi avec par exemple un centre sur l'extrémité haut/gauche de la page un axe des x orienté vers la droite, un axe des y orienté vers le bas, une unité de mesure exprimée en millimètres via une valeur décimale est suffisante. Tout autre détermination de centre du système d'axes, des axes ou d'unité y compris avec des unités distinctes sur chaque axe est également satisfaisante. Un système de type polaire (centre, angle, distance) est également satisfaisant.

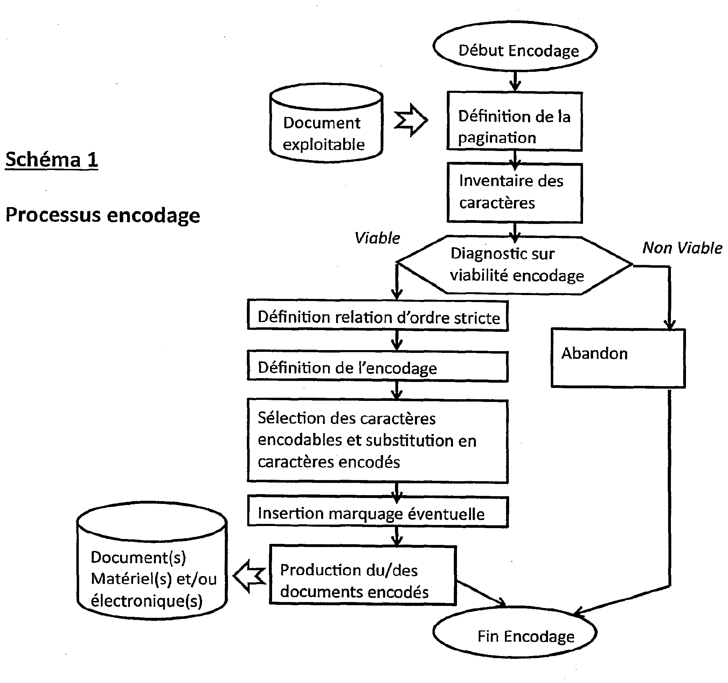

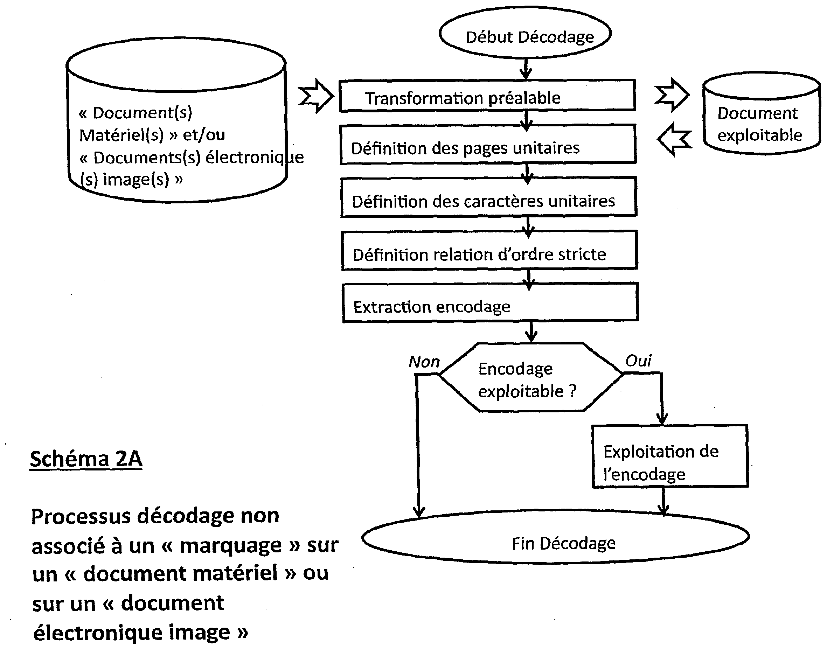

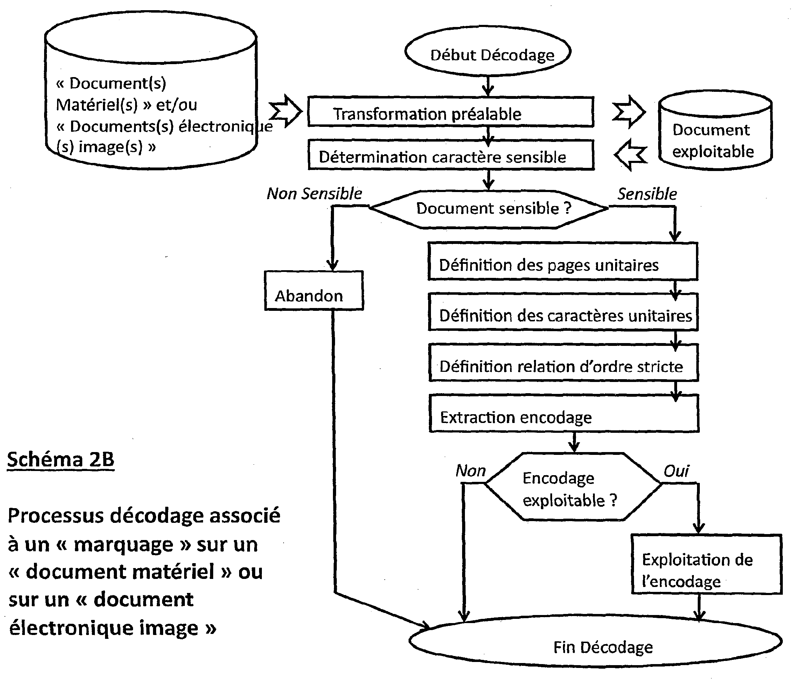

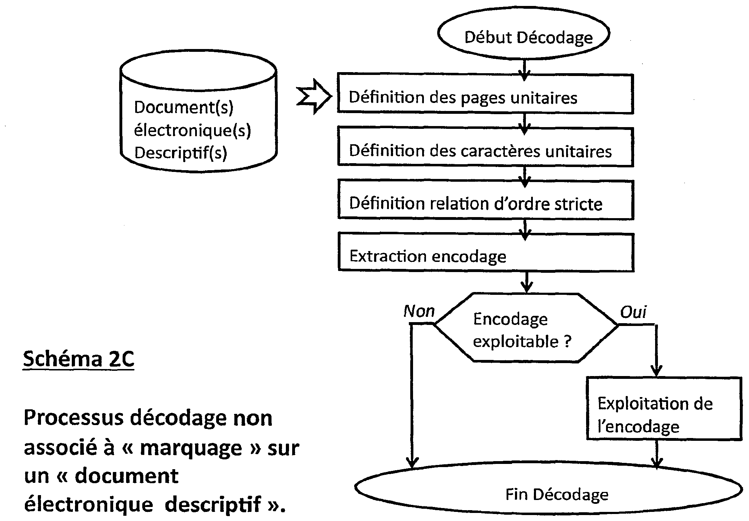

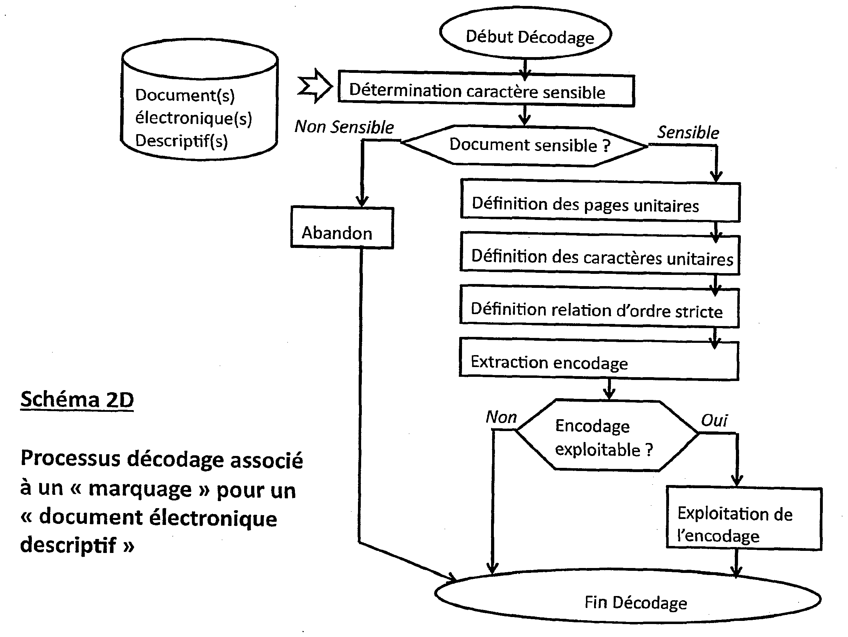

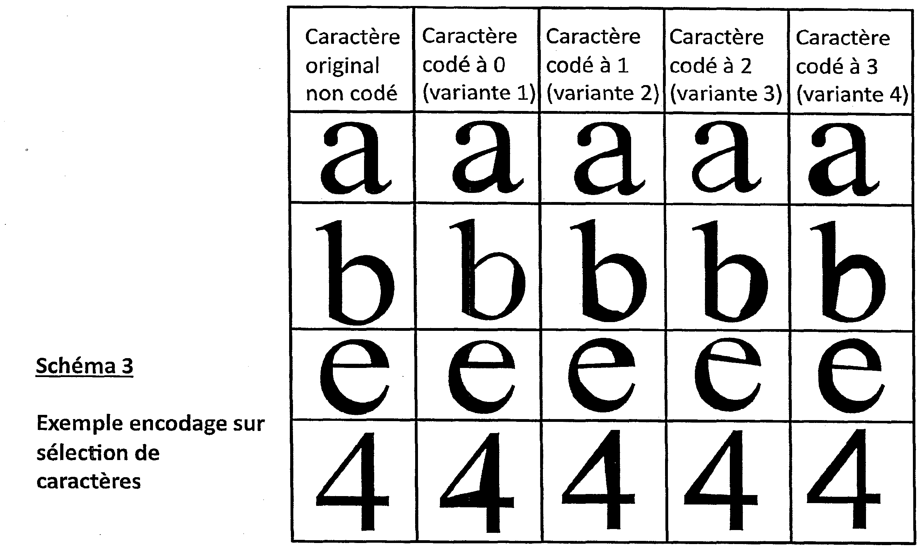

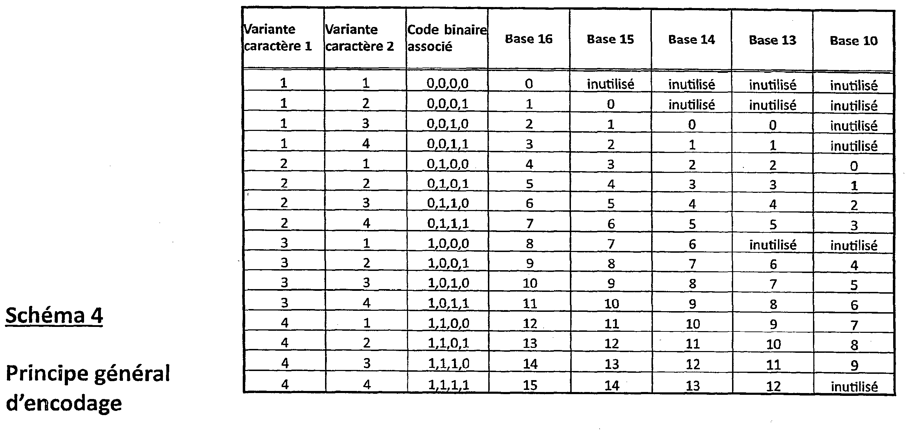

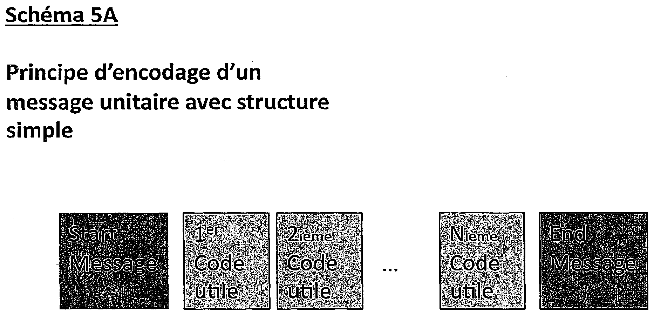

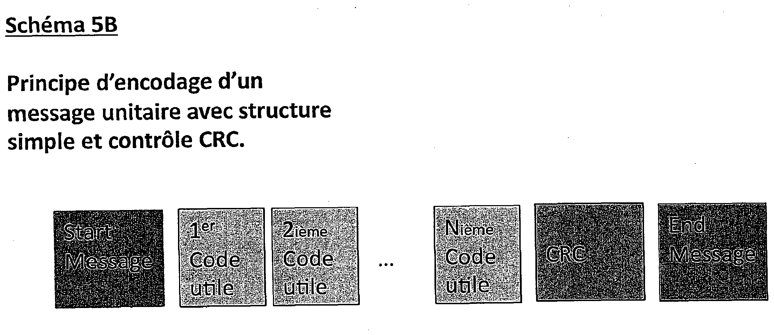

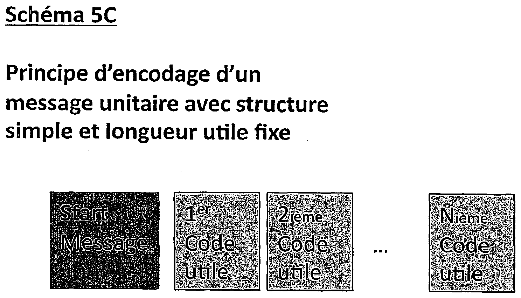

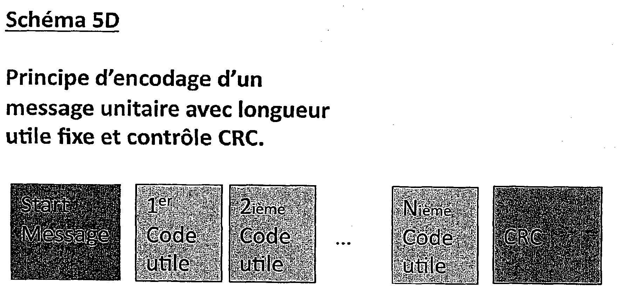

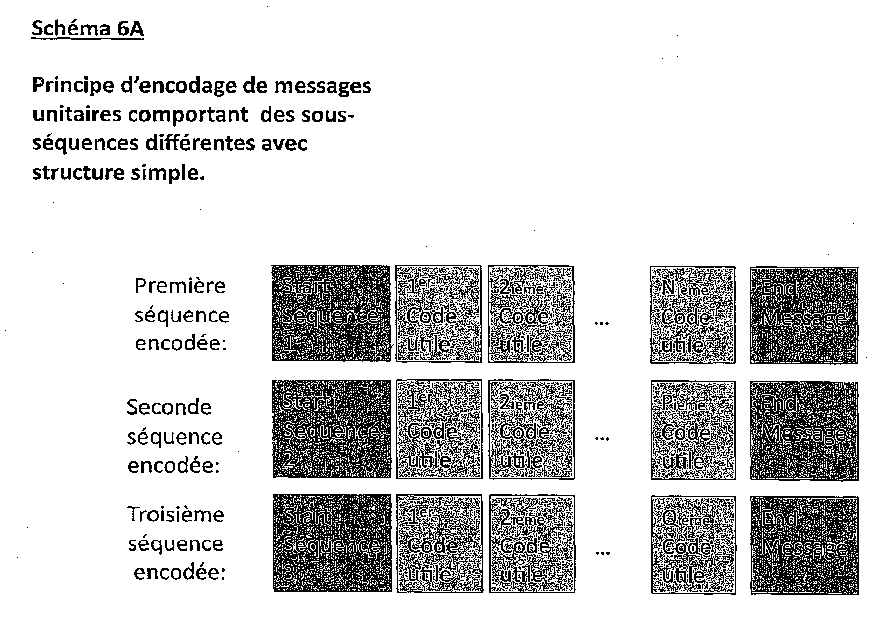

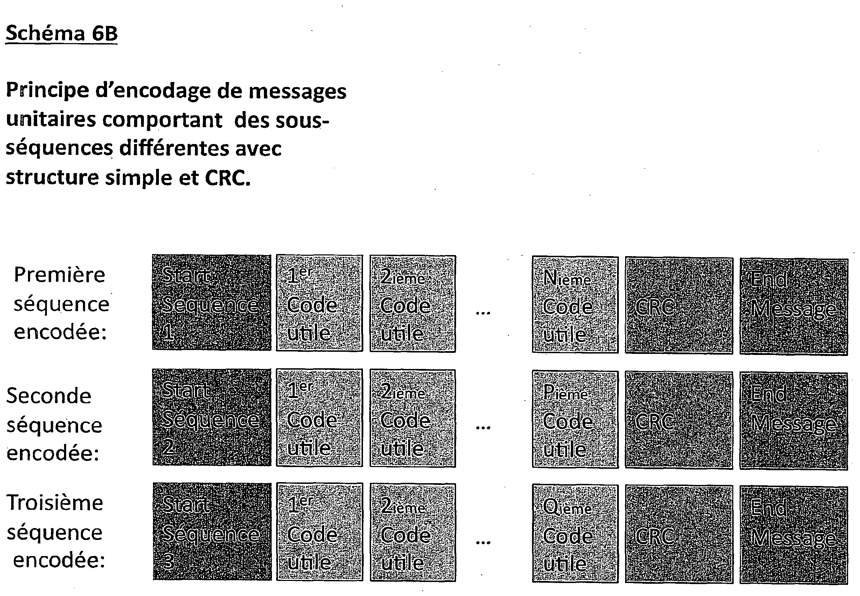

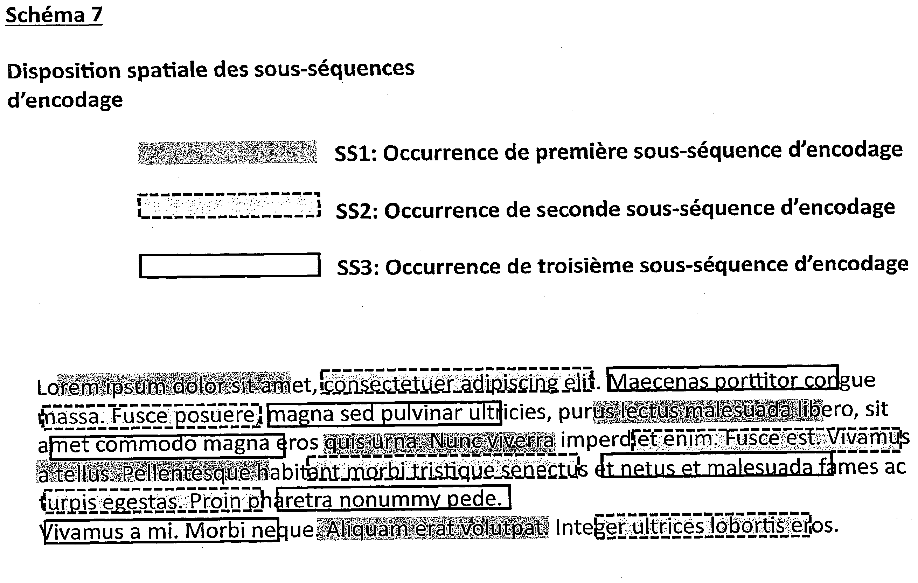

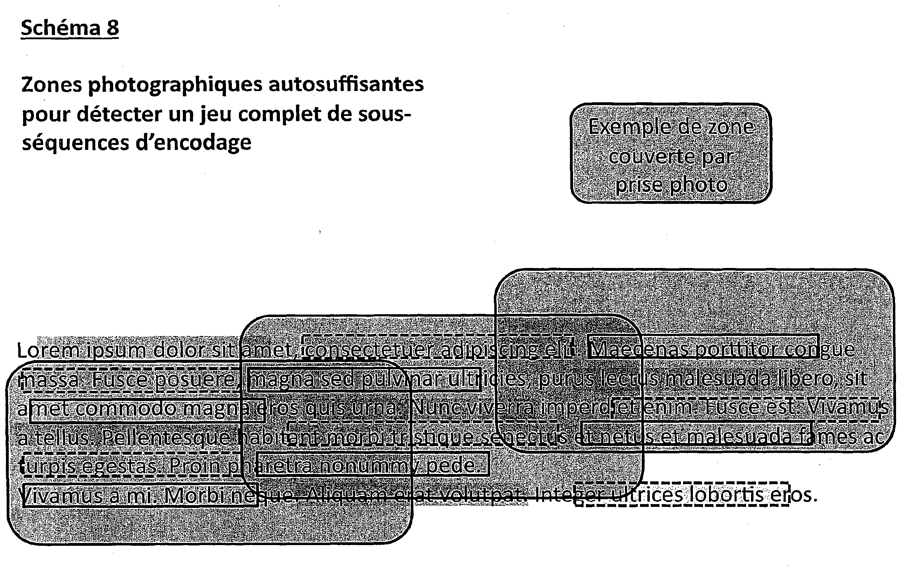

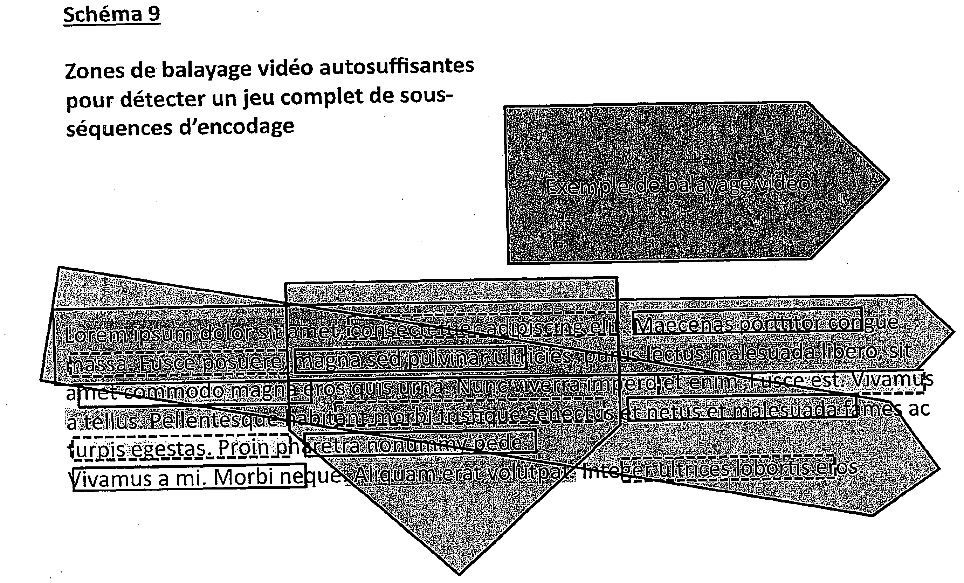

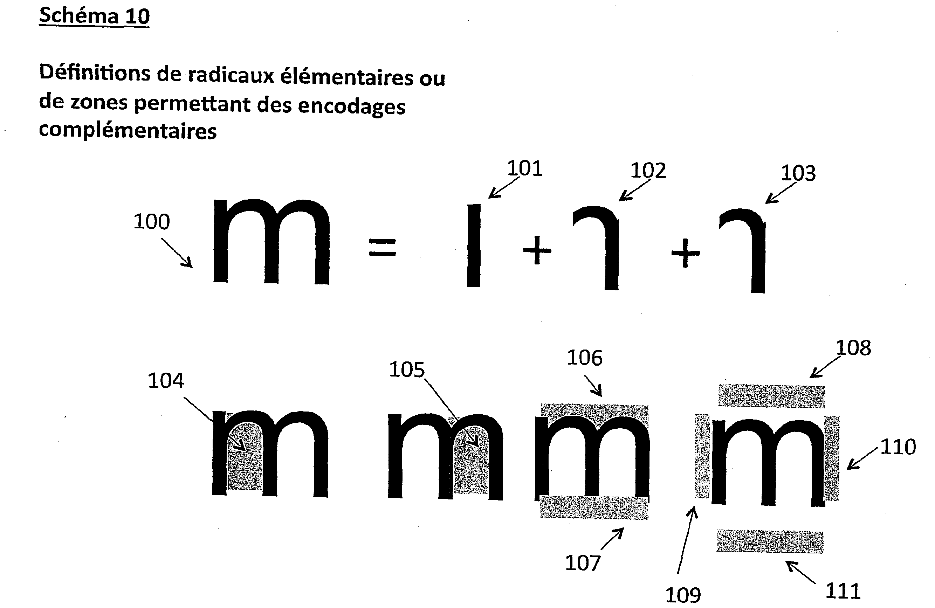

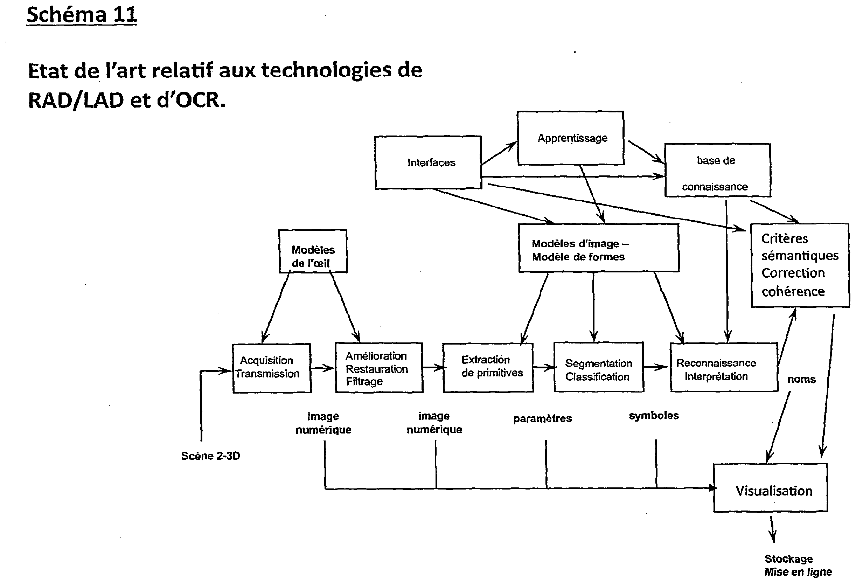

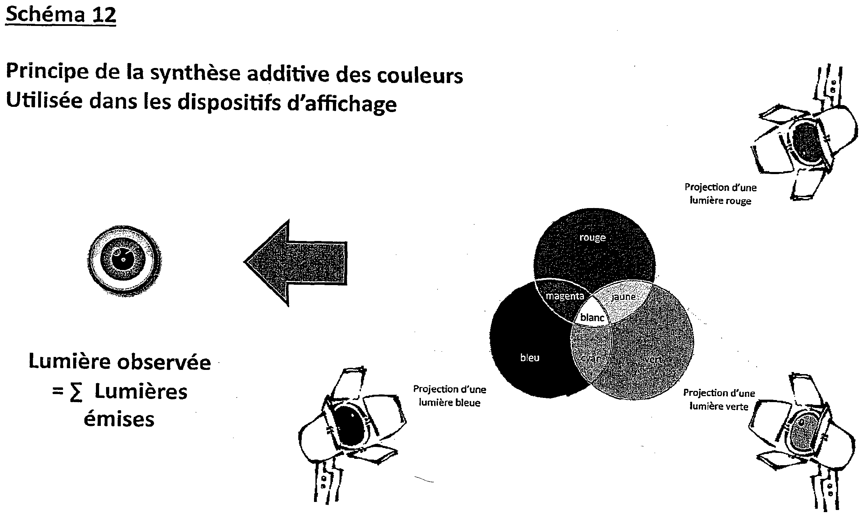

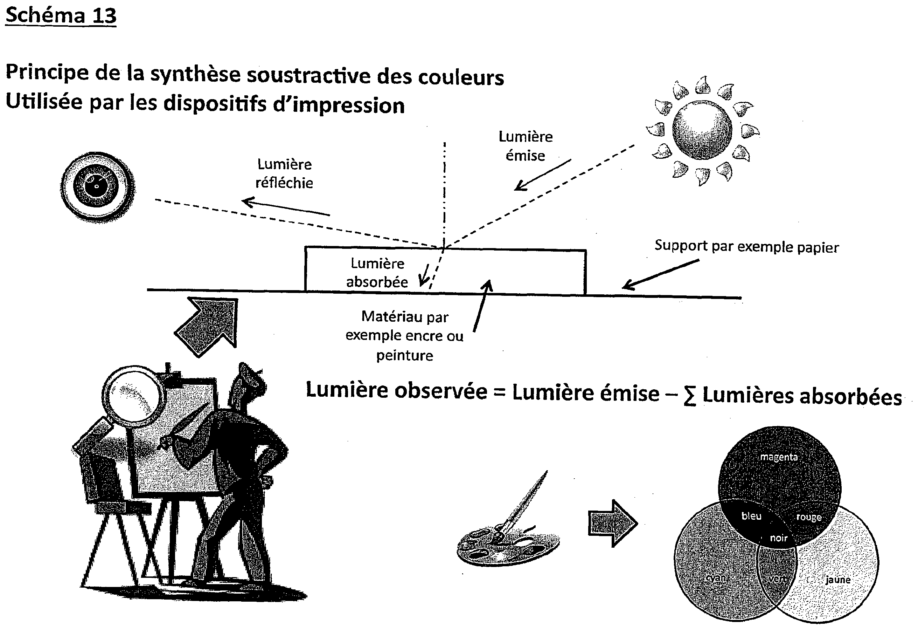

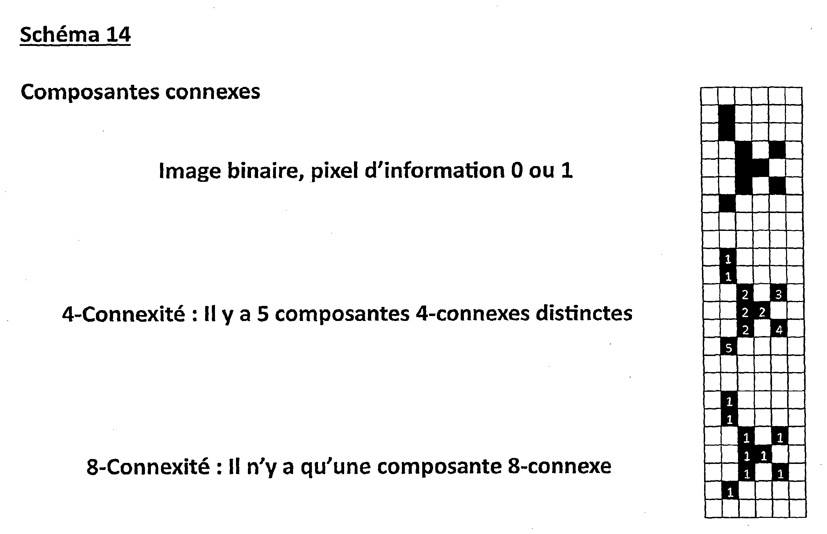

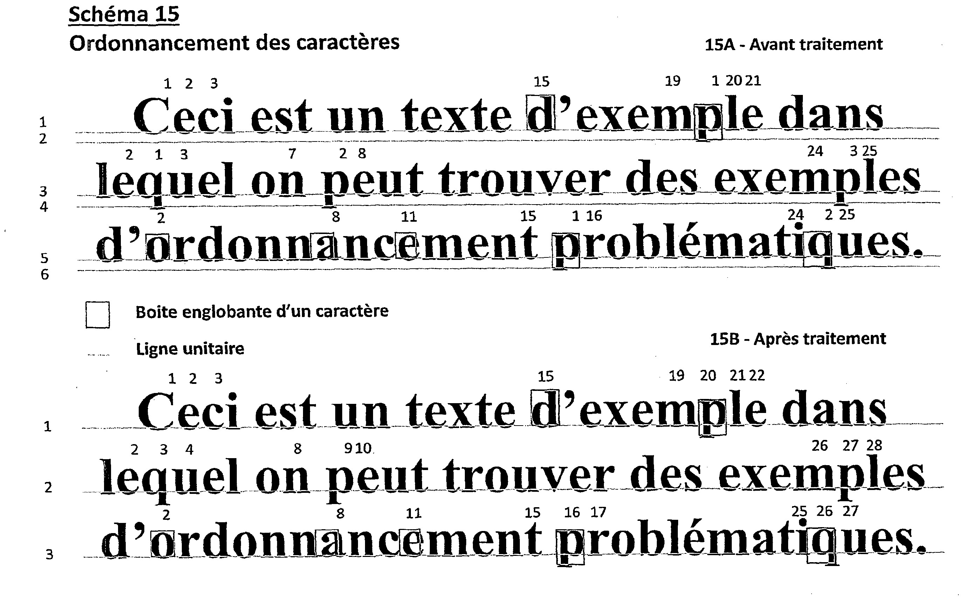

Si un tel système d'axe est déterminé, les coordonnées de chaque caractère dans le document à produire sont déterminées, la relation d'ordre stricte est définie en fonction de ces coordonnées. Ainsi dans le cas de système d'axe orthonormé, un caractère qui aura une ordonnée inférieure à un second sera considéré comme précédent ce second caractère ; en cas d'égalité d'ordonnées, c'est celui qui aura la plus petite abscisse qui sera considéré comme précédent l'autre. Des règles analogues peuvent être établies avec des coordonnées polaires : première détermination sur la valeur de l'angle, puis seconde détermination sur la valeur de la distance. Dans tous les cas les coordonnées des caractères sont déterminées par les coordonnées d'un point remarquable prédéfini de celui-ci : une des extrémités de la boite englobante (plus petit rectangle dans lequel est inclus le caractère), centre de gravité du caractère ou toute autre point pouvant être déterminé précisément lors de l'opération de décodage. Ce point peut être déterminé en fonction du dessin du caractère, ainsi on pourra choisir le centre de l'occlusion (partie blanche entre la barre et la boucle) pour un « b » ou un « d », le centre d'une partie quelconque identifiée du caractère que cette partie concerne la partie positive représentant la forme du caractère, sur un document papier par exemple l'encre noire, ou la partie représentant le fond, autrement dit ce qui ne correspond pas au caractère comme la couleur blanche du papier, ou toute partie identifiable de celui-ci.

La relation d'ordre stricte peut également être établie en fonction de l'ordre de lecture du document. Pour cela, il est établi quelles sont les « lignes unitaires » qui constitueront le document à produire et de numéroter ces lignes en fonction de leur ordre d'apparition, celle apparaissant le plus haut dans la page a le numéro le plus petit et celle apparaissant le plus bas dans la page a le numéro le plus grand. Cette numérotation si toutes les lignes possèdent la même orientation : par exemple toutes les lignes sont horizontales et se lisent de gauche à droite. Dans le cas contraire, la numérotation des lignes devra tenir compte de l'orientation de celle-ci et de sa position déterminée par la position d'un point remarquable de celle-ci (extrémités, centre de gravité ...) ou de toute valeur déterminée de façon non équivoque à partir de l'identification de la ligne dans le « document exploitable ». Chaque caractère encodable est identifié par la ligne à laquelle il appartiendra dans le document à produire ainsi que sa position dans la ligne déterminée soit par l'orientation définie pour celle-ci, soit par le sens de lecture classique, par exemple de gauche à droite pour des caractères latins et une ligne horizontale. La relation d'ordre stricte est alors déterminée d'abord par l'indice de la ligne, puis par la position dans la ligne.

Il est également possible en prévision de l'utilisation d'un « système de RAD » (Reconnaissance automatique de document), de définir la relation d'ordre stricte en fonction du type de document concerné. Ainsi les différentes zones du document à produire sont numérotées, puis les différentes lignes de chacune de ces zones, puis les différents caractères de ces lignes, l'ensemble de ces numérotations (zone puis ligne puis caractère) permet de définir une relation d'ordre stricte. Si tout ou partie des caractères des parties non variables du document à produire sont aussi support potentiel d'encodage, les zones concernant ces caractères sont intégrées à l'inventaire.

La quatrième étape est exécutée sur une page si les étapes précédentes ont déterminé que l'encodage est possible sur cette page. L'inventaire des caractères encodables ayant été réalisé, cette étape établit les caractéristiques essentielles de l'encodage :
- Contenu utile de l'encodage,
- Définition de la redondance de l'encodage. Cette redondance peut être définie globalement : l'intégralité de l'information utile est encodée, 2 fois, 3 fois ou un nombre de fois à déterminer. La redondance peut être définie en fonction des éléments encodés : l'information encodée importante pourra avoir un taux de redondance supérieure à celui d'une information optionnelle ou secondaire. Il pourra ainsi être défini autant de taux de redondance que de type d'information encodée. La définition des différents taux est propre à chaque page encodée sauf si une contrainte en ce sens est imposée.
- Structure de l'encodage, nombre de messages élémentaires intégrés dans la page, contenu utile de chaque message, découpage de l'information utile en sous-séquences, informations structurelles telles qu'en-tête et fin de message, typologie de l'information contenue ou identification de la sous-séquence encodée.
- Les éventuelles caractéristiques de contrôle de l'information encodée : CRC (Contrôle de redondance cyclique) ou équivalent.
- Au cas où un cryptage est effectué, les paramètres de ce cryptage.
- L'intégration éventuelle des résultats d'un processus de hachage sur tout ou partie de la page encodée ou du document encodé.

La cinquième étape sélectionne les caractères encodables qui vont réellement être encodés. Les caractères encodables éligibles ont été définis à la seconde étape alors que le nombre de messages à encoder dans la page et la longueur de chaque message a été défini à l'étape précédente. L'ensemble des caractères encodables de la page constitue un sur-ensemble des caractères qui seront réellement encodés. La sélection des caractères encodables dans ce sur-ensemble est effectuée suivant toute combinaison des critères suivants :
- Dissémination régulière dans la page encodée.
- Dissémination suivant un algorithme défini en fonction du nombre de caractères unitaires encodables de la page, de la longueur d'un encodage unitaire et de la redondance. L'utilisation d'un tel algorithme permet à la phase de décodage de valider l'adéquation des messages décodés avec le contenu de la page traitée. Dans ce cadre, la redondance et/ou la longueur d'un encodage unitaire peut être également déduite des autres paramètres par l'algorithme.
- Priorité d'utilisation de certains caractères unitaires ou de certaines zones de la page.
- Compacité des caractères encodables utilisés pour une même structure : message ou partie de message.
- Utilisation ou non-utilisation préférentielle de caractères utilisés pour des informations clés du document dans leur lecture traditionnelle (hors encodage).
- Utilisation ou non-utilisation préférentielle de caractères soumis à un processus de hachage.
- Espacement entre les différents messages encodés et/ou les différentes parties des messages encodés.
- Intégration requise ou au contraire interdite d'encoder un message ou une partie de message sur un même élément constitutif de la page encodée : mot, ligne unitaire, zone ...

Dans le mode de réalisation préféré de l'invention, chaque caractère encodable comporte quatre variantes en plus du même caractère non encodé. Ainsi :
- Le caractère lui-même non modifié n'est associé à aucune valeur,
- La première variante peut être associée à la valeur 0 ou si on adopte une notation binaire au couple (0,0),
- La seconde variante peut être associée à la valeur 1 ou si on adopte une notation binaire au couple (0,1),
- La troisième variante peut être associée à la valeur 2 ou si on adopte une notation binaire au couple (1,0),
- La quatrième variante peut être associée à la valeur 3 ou si on adopte une notation binaire au couple (1,1).

Pour effectuer la substitution des caractères, la police utilisée par les caractères encodables est substituée par une police spécialement développée pour l'invention, cette police contient les mêmes caractères qu'une police ne servant pas à effectuer un encodage tel que décrit de l'invention. En plus de ces caractères « normaux », pour chaque caractère normal encodable, la police intègre autant de caractères que de variantes nécessaires à l'invention. Ainsi s'il existe 4 variantes de « a » encodant les valeurs (0,0), (0,1), (1,0) et (1,1), ces quatre variantes sont ajoutées à la police à d'autres positions disponibles. Dans ce cas l'encodage de la valeur sur le caractère sélectionné se faisant par un changement adapté de la position du caractère dans la police du caractère sélectionné. La plupart des polices permettent de faire correspondre un caractère à une valeur définie par un octet ce qui autorise l'incorporation de 256 caractères au maximum.

Mais en réalité du fait de différentes contraintes, le nombre de caractères réellement intégrables dans ce cas à une police est inférieur à cette valeur de 256, or si on doit multiplier par 5 les caractères utiles d'une police cela nous donne déjà 130 positions (5 fois 26) pour les caractères minuscules et autant pour les caractères majuscules. Si on désire dépasser la limite de 256, il sera donc nécessaire d'encoder les positions de caractères sur 2 octets comme cela est déjà le cas pour certaines polices asiatiques. Dans un mode de réalisation particulier de l'invention, plutôt que d'insérer toutes les variantes de caractères associées à un encodage dans une même police, il est possible de ne pas modifier la police originelle servant alors de police de référence et de créer autant de polices qu'il y a de variantes, soit dans le cas précité quatre nouvelles polices, ainsi la première police créée correspond à tous les caractères encodant la valeur (0,0), la seconde policé créée correspond à tous les caractères encodant la valeur (0,1), la troisième police créée correspond à tous les caractères encodant la valeur (1,0) et la quatrième police créée correspond à tous les caractère encodant la valeur (1,1). Ainsi au lieu de substituer le caractère non encodé par le caractère encodé adéquat comme cela est proposé ci-dessous, il suffit dans ce cas de substituer la police de référence par la police encodant la valeur adéquate et cela pour chaque caractère. Y compris pour les caractères n'encodant pas de valeur pour lesquels il peut être nécessaire de rétablir la police originelle. En effet sans définition d'une nouvelle police dans de nombreux cas, le caractère utilise la dernière police définie.

Pour des raisons techniques, de brouillage ou autre, il est également possible qu'une même police intègre des caractères encodant des valeurs distinctes voire intègre à la fois des caractères n'encodant pas de valeurs et des caractères encodant des valeurs distinctes. Ainsi par exemple, pour une même police, le « a » pourra encoder la valeur 1, le « b » et le « c» ne pas encoder de valeur, le « d » encoder un 3, le « e » encoder un 2, le « f » un 1, le « g » et le « h » un 4, le « i » un 2, le « j » et le « k » pas de valeurs et ainsi de suite. Il faudra alors créer un nombre suffisants de polices, afin que l'ensemble de ces polices intègre l'ensemble des caractères ne portant pas d'encodage et pour chaque caractère encodable chacune des variantes associées à chaque code potentiel du caractère. Un même caractère ne portant pas de code ou une variante d'un caractère pouvant être dupliqués dans plusieurs de ces polices. L'algorithme d'encodage tiendra alors compte de cette dissémination des caractères dans les différentes polices pour sélectionner les polices associées à chaque caractère en utilisant un algorithme d'arbitrage dans le cas où plusieurs polices peuvent être associées à un même caractère devant être encodé ou non.

Pour encoder un message, il faut transformer celui-ci en unités élémentaires d'encodage informatique telles que les octets. Un octet étant composé de 8 bits (un bit est une position binaire valant 0 ou 1), 4 caractères suffisent à encoder un octet puisque chaque caractère encode 2 bits dans ce mode de réalisation. Il suffit, pour un jeu de 4 caractères sélectionnés pour encoder un octet, de substituer le premier caractère par sa variante encodant les deux premiers bits de l'octet à encoder, le deuxième caractère par sa variante encodant les bits 3 et 4 de l'octet à encoder, le troisième caractère par sa variante encodant les bits 5 et 6 de l'octet à encoder et enfin le quatrième caractère par sa variante encodant les bits 7 et 8 de l'octet à encoder.

Ce système donne l'importance aux bits de poids décroissants de la gauche vers la droite suivant le schéma d'encodage de l'information en gros-boutiste (en anglais big endian), mais il est tout à fait possible d'utiliser le schéma d'encodage petit-boutiste (en anglais little endian) pour définir la répartition des différents bits d'un octet. Dans les « documents électroniques », les caractères latins sont souvent encodés en mode ASCII via un octet. Un octet pouvant prendre 256 valeurs, le code ASCII permet à la fois de coder les caractères majuscules et minuscules, les chiffres et de nombreux caractères spéciaux.

En conservant le codage ASCII, il est ainsi possible de superposer à un texte un autre texte encodé quatre fois moins dense. Toutefois, il est possible d'encoder en n'utilisant pas le codage ASCII. Ainsi pour coder uniquement un jeu de 26 caractères, 5 bits sont suffisants puisque 5 bits permettent d'encoder 32 valeurs donc l'ensemble des 26 caractères plus jusqu'à 6 autres caractères spéciaux comme par exemple l'espace (le blanc), la barre oblique ou certains signes de ponctuation. Dans ce cas il est possible de coder 2 caractères en utilisant 5 caractères encodables. Si on élargit, en gardant les 26 caractères majuscules ainsi que les 26 caractères minuscules et les 10 chiffres, on obtient un total de 62 signes encodables sur 6 bits, puisque 6 bits permettent d'encoder jusqu'à 64 valeurs. Il est même possible d'encoder deux autres signes complémentaires comme @ et - ce qui permet d'encoder par exemple la plupart des URL. Dans ce cas trois caractères encodables sont nécessaires pour encoder un caractère suivant notre invention.

De façon générale, avec N caractères encodables, il est possible d'encoder jusqu'à 4^{N} valeurs. Si on désire encoder P caractères ou digits ou équivalent avec pour chaque caractère ou digit ou équivalent Q valeurs possibles, il faut choisir N pour que Q^{P} soit inférieur à 4^{N}. Le mode d'encodage et de décodage est réalisable par des règles mathématiques élémentaires (calcul polynomial).

Pour éviter des confusions de décodage, comme il sera indiqué plus loin, il peut être judicieux de ne pas utiliser tous les encodages possibles. Par exemple, si on utilise des couples de caractères encodables qui encode des quadruplets de bits de (0,0,0,0) à (1,1,1,1), il est possible d'interdire l'utilisation des quadruplets (0,0,0,0) et (0,0,0,1) dans le corps des messages pour sécuriser l'opération de décodage comme cela sera décrit plus loin. Dans ce cas les couples de caractères « utiles » lorsqu'ils encodent le corps des messages ont des valeurs de quadruplets de (0,0,1,0) à (1,1,1,1) soient 14 positions, donc 2N caractères encodables permettent d'encoder jusqu'à 14^{N} valeurs suivant ce principe. Pour encoder P caractères ou digits ou équivalent avec pour chaque caractère ou digit ou équivalent Q valeurs possibles, il faudra choisir N pour que Q^{P} soit inférieur à 14^{N}. Le mode d'encodage et de décodage est réalisable par des règles mathématiques élémentaires (calcul polynomial).

En prenant appui sur ces exemples il est possible de définir de nombreuses règles d'encodage quelle que soit la nature de l'information à encoder. L'encodage de la partie utile des messages peut être identique ou non à l'encodage de la partie technique de ces mêmes messages. La technique d'encodage peut être particulière à toute section choisie du ou des messages.

La sixième étape consiste à produire les documents avec leur encodage. Pour cette étape, le terme « caractère encodé » correspond à un caractère portant en sus de sa signification usuelle un codage spécifique à l'invention tel que décrit précédemment.

Dans un mode de réalisation particulier de l'invention, l'insertion de polices spécifiques, telles que celles incluant des caractères encodés décrites dans la présente invention joue le rôle de « marquage » du document produit : la détection d'un nombre minimal de caractère encodés suivant l'invention jouant ainsi le rôle de « marquage » permettant d'identifier le document comme « sensible » ou comme « authentifiable ». Le seuil au-delà duquel le document est considéré comme « sensible » peut être défini de façon absolu : par exemple au moins 5 caractères encodés dans la page. Ce seuil peut également être défini de façon relative : par exemple si au moins 1 % des caractères de la page sont encodés alors la page est considérée comme un « document sensible ». La détection de caractères non encodés mais faisant partie d'une police spécialement définie pour l'invention peut également permettre de définir un « marquage » suivant le mode défini pour les caractères encodés. Le code porté par les caractères encodés dans ce cadre constitue les règles du « document sensible ».

Si le document à produire est de type « document électronique », les polices utilisées intégrant les caractères encodés sont intégrées dans le fichier qui est produit. Si les polices intégrant les caractères encodés deviennent des polices communes, cette insertion peut ne pas être utile. Si le document produit doit posséder un marquage, celui-ci est inséré sous une forme adéquate comme par exemple le positionnement d'un attribut spécifique dans la zone réservée aux données informatiques contextuelles du fichier créé. Comme indiqué précédemment, l'utilisation d'une police spécifique ou d'un nombre minimal de caractères encodés peut également faire office de « marquage ». Lorsque l'encodage effectué joue le rôle de « règles », celle-ci peuvent être complétées afin de définir, directement ou indirectement, les restrictions d'utilisation et de reproduction du document produit.

Ces éléments complémentaires à la définition des règles par l'encodage des caractères sont insérés sous une forme adéquate comme par exemple le positionnement d'un attribut spécifique dans la zone réservée aux données informatiques contextuelles du fichier créé. Suivant un mode de réalisation spécifique, l'encodage des caractères n'est pas réalisé sur les documents de type « document électronique » mais défini par des attributs contextuels dans le fichier, les caractères sont alors encodés uniquement en cas de demande d'une copie sous forme de « document matériel ». Cet encodage peut ainsi avoir lieu lors d'une demande d'impression et/ou lors d'une demande de visualisation sur un écran.

Si le document à produire est de type « document matériel », les paramètres de production telle que la « résolution » pour une impression sont adaptés ou forcés afin d'être compatible avec les caractères encodables pour que ces derniers soient exploitables lors d'une phase de décodage. Ces paramètres pourront être définis en définissant les paramètres minimaux de qualité de la phase de décodage. Ces paramètres pourront être par exemple la définition de la résolution de numérisation lors des opérations de décodage du document, cette résolution pouvant être différente de celle requise lors de l'encodage : une numérisation avec une résolution à 600 dpi pourrait être compatible avec un encodage effectué avec une résolution à 300 dpi. Si le document produit doit posséder un marquage, celui-ci est inséré sous une forme adéquate comme par exemple l'insertion d'éléments graphiques additionnels tels des éléments de trame ou un brouillard de points. Comme indiqué précédemment, l'utilisation d'une police spécifique ou d'un nombre minimal de caractères encodés peut également faire office de « marquage ». Lorsque l'encodage effectué joue le rôle de «règles », celle-ci peuvent être complétées afin de définir, directement ou indirectement, les restrictions d'utilisation et de reproduction du document produit. Ces éléments complémentaires à la définition des règles par l'encodage des caractères sont insérés sous une forme adéquate comme par exemple un tatouage d'autres parties graphiques du document, l'insertion de codes à barre ou équivalent à une ou deux dimensions. Pour le tatouage sur les autres parties graphiques, il existe par exemple déjà des technologies permettant d'encoder de l'information sur des images. Dans le cas ou pour encoder les « règles », des données sont ainsi encodées sur le document complémentairement à l'encodage des caractères, la phase de décodage devra à la fois identifier que des données complémentaires sont encodées, identifier les zones de cet encodage complémentaire et extraire l'encodage complémentaire ainsi défini.

Les schémas 2A à 2D illustrent différents modes de décodage d'un document encodé dans le cadre de l'invention. Ce décodage peut soit être activé dès qu'un tel document est soumis à un processus de reproduction ; soit, être activé par une action spécifique du détenteur du document ou de celui qui doit l'exploiter.

Le schéma 2A illustre le processus de décodage d'un document encodé dans le cadre de l'invention non couplé à l'intégration d'un « marquage » lorsque le document est soit un « document matériel » soit un « document électronique image ».

Les différentes étapes de ce décodage sont effectuées partiellement ou intégralement soit suite à une action volontaire visant à extraire les informations encodées sur un document pour lequel il est pressenti qu'il intègre un encodage tel que défini dans le cadre de l'invention soit lors du traitement global d'un document en vue de sa reproduction indépendamment ou non de la présence d'encodage tel que défini dans le cadre de l'invention. Dans tous les cas ces traitements peuvent être déclenchés par un individu, une entité ou un processus informatique.

Dans le cas où les étapes sont effectuées suite à une action volontaire nécessitant la présence effective d'un encodage, le traitement correspondant est interrompu lorsque la présence de cet encodage n'est pas constatée ou lorsque cette présence est effective mais que l'opération de décodage échoue à le décoder ou que le code issu de cette opération de décodage n'est pas exploitable dans le cadre de l'action en cours. Cette interruption de traitement peut être accompagnée de toute opération de gestion adéquate.

Dans le cas où les étapes sont effectuées suite à une opération de reproduction indépendamment ou non de la présence d'encodage tel que défini dans le cadre de l'invention, le déroulement de cette opération peut alors être modulé par les étapes de décodage si celles-ci aboutissent à la détection d'un code encodé tel que décrit dans le cadre de l'invention ou simplement si la présence d'un encodage est détecté. Cette modulation peut par exemple avoir pour effet de restreindre les possibilités de reproduction et/ou de les étendre avec par exemple la possibilité d'obtenir des copies authentifiables et/ou authentifiées en complément ou à la place de copies classiques. Cette modulation peut être effective à travers un nouveau dialogue homme-machine permettant une redéfinition partielle ou totale de l'opération de reproduction en cours en intégrant les informations issues du décodage ou simplement induite par la détection de la présence d'un encodage.

La première étape consiste à transformer le document à décoder en « document exploitable ». Cette première étape peut être déclenchée lors d'une opération de reproduction par exemple, indépendamment de la présence potentielle d'encodage tel que défini dans l'invention. Si le processus de reproduction est habilité à prendre en compte les informations potentiellement encodées dans le document conformément à notre invention, cette étape est adaptée pour être compatible avec la présente description.

Dans le cas où le document est sous forme de « document matériel », celui-ci est numérisé afin d'avoir une représentation binaire de cette image sous un format informatique compatible tel que Bitmap, Tiff, JPEG ou tout format existant ou futur permettant d'obtenir une représentation du document exploitable informatiquement. Le format utilisé permet d'identifier chaque page physique du « document matériel » si celui-ci est composé de plusieurs pages comme c'est le cas par exemple pour un document papier recto-verso ou d'un document composés de plusieurs feuilles elles-mêmes possédant une face (recto simple) ou deux faces (recto-verso) utiles.

La définition des « pages unitaires » à l'issue du traitement peut être disjointe de la définition des pages physiques, par exemple, il pourra être considéré que le « document exploitable » obtenu par numérisation d'une fiche de paie ne comporte qu'une seule page même si le « document matériel » correspondant comporte plusieurs pages physiques. Pour chacune des pages du « document matériel », la numérisation permet de décomposer celle-ci en un ensemble de points élémentaires avec un repérage géographique dans la page, ce repérage peut-être matérialisé par un système d'axe ou équivalent. Au lieu d'une décomposition en points élémentaires, il existe des technologies de numérisation qui utilise une décomposition en éléments unitaires plus complexes que des points avec dans certains cas des possibilités de superposition partielle.

Toute numérisation est satisfaisante si elle permet d'appliquer des algorithmes de reconnaissance de forme et en particulier des technologies de reconnaissance de caractères (OCR) sur le « document exploitable » obtenu. Ainsi cette numérisation est satisfaisante, si l'ensemble des éléments unitaires associé à l'espace occupé dans une page du « document matériel » par un « caractère unitaire » donné permet à l'algorithme de déterminer la présence d'un caractère unitaire et/ou quel est le caractère matérialisé par ces éléments unitaires avec un taux de confiance satisfaisant, c'est-à-dire avec un taux d'erreur estimé inférieur à un certain seuil.

Dans un mode de réalisation de l'invention, seulement certains caractères font l'objet d'un encodage et ceux ne faisant pas l'objet d'un encodage n'ont pas besoin d'être reconnus dans la présente opération. Ainsi si ni le i majuscule : « I », ni le L minuscule : « l », ni le chiffre 1 : « I » ne sont encodés, il n'est pas besoin de distinguer les i majuscules des L minuscules et des chiffres 1 qui se ressemblent fortement au niveau visuel et qui peuvent être difficiles à discerner par un OCR. Contrairement à l'utilisation classique des « OCR », la reconnaissance de caractères éventuellement effectuée dans le cadre de l'invention par l'« OCR Classique » ne recherche pas à décrypter le texte tel qu'il peut être lu. En conséquence, l'« OCR classique » pourra se contenter de ne reconnaître que les caractères susceptibles de porter un encodage. Ainsi si seulement les « e » et les « a » sont encodables, l'« OCR classique pourra se limiter à la reconnaissance de trois caractères, les « a », les « e » et les « autres caractères », tous les autres caractères seront en effet considéré comme un même troisième caractère par l'« OCR classique ».

Pour les caractères susceptibles de porter un encodage, on pourra considérer par exemple que la décomposition est satisfaisante pour les « a » si ces caractères sont bien identifiés comme des « a » dans plus de 95 % des cas, c'est à dire si la marge d'erreur acceptée est de 5%. Dans le cadre de l'invention, il est important que cette marge d'erreur soit minimale. Une marge d'erreur supérieure à 1% entraine un décodage difficile voire infructueux dans de nombreux cas. Une telle marge d'erreur à déconseiller ne rend pas inopérant le décodage tel que défini dans l'invention, elle n'a de l'effet que sur la performance de celui-ci.

Classiquement une numérisation comporte deux étapes qui sont l'échantillonnage et la quantification. La numérisation la plus classique permet d'associer, au travers d'une première étape appelée échantillonnage, à un espace de la page une matrice de points élémentaires par exemple pour une définition de 300 dpi, la matrice ainsi constituée comporte 300 rangées de points par pouce (inch, soit environ 2,54 cm), chaque rangée est elle-même constituée de 300 points par pouce, soit donc environ 90 000 points par pouce carré (environ 13950 points par cm2). Cet échantillonnage est complété d'une seconde étape de quantification pour terminer la numérisation. Cette quantification permet de décrire l'ensemble des valeurs que pourront prendre les points définis dans l'étape d'échantillonnage.

Lors d'une numérisation en mode binaire, également appelée une binarisation, on ne conserve que deux niveaux d'information. Chaque point vaut par convention 1 s'il sert à représenter une information de forme autrement dit dans le contexte de l'invention la forme d'un caractère et 0 si le point représente une valeur du fond. Toujours par convention, on utilise généralement le noir pour représenter le fond et le blanc pour les formes cependant il est possible d'effectuer le choix inverse.

La numérisation peut également être effectuée en niveaux de gris. Si on choisit une quantification des niveaux de gris sur 8 bits, dans ce cas chaque point prend une valeur comprise entre 0 et 255. On associe généralement la valeur 0 au noir absolu et la valeur 255 au blanc absolu par analogie avec une mesure d'intensité lumineuse, toutes les valeurs intermédiaires encodant un niveau de gris allant du gris le plus foncé (1) au gris le plus clair (254). Par simplification, nous retiendrons ces paramètres de quantification pour la suite de la description qui reste cependant compatible avec des modes de numérisation plus complexes.

Le principe de numérisation peut être appliqué à un « document matériel » de type papier lorsque celui-ci est soumis à un scanner (numériseur) que celui-ci soit indépendant ou associé à un appareil de reproduction tel que photocopieur ou fax. Cela est également le cas, s'il est utilisé un appareil photo numérique que celui-ci soit indépendant ou associé à une intelligence informatique tel que Smartphone (téléphone « intelligent »), tablette numérique (« PDA ») ou un ordinateur de tout type. Cet appareil photo peut être un dispositif ne permettant que de faire des photos ou un appareil capable de prendre des vidéos mais utilisé pour la prise de photos comme peut l'être un caméscope ou une webcam par exemple.

Dans ce dernier cas, soit l'appareil vidéo est utilisé pour enregistrer une image unique de type photo soit il est associé à un algorithme spécifique qui à partir d'une séquence vidéo ou d'une pluralité de photos ou d'images permet de reconstituer l'équivalent d'une image fixe assimilable à une photo. Cet algorithme peut être intégré directement au dispositif vidéo ou être appliqué postérieurement à la prise d'images de celui-ci soit sur le dispositif soit sur une intelligence informatique externe tel qu'un ordinateur.

Dans le cas où le document à décoder est sous forme de « document électronique image », la première étape consiste uniquement à considérer ce document comme « document exploitable » sur lequel l'étape suivante effectue son traitement.

L'étape 2 consiste à différencier les différentes «pages unitaires » à partir du « document exploitable » obtenu à l'étape précédente. Cette pagination peut être directement définie par la définition des pages physiques soit chaque page recto et/ou chaque page verso pour un document obtenu à partir d'un « document matériel ». Dans le cas où le document est issu d'un « document électronique image », cette pagination peut également être explicite grâce à l'insertion d'information ou de balise identifiant un saut de page. Dans tous les cas, les pages dénuées d'informations comme les pages blanches pourront être éliminées et ne pas être soumises aux traitements des étapes suivantes. En l'absence de définition de page explicite ou de façon concurrente à une définition de page explicite, la pagination pourra être définie par la définition de condition de rupture conditionnée par une détection particulière. Ainsi on pourra appliquer une technique de « RAD » (reconnaissance automatique de document) qui créera une rupture de pagination implicite à chaque document, celle-ci complétée optionnellement par une rupture de pages à l'intérieur de chaque document. Ce découpage de pages est conforme à celui qui a été défini lors de l'encodage afin que le décodage puisse se dérouler avec succès.

Suivant un mode particulier de réalisation de l'invention, la définition de pages peut être différente de celle qui a été définie à l'encodage, la pagination originelle étant redéfinie suite à l'opération de décodage qui dans ce cas permet de retrouver cette pagination. Dans ce contexte, il est ainsi possible de différer la définition des pages lorsque tout ou partie des caractères encodés auront été décodés et que ce décodage seul ou en combinaison avec d'autres informations issues de l'analyse du « document exploitable » permettra la définition des pages telles qu'ont été définies pendant la phase d'encodage. Ainsi l'apparition d'une séquence encodée particulière dans l'encodage peut définir une rupture de page qui est effective soit à la détection de cette séquence soit à l'apparition corrélée d'un élément graphique particulier en superposition, en amont ou en aval de cette séquence.

Cela peut également être le cas lorsqu'une même page comporte plusieurs encodages différents comme cela peut être le cas quand des citations comportant leur propre encodage ont été insérées dans cette page. Dans ce cas, la détermination si la pluralité des codes présents dans la page est normale ou pas, peut être différée et validée par traitement adapté postérieur lorsque les pages unitaires auront été réellement identifiées.

L'étape 3 consiste à détecter l'ensemble des caractères unitaires de chaque page unitaire si elles ont été définies dans l'étape précédente ou dans l'ensemble du « document exploitable » si cette définition est en suspens.

Pour la réalisation de cette étape, un processus d'OCR (« reconnaissance de caractères ») est effectué soit par une méthode classique soit par une méthode spécifiquement adaptée à l'invention. Le but de cet OCR n'est pas d'obtenir un texte lisible ou compréhensible mais de pouvoir identifier chaque caractère afin de pouvoir par la suite détecter si le « caractère unitaire » correspondant est encodé et le cas échéant quel est l'encodage qu'il véhicule.

Ainsi si certains caractères ne sont pas support potentiel d'encodage, il n'est pas nécessaire que l'OCR appliqué identifie ces caractères. De même si plusieurs caractères ont des graphismes voisins tel que la lettre « O » majuscule et le chiffre « 0 », l'OCR pourra simplement déterminer que ce caractère est le graphisme commun à ces deux caractères sans avoir à définir s'il s'agit du chiffre ou de la lettre. Dans ce cas, si ces caractères sont supports d'encodage, pour simplifier les étapes suivantes il pourra être préférable d'utiliser un seul et même graphisme pour ces deux caractères. C'est-à-dire le même graphisme pour les caractères non encodés et les mêmes graphismes pour chaque variante représentant l'encodage de ces caractères.

Afin de lever des incertitudes dans la reconnaissance des caractères, il est possible comme cela est fait classiquement, de recourir à des contrôles des mots formés par les caractères identifiés via un dictionnaire adapté. Il est également possible d'effectuer des analyses sémantiques afin de remédier également à des incertitudes de reconnaissance. On peut également introduire à la suite de cette étape d'OCR un traitement permettant d'optimiser la ou les relations d'ordre strictes définies pour l'analyse de l'encodage du document sur caractères identifiés par l'OCR.

L'exemple de traitement correspondant ci-après décrit est illustré par le schéma 15. En effet, l'établissement préalable de cette ou ces relations sur les composantes connexes déterminant par exemple des lignes unitaires ainsi que des caractères unitaires au sein de ces lignes unitaires peut provoquer certaines erreurs dans l'ordonnancement des différents caractères pour l'étape ultérieure de décodage.

Un exemple est donné dans le schéma 15A intégré au schéma 15. Le premier algorithme établit ici des lignes unitaires à partir de la coordonnée de base des boites englobantes des différents caractères. Cet exemple établit les index pour 6 lignes unitaires. Cette configuration peut provoquer des erreurs dans le fait qu'a priori les caractères 'p' et 'q' par exemple devraient avoir été ordonnées dans le processus d'encodage des messages sur les mêmes lignes unitaires que leur voisins. C'est en tout cas le cas si l'on utilise la relation d'ordre strict citée en exemple plus haut dans laquelle l'ordonnancement est donné par les coordonnées du centre de l'occlusion de ces caractères.

Il apparait alors pertinent d'ajouter à cette étape du traitement des algorithmes permettant de fusionner des lignes unitaires en tenant compte des résultats obtenus par l'OCR classique. Ceci permet par la suite d'agréger correctement les caractères qui auraient pu poser problème, dans ce cas les 'p' et q'. On obtient au final, comme illustré dans le sous-schéma 15B du schéma 15, une fusion des lignes unitaires, les indices n'allant plus que de 1 à 3, et un ré-ordonnancement des caractères au sein de celles-ci. La description de cet exemple n'est pas limitative, elle introduit simplement le fait qu'il est possible d'ajouter un ou plusieurs traitements susceptibles de modifier les résultats d'ordonnancement sur les éléments analysés par la suite d'un complément d'information obtenu en cours d'analyse. Dans l'exemple proposé, il s'agit d'une information supplémentaire de type sémantique.

Dans certains alphabets, il existe des variantes de caractères matérialisées par des ajouts d'accents. Ainsi dans la langue française, en plus du « e » minuscule il existe des variantes accentuées comme le « é », le « è », le « ê » ou le « ë ». Si l'encodage a été effectué sur le « e » sans tenir compte des accents, l'OCR devra n'identifier que des « e » en ne tenant pas compte des éventuels accents. Dans le cas où parmi les variantes d'un même caractère comme les caractères accentués, au moins deux variantes, intégrant le caractère original ou non, supportent des encodages différents, l'OCR devra identifier les différentes variantes supportant ces encodages.

La technique d'OCR appliquée pourra enchaîner tout ou partie des étapes suivantes qui peuvent être exécutées séparément ou non dans l'ordre indiqué ou dans un ordre différent si cela est viable techniquement :
- Recherche de l'orientation de la page lors de la numérisation. Le document a pu être numérisé avec une erreur d'alignement, c'est à dire que si l'on visualise le « document exploitable » sur un écran, la matérialisation d'une page a subi une rotation d'un angle non nul par rapport à la même matérialisation qui pourrait être effectuée à partir du « document conceptuel ». Cela peut être du par exemple à un mauvais positionnement par l'utilisateur lorsque le document est numérisé sur un scanner à plat ou à un mauvais réglage des guides sur un scanner à entraînement automatique que ce scanner soit indépendant ou intégré à un photocopieur ou à un appareil de reproduction multifonctions.
- Redressement de la page, soit appliquer une rotation opposée à celle constatée lors de la numérisation par rapport à l'orientation attendue du « document exploitable ». La rotation est effectuée via un algorithme de traitement d'image. La rotation effectuée sur un solide comme l'est un « document matériel » sous forme papier ne produit aucune distorsion sur le document en question ou tout du moins rien de détectable à l'échelle humaine. Pour les rotations d'image informatique, une rotation même de quelques degrés entraine potentiellement une distorsion souvent peu visible par l'œil humain mais qui dans le cadre de l'invention peut avoir une incidence sur les performances du traitement. En effet cette distorsion peut avoir un impact sur la portion d'image associée à chaque « caractère unitaire » et entrainer une incertitude supplémentaire sur leur reconnaissance aussi bien dans la phase de reconnaissance du caractère proprement dit que dans l'extraction du code associé lorsque le caractère est encodé. Pour éviter ou limiter cette incertitude :
   o le redressement peut intégrer un algorithme spécifique pour limiter cette distorsion,
   o le « document exploitable » peut ne pas être redressé globalement mais ce redressement peut intervenir uniquement lorsque les caractères unitaires sont isolés,
   o les algorithmes de reconnaissance de caractères (OCR) ou d'extraction de code sur les caractères encodés pourront intégrer un algorithme de correction tenant compte de l'orientation initiale de la page appliqué soit sur la page redressée globalement, soit sur les caractères unitaires redressés de façon isolée, soit en l'absence de redressement mais en intégrant la valeur de l'angle dans l'algorithme d'OCR ou d'extraction de codes.
   o Le redressement peut également ne pas être effectué dans le cas où la recherche d'orientation aboutie sur un document présentant un angle d'inclinaison inclus dans un domaine de tolérance. Ce domaine de tolérance définit des intervalles avec leurs bornes inférieures et supérieures d'angle d'orientation d'un document entre lesquelles les algorithmes de traitements du document ne sont pas négativement impactés. Dans ce cas, l'image n'est redressée que si l'angle détecté se situe en dehors du domaine de tolérance.
- Recherche d'autres types de déformations courantes. Le changement d'orientation n'est pas le seul moyen d'ajouter des artefacts au cours de la numérisation d'un document. Dans le contexte de mobilité notamment, l'acquisition d'un document peut introduire d'autres types de déformations géométriques. On doit donc être en mesure de détecter et de corriger les modifications introduites sur un document par les principales transformations géométriques et homologiques par exemple les changements d'échelle, réflexions, symétries et projections avant application de chacun des OCR. Il est ainsi possible d'appliquer un premier processus spécifique de correction avant application de l'OCR Classique et/ou un autre processus spécifique avant l'application de l'OCR particulier, ces deux processus étant cumulatifs ou non.
- Un de ces processus de correction consiste au « Nettoyage de la page ». L'opération de numérisation peut faire apparaître des parasites sur le « document exploitable » qui peuvent agir sur les performances des autres opérations. Ainsi si le fond du document numérisé est blanc ou considéré comme blanc, le « document exploitable » pourra contenir du bruit se caractérisant par des pixels de niveaux de gris, ou de couleur suivant le choix de quantification, différents de la référence utilisée pour encoder le blanc, ce bruit pouvant respecter une distribution uniforme ou non. De même la transformation de l'image du document en éléments unitaires peut créer artificiellement des points ou amas de points parasites qui seront considérés comme de l'information de forme, respectivement de fond, pouvant entraîner un impact non négligeable sur les performances de reconnaissance de caractères (OCR) et/ou d'extraction de codes. En particulier, les pixels appartenant au voisinage proche des contours des caractères revêtent un aspect important dans le calcul de certaines caractéristiques utilisées dans le cadre de la présente invention. Il existe de nombreux algorithmes permettant de corriger ces parasites en restituant une image le plus conforme possible à celle attendue c'est-à-dire le plus fidèle possible au « document matériel » numérisé. Certains de ces algorithmes s'appliquent sur la totalité d'un document, là où d'autres agissent de manière locale et donc plus ciblée sur des zones spécifiques. Il existe également des méthodes hybrides combinant les avantages des deux précédents types d'approches pour répondre à des besoins d'applications particulières. Utilisés de manière trop intensive, ces processus de nettoyage de bruit peuvent provoquer une perte d'information entrainant une baisse dans les performances de reconnaissance des caractères voire une corruption dans l'extraction de codes. Il est donc parfois préférable de conserver un résidu de bruit dans la condition où celui-ci n'interfère pas trop dans les étapes de traitements ultérieurs. Il apparait néanmoins tout à fait possible d'utiliser ces algorithmes ou toute adaptation de ceux-ci aux autres traitements de la présente invention afin de ne pas nuire ou au moins de minimiser l'impact de nuisance aux performances de reconnaissance de caractères (OCR) et/ou d'extraction de codes.
- Un autre de ces processus de correction est la Pixellisation qui peut être impactée par le mode de transcription des couleurs. La numérisation donne comme résultat une décomposition en pixels élémentaires ou équivalent. En mode binaire, chaque pixel est soit de fond soit de forme autrement dit noir ou blanc ou inversement suivant le choix effectué. Si la numérisation a été faite en niveau de gris, chaque pixel a une valeur comprise, en général entre 0 et 255, pour un encodage sur 8 bits, définissant l'intensité lumineuse du pixel. Un pixel peut également représenter une couleur. L'espace de représentation couleur le plus généralement utilisé dans les traitements informatiques, bien que l'on puisse effectuer un autre choix de représentation, est l'espace RVB (pour rouge, vert, bleu ou RGB pour red, green, blue en anglais). Dans ce cas un pixel sera défini par trois valeurs comprises par exemple également entre 0 et 255 (pour un encodage 8 bits par canal) définissant chacune l'intensité lumineuse du pixel sur le canal couleur utilisé suivant le principe de la synthèse additive des couleurs. On produit de la lumière blanche en ajoutant une combinaison linéaire de trois lumières, rouge, verte et bleue, constituant les couleurs primaires du spectre lumineux que l'œil humain est capable de distinguer. Il faut distinguer de cette formulation de la couleur, qui est utilisée pour les dispositifs d'affichage de type écran informatique, de celle utilisée par les dispositifs d'impression comme lorsqu'on passe sur des supports comme le papier. Nous fournissons les schémas 12 et 13 illustrant ces principes d'addition et de soustraction de couleurs applicables soit pour l'affichage sur écran soit pour l'impression. En effet dans le cas du papier, la couleur observée par l'œil humain ne correspond plus à une addition sur les différents canaux couleur, mais à la soustraction des différentes longueurs d'ondes associées aux pigments de l'encre utilisée. Cette différence de formulation est caractérisée par le fait que la couleur associée à un matériau qui n'émet pas de lumière est due à la réflexion d'une lumière extérieure, en général celle du soleil ou d'un éclairage artificiel et qu'elle absorbe une quantité non négligeable de cette lumière. L'œil qui regarde le matériau ne voit que la partie réfléchie, c'est-à-dire la lumière d'éclairage moins la lumière absorbée. On parle ici de synthèse soustractive des couleurs par opposition à la synthèse additive avec les composantes primaires principales qui sont alors le cyan, le magenta et le jaune. Afin d'assurer une équivalence entre les couleurs affichées des périphériques d'affichage et les couleurs imprimées par des dispositifs d'impression, des protocoles de caractérisation de l'ensemble des couleurs pouvant être retranscrites par ces dispositifs sont établis pour chacun d'entre eux, on parle de gamut. Pour faire communiquer un dispositif d'affichage avec au autre d'impression en conservant des couleurs équivalentes pour l'œil humain, on effectue des opérations d'étalonnage en utilisant des sondes colorimétriques et les profils de gamut de chacun. Il existe ainsi des matrices de transformation permettant de passer d'un formalisme à l'autre. On peut donc ainsi s'assurer d'une correspondance relative entre les couleurs utilisées sur un « document matériel » et leur correspondance dans le « document exploitable » généré par la numérisation. Il y a autant de coefficients que de couleurs associées à la phase de numérisation. Cela peut être une décomposition RVB (Rouge, Vert, Bleu) ou CMJN (Cyan, Magenta, Jaune et Noir) comme précisé ci-avant mais il existe d'autres types de décomposition des couleurs qui peuvent être utilisés comme les formalismes théoriques, avec par exemple les espace Lab, Luv, HSV,... ou même standardisés par exemple les espaces de représentation des couleurs utilisés pour la transmission TV tel que YCrCb ou encore des espaces couleur propriétaires comme les Adobe-RGB d'Adobe ou ProPhoto-RGB de Kodak. Les traitements qui suivent peuvent s'exécuter directement sur les pixels ainsi définis ou sur des pixels redéfinis. Cela peut être utile en particulier dans un souci de performance. Ainsi par exemple, pour minimiser les approximations lors de la phase de numérisation, celle-ci peut être effectuée en niveau de gris ou en couleur (en général, décomposition RGB). Le processus de reconnaissance de caractère et/ou le processus d'extraction du code peut avoir été optimisé pour s'exécuter sur des pixels binaires, c'est-à-dire soit forme, soit fond. Pour obtenir un « document exploitable » respectant cette décomposition élémentaire, il peut être appliqué un seuil à partir d'une image en niveau de gris. Ainsi il pourra être considéré que le pixel est représentatif d'une forme en deçà d'une certaine valeur, par exemple de 0 à 25, et, représentatif du fond au-delà, par exemple de 26 à 255. Toute autre valeur de seuil peut être appliquée. Cette opération est appelée une binarisation. Toute autre méthode de binarisation différente d'un seuillage global pouvant être retrouvée dans la littérature ou même définie spécifiquement dans le contexte de la numérisation est également applicable, en particulier des méthodes utilisant des approches locales ou même des approches hybrides combinant plusieurs approches différentes. De même on peut transformer une image couleur en image en niveaux de gris en appliquant un ratio sur les différentes valeurs associées aux couleurs élémentaires. Ainsi si les valeurs R,G,B sont codées de 0 à 255 (encodage 8 bits par canal) on peut appliquer un coefficient de 1/3 à chacune de ces valeurs, la somme des valeurs ainsi obtenue permet d'avoir une valeur de niveau de gris entre 0 et 255. Tout autre coefficient peut être appliqué que la somme de ces coefficients fasse 1 ou non. Cette opération est appelée une désaturation de l'image couleur par moyenne. Toute autre méthode de désaturation permettant de passer d'une image couleur à une image en niveaux de gris est acceptable. Il est alors possible d'appliquer à cette image en niveaux de gris une binarisation permettant ainsi d'obtenir une image constituée uniquement d'informations de fond et de forme.
- Décomposition en composantes connexes. Sur un « document exploitable » qui a été pixélisé en pixels élémentaires de forme et de fond, noirs ou blancs par exemple, il est possible de repérer tous les amas de points de forme et de les répertorier. Un amas de points de forme est un ensemble de pixels de forme contigus c'est-à-dire qu'il est possible d'aller d'un pixel de l'amas à un autre pixel uniquement en passant par des pixels de l'amas. Plusieurs choix sont possibles afin de déterminer les différents passages possibles d'un pixel de forme à un autre, il s'agit ici de choisir la connexité. La connexité permet de savoir s'il existe un chemin permettant de passer d'un pixel à un autre. Dans le cadre des images numériques, deux pixels peuvent être voisins mais non connexes. Pour simplifier notre exposé sur la connexité, nous fournissons le schéma 14. C'est le cas par exemple si on utilise la 4-connexité qui défini les pixels aux emplacements Nord, Sud, Est et Ouest comme voisins d'un pixel central. Aussi, il est possible d'utiliser la 8-connexité qui ajoute aux voisins de la 4-connexité les pixels aux Nord-est, Nord-Ouest, Sud-est et Sud-ouest comme voisins du pixel central. On appelle ces amas également « composantes connexes » du fait de cette notion de connexité. Une éventuelle opération préalable de débruitage a permis d'éliminer tous les amas dus à des parasites. Il est possible à ce niveau de ne pas tenir compte de tous amas de points de forme considérés comme trop petit, soit que l'on considère que ces amas sont des parasites qui ont été ajoutés lors de la phase de numérisation mais qui ne faisaient pas partie du « document conceptuel » soit que ces amas sont trop petits pour pouvoir être assimilés à des caractères unitaires. Cela peut être le cas des éléments de ponctuation tels que le point (« . ») ou la virgule (« , ») ainsi que certains éléments d'accentuation tels l'accent aigu (« ' ») ou l'accent grave (« ' »). Si l'encodage des caractères est effectué indépendamment de l'accent porté par le caractère, cette élimination a un intérêt direct. Il est possible de ne pas tenir compte de certains amas qui ont des caractéristiques tels qu'ils ne peuvent correspondre à des caractères, c'est le cas des éléments graphiques de structure tels que par exemples les lignes et tableaux, les images, les logos. Un premier tri lié à la taille des amas ainsi qu'a certaines de leurs caractéristiques permet d'identifier ceux qui sont assimilables à des caractères unitaires. Certains amas de taille plus grande qu'un « caractère unitaire » peuvent être conservés à ce niveau car pouvant être associés à des ensembles de caractères que la numérisation aura artificiellement fusionnés car trop proches. La sélection des amas peut tenir compte du corps des caractères devant être sélectionnés. Ainsi si l'encodage est effectué uniquement sur des caractères de corps 12, il pourra être éliminé tout amas ne pouvant correspondre de par sa taille qu'à des caractères de corps 14 ou au delà ou qu'à des caractères de corps 10 et en deçà. Il est également possible de n'éliminer à ce niveau que des caractères pouvant correspondre qu'à des corps lointains du ou des corps de polices pouvant être encodés et d'éliminer les autres amas pouvant correspondre à des corps plus proches que dans la suite des traitements. Ainsi, si seul le corps 12 peut être encodé, on peut éliminer tout amas pouvant correspondre à un corps 16 et au-delà et supprimer ceux correspondant à des corps 13 à 16 dans les traitements ultérieurs. Les amas résultants sont caractérisés par leur boite englobante qui permet un repérage dans la page et facilite l'établissement d'une relation d'ordre stricte.
- Application d'un algorithme d'OCR (reconnaissance optique de caractères) aux amas éligibles. Cet OCR est dénommé « OCR classique » pour la suite. Contrairement aux OCR utilisés afin d'extraire un texte d'un document de façon à le rendre, par exemple, exploitable par un système de traitement de textes, la reconnaissance optique de caractères appliquée n'a pas pour but une exploitation directe du texte reconnu. Ainsi il est possible à un anglophone n'ayant aucune connaissance en langue étrangère d'appliquer le procédé de l'invention à un document écrit en langue autre que l'anglais voire utilisant un alphabet tel que les alphabets grecs, arabes, hébreux ou asiatiques. De même, si l'on applique l'invention à l'alphabet latin, il est possible d'effectuer un encodage en utilisant un sous-ensemble de caractères limités. Il est ainsi possible d'appliquer l'invention en n'utilisant comme symbole d'encodage que les « a » ou que les « a » et les « e » ou tout autre sous-ensemble de caractères. Ainsi, si seulement les « a » sont susceptibles de supporter un encodage, l'algorithme devra seulement déterminer si l'amas identifié est un « a » ou un autre caractère soient deux classes possibles. Le nombre de classes peut ainsi aller de 2 à 26 si on se limite aux seules lettres minuscules de l'alphabet latin non accentuées, voire 27 si on inclue le caractère « autre ». Ce nombre peut encore être augmenté si on élargit la panoplie des caractères identifiables. De même, contrairement à un OCR classique qui se doit de distinguer le « O » majuscule du chiffre « 0 » par exemple, l'OCR dans le cadre de l'invention pourra considérer que ces deux caractères n'en sont qu'un si les variantes d'encodage sont considérées comme identiques. Ainsi tout système d'OCR classique peut s'appliquer ainsi que tout système d'OCR qui aura été développé spécifiquement dans le cadre de l'invention, intégrant ou non des technologies connues, et permettant la reconnaissance de caractère dans les limites acceptables par l'invention.

L'étape 4 consiste à l'établissement de la « relation d'ordre strict » sur les caractères identifiés. A partir des résultats de l'application de l' « OCR classique » à l'étape précédente, la « relation d'ordre strict » est définie sur les caractères reconnus par la phase d' « OCR classique » précédente sur chaque page identifiée ou sur l'ensemble du document. Cette application peut être appliquée uniquement aux caractères susceptibles de supporter un encodage ou à un sur-ensemble de ces caractères.

A l'issue de cette phase, il est possible d'établir un texte virtuel composé de l'image de chaque caractère identifié par la phase d'OCR. Ce texte virtuel n'a aucune obligation de lisibilité au sens classique du terme. Les signes et caractères spéciaux associés à cette notion de lisibilité comme les espaces, la ponctuation ou les accents n'ont pas de nécessité d'être intégrés à ce texte virtuel s'ils ne sont pas eux-mêmes support d'encodage. Les images représentant les amas qui ont fait l'objet de la phase précédente d'« OCR classique » sont conservées soit en l'état soit sous une forme optimisée afin de servir de support aux phases suivantes. Ces images sont appelées « imagettes de caractère » par la suite.

Suivant un mode de réalisation particulier de l'invention, ces « imagettes de caractère » sont déterminées par un processus spécifique indépendant de la phase d'« OCR classique » en dehors de la capacité d'association de ces « imagettes de caractère » aux « caractères unitaires » inventoriés par la phase d'« OCR classique ». Il est également possible de conserver à des fins pratiques toute information supplémentaire relative aux amas qui ont fait l'objet de la phase précédente d'« OCR classique ». C'est le cas mais de manière restreinte de caractéristiques ayant été calculées au sein de cette phase et qui pourraient également être réutilisées dans des étapes ultérieures.

L'étape 5 consiste à extraire le code encodé sur les « caractères unitaires ». Sur ces « imagettes de caractère », il est appliqué un OCR spécifique non destiné à la reconnaissance du caractère lui-même mais permettant de détecter les différentes variantes permettant un encodage tel que décrit dans l'invention. Cet OCR spécifique est dénommé « OCR particulier » pour la suite.

Pour chaque « imagette de caractère » pouvant servir de support d'encodage, ce nouveau processus d'OCR est appliqué afin de déterminer si l'« imagette de caractère » ainsi traitée est une représentation du caractère correspondant dans sa version non encodée ou dans une des variantes correspondant à un encodage.

Si l'« imagette de caractère » a été déterminée dans la phase d'« OCR classique » comme étant un « a » minuscule et que le « a » minuscule est associé à 4 variantes encodées, la présente phase d'« OCR particulier » permet de déterminer si c'est un « a » non encodé ou si c'est la variante correspondant à la valeur binaire (0,0) ou à (0,1) ou à (1,0) ou à (1,1).

Dans ce cas, le « a » et ses quatre variantes sont considérés comme 5 caractères différents et l'« OCR particulier » se limite à la classification du « a » parmi ces 5 caractères.

L'« OCR particulier » qui est appliqué est spécifique aux « a », c'est-à-dire que si un autre caractère, par exemple le « e » minuscule, est associé à des variantes encodées, un autre « OCR particulier » spécifique aux « e » minuscules lui est appliqué. Il y a ainsi potentiellement autant d' « OCR particuliers » que de caractères différents pouvant supporter un encodage.

Suivant un mode de réalisation particulier, tout ou partie de ces « OCR particuliers » peuvent être regroupés à travers un « OCR particulier » global qui est intégré ou non à l'« OCR classique » (qui reconnait les caractères indépendamment de l'encodage éventuel que ces caractères peuvent encoder), cet OCR est dénommé « OCR particulier global » pour la suite.

Si au moins un « OCR particulier global » est défini, il peut ainsi y avoir un ou plusieurs « OCR particulier globaux » pouvant coexister ou non avec un ou plusieurs « OCR particuliers » non globaux. Dans tous les cas lorsqu'un caractère support d'un encodage est reconnu par un « OCR particulier » global ou non, cela fournit une information compatible avec une gestion de données informatique. Dans le cas où le caractère encodé comporte quatre variantes, le résultat de ces étapes est la définition de deux bits d'informations. Toute autre représentation de données que la représentation binaire classique est également viable sous conditions que celle-ci soit une donnée exploitable informatiquement.

Les données ainsi déduites de l'exploitation des « OCR particuliers » et/ou des « OCR particuliers globaux » permettent une reconstitution des messages encodés :
- Compilation des informations extraites. Les données fournies par le décodage de chaque caractère sont compilées afin de fournir une chaine de données globales soit pour chaque page identifiée soit pour le document traité, la compilation respecte la « relation d'ordre stricte » des caractères encodés dans la page ou le document telle que déterminée précédemment. Ainsi dans le cas ou quatre caractères sont encodés et dont l'ordre a été établi par la détermination de la « relation d'ordre stricte », chacun de ces caractères encodant 2 bits, le décodage complet de ces quatre caractères fournit un octet dans un cas classique de codage de données. Sur les mêmes bases, une page ou un document qui contient environ 4000 caractères encodables avec quatre variantes pour chaque caractère encodable permet après décodage de définir environ un kilooctets d'information dont l'extraction de la partie utile est définie par la suite.
- Extraction de l'information utile. Cette information utile a été encodée dans un ou des «encodages unitaires » :
   o Les « encodages unitaires » sont identifiés lors du décodage par identification, lorsque ces éléments existent, de l'entête ou équivalent de ces « encodages unitaires » ainsi que de la terminaison de ces « encodage unitaires » que celle-ci soit définie implicitement ou explicitement. Si d'autres informations structurelles utiles au décodage de l'information utile sont encodées, elles pourront être décodées à ce niveau afin de faciliter les autres opérations de décodage. Il peut y avoir plusieurs « encodage unitaires » distincts dans une même page ou un même document de même qu'un même encodage unitaire peut être encodé plusieurs fois dans une même page ou un même document.
   o Si un cryptage a été défini à l'encodage, un décryptage est appliqué au décodage soit avant l'identification des « encodages unitaires » soit postérieurement suivant la nature de l'encryptage. Le décryptage peut nécessiter la connaissance d'une clé spécifique qui est accessible au module de décodage suivant des modalités à définir par le concepteur du système. Cette clé peut également être définie ou complétée par l'utilisateur qui active implicitement ou explicitement le décodage du « document exploitable ».
   ∘ Si une pluralité d'« encodages unitaires » est définie, chaque « encodage unitaire » est identifié via éventuellement le décodage d'un indice ou équivalent inséré dans l'« encodage unitaire » permettant son indentification. L'encodage de l'information utile peut être corrélé à cette identification. Par exemple, l'encodage de la partie utile pourra utiliser un algorithme distinct si celle-ci encode une information alphanumérique ou un nombre, de même la structure d'encodage de la partie utile pourra différer suivant que la longueur de l'information utile est fixe ou variable. En particulier, cette notion peut avoir une incidence sur la définition de la terminaison de l'« encodage unitaire » correspondant. Suivant un mode de réalisation particulier de l'invention, l'indice est matérialisé par le séquencement des encodages unitaires. Ainsi s'il y a 3 « encodages unitaires » différents par page et que ce nombre de 3 est connu lors du décodage, le premier « encodage unitaire » trouvé dans la page correspondra à celui d'indice 1, le second à celui d'indice 2 et le troisième à celui d'indice 3. En cas de redondance dans ce mode de réalisation, les « encodages unitaires » d'ordre 3N+1 où N est un entier correspondent à l'« encodage unitaire d'indice 1, ceux d'ordre 3N+2 à ceux d'indice 2 et ceux d'ordre 3N ceux d'indices 3. Il est également possible d'appliquer le même principe si le nombre d'« encodages unitaires » est différent de 3 et que l'ordre d'apparition de chaque « encodage unitaire » est plus complexe. Il est par exemple possible de faire apparaitre deux fois plus souvent un « encodage unitaire » particulier que les autres « encodages unitaires » et faire une séquence de type 1, 2, 1, 3, 1, 2, 1, 3 et ainsi de suite.
   ∘ Cette organisation de l'information en une pluralité de sous-séquences est distincte et indépendante de la présence concurrente de plusieurs codes dans un même page résultant par exemple de l'insertion de citations possédant chacune son propre encodage. Dans le cas de sous-séquences, les différentes sous-séquences sont la décomposition d'une même information globale, complexe ou non, ou d'un ensemble d'informations dépendantes, alors que dans le cas de citations insérées les encodages peuvent être indépendants les uns des autres. Toute combinaison de ces deux types sont envisageable, il est possible de faire coexister plusieurs encodages indépendants dans une même page unitaire, tout ou partie de ces encodages indépendants pouvant s'appuyer sur un codage sous forme de sous-séquences.
   ∘ Si une clé de hachage est insérée, celle-ci est identifiée et contrôlée. Si le contrôle de cette clé dépend d'informations non disponibles lors du décodage, cette clé de hachage est éventuellement stockée en vue d'un contrôle ultérieur. L'information utile de l'« encodage unitaire » peut être validée, invalidée ou corrigée suite au traitement de la clé de hachage. Ce traitement est également valable lorsque le hachage est limité à l'insertion d'une information de type CRC.
   o Si une redondance d'information est définie pour un « encodage unitaire », un diagnostic sur cette redondance est effectué. Ainsi si par exemple, un même « encodage unitaire » est inséré au moins N fois dans une page, le message sera considéré comme valide si au moins P messages sont décodés avec succès avec P pouvant valoir de 1 à N. Suivant un mode de réalisation particulière, même au cas ou aucun des N messages est décodé correctement ou si un nombre de messages inférieur à P est décodé correctement, le message pourra être considéré comme valide si il peut être reconstruit de façon jugée suffisamment fiable par un algorithme adapté à partir de tout ou partie des N occurrences décodées que le décodage de chacune des ces occurrences soit valide ou non.

L'étape 6 consiste à établir un diagnostic sur l'exploitation de l'encodage. Si celui-ci est nécessaire à l'opération en cours sur le « document exploitable », ce diagnostic conditionne cette opération ; dans le cas contraire, ce diagnostic conditionne les options complémentaires dépendantes du code encodé. Ce diagnostic est effectué en fonction des différents diagnostics effectués lors de l'étape précédente sur l'information utile décodée, sur le niveau de confiance associé à ce décodage soit partiellement, soit globalement. Si celui-ci est dépendant du code extrait dans les étapes précédentes, le diagnostic peut autoriser la poursuite du traitement de façon complète ou partielle ou l'interdire ou enchaîner sur un nouvel essai de décodage que celui-ci implique ou non une nouvelle numérisation.

Si les différents « encodages unitaires » encodent à la fois des informations nécessaires et des informations optionnelles, le diagnostic pourra être défini en fonction de la réalité des informations décodées. Ainsi si dans le cadre d'un processus d'authentification la référence du document est nécessaire et la date d'émission du document est une information optionnelle, l'opération pourra être avortée si la référence n'est pas décodée de façon satisfaisante et que le processus en cours vise à l'obtention d'une copie authentifiée. Elle pourra par exemple être poursuivie si le processus en cours ne vise qu'à une visualisation du document avec optionnellement l'affichage des informations encodées suivant l'invention.

Le schéma 2B illustre le processus de décodage d'un document encodé dans le cadre de l'invention couplé à l'intégration d'un « marquage » lorsque le document est soit un « document matériel » soit un « document électronique image ». La description de ce schéma se limite aux différences entre ce processus et celui caractérisé par le schéma 2A qui décrit un processus identique mais non couplé à l'intégration d'un marquage.

La première étape consistant à transformer le document à décoder en « document exploitable » reste inchangée par rapport au processus décrit en rapport du schéma 2A. Toutefois celui-ci peut découler d'une opération de numérisation consécutive à une demande de reproduction telle qu'une photocbpie sans qu'une demande d'authentification soit explicite. Dans ce cas la recherche de « marquage » est systématique sur toute demande de reproduction et l'opération de décodage n'est effectuée que si cette recherche est fructueuse.

Suite à cette étape, il est recherché un éventuel marquage sur chaque page du document. En cas où l'encodage est couplé à un marquage, l'encodage joue le rôle de règles définissant les restrictions et règles de reproduction du document, en particulier dans le cas d'identification de la nature authentifiable d'un document.

L'encodage proposé est bien un élément graphique correspondant à la définition des règles. Le marquage peut être défini par un autre élément graphique tel qu'un brouillard de points ou une trame particulière. Dans ce cas, les traitements liés à la détection et à l'extraction d'un encodage ne sont effectués que si la détection du « marquage » est positive, dans le cas contraire, le document est considéré comme classique et il n'y a pas de recherches d'éventuels caractères codés et d'extraction de code correspondant. Si cette recherche de marquage est effectuée au sein d'un processus qui ne peut être effectué que sur des documents sensibles, ce processus est avorté avec éventuelle communication d'un diagnostic au processus global ou à l'utilisateur. Cela est par exemple le cas si cette recherche est effectuée sur un document en vue de l'obtention d'une copie authentifiée ne pouvant être obtenue qu'à partir d'une copie authentifiable considérée comme « document sensible ».

Suivant un mode de réalisation particulier de l'invention, la présence d'un nombre minimum de variantes de caractères telles que définies dans le présent brevet et encodant une valeur peut également jouer le rôle de marquage, uniquement par la présence et non par la valeur codée. Par exemple, s'il est détecté plus de 10 caractères codés, c'est-à-dire des variantes de caractères destinés à coder une valeur, soit par exemple dans le cas de quatre variantes, destinées à coder une des valeurs binaires (0,0), (0,1), (1,0) ou (1,1), alors la page concernée sera réputée posséder un marquage indépendamment de la valeur codée par ces caractères et de l'éventuelle cohérence d'un décodage de ces valeurs. Le document sera alors considéré comme « sensible » et dans le cas contraire, le document sera considéré comme classique. Dans ce cas, le schéma 2B doit être adapté afin que la bifurcation document classique (non sensible) /document sensible soit effectuée après l'identification des variantes de caractères encodées ce qui correspond à la cinquième étape du schéma 2A. Cette étape pouvant, pour des besoins d'optimisation, dans ce cas être elle-même adaptée afin que le comptage d'éventuelles variantes de caractères support d'encodage soit fait avant le décodage proprement dit.

Le schéma 2C illustre le processus de décodage d'un document encodé, qui n'est pas couvert par l'invention, couplé à l'intégration d'un « marquage » lorsque le document est un « document électronique descriptif ». La description de ce schéma se limite aux différences entre ce processus et celui caractérisé par le schéma 2A qui décrit un processus identique mais appliqué à un « document matériel » ou à un « document électronique image ».

Dans ce cadre, le document est déjà un « document exploitable » et l'étape 1 du schéma 2A n'est pas reprise.

L'étape 2 consiste à l'identification des pages par une analyse directe du « document électronique descriptif ». Dans la plupart des formats de ces fichiers, la pagination est clairement définie par exemple par l'insertion de commandes de type « NP » (New page) ou d'autres éléments définissant une rupture ou l'initialisation d'une nouvelle page aisément repérable par une recherche élémentaire. Dans certains cas, comme par exemple dans les formats anciens de fichiers, la page est définie par une capacité en lignes et dans ce cas la pagination est définie indirectement par comptage de lignes. Dans certains cas, la pagination est déterminée uniquement lors de la transformation en «document matériel », la pagination peut en effet dépendre des paramètres d'impression telle que la définition des marges techniques de l'imprimante. Dans tous les cas, le processus de décodage s'effectue séparément sur chaque page lorsque cela est possible ou sur le document global dans le cas contraire où si l'absence de définition de pagination à ce niveau n'est pas incompatible avec la suite des traitements. Cela peut par exemple être le cas lorsque le décodage des « encodages unitaires » permet implicitement ou explicitement de définir cette pagination.

L'étape 3 consiste à effectuer l'inventaire des caractères encodés. L'utilisation du « document électronique descriptif » permet de sélectionner directement les caractères portant un encodage puisque ces caractères utilisent une ou plusieurs polices spécifiques et que l'information indiquant la police associée à un caractère est aisément accessible soit explicitement par une référence directe à la police en association à la définition du caractère soit implicitement. Un des cas de définition implicite est par exemple de rechercher la dernière police référencée avant la définition du caractère. Il est alors possible de déterminer si un caractère est encodé par la position définie dans la police voire directement par la définition de la police utilisée. Cette détermination permet également la détermination du code porté par le caractère.

L'étape 4 consiste à l'établissement de la « relation d'ordre stricte ». Celle-ci peut dans certains cas être déterminée simplement : l'ordre d'apparition des caractères encodés dans le « document électronique descriptif » établissant de facto une relation d'ordre, c'est le cas par exemple dans la plupart des fichiers de type « .txt » ou « .doc » lorsqu'entre autres il n'y a pas de définition d'en-tête ou d'en-pied de page et qu'il n'y a pas de définition de colonnes multiples.

Dans certain cas, l'ordre d'apparition des caractères n'est pas équivalent à une relation d'ordre. De nombreux formats permettent en effet de remplir la page dans un ordre libre : par exemple il est possible de définir en premier un texte devant se localiser en bas de page puis un texte en partie haute à droite puis un texte au milieu à gauche. Dans ce cas, il est nécessaire de redéfinir le positionnement absolu de chaque caractère dans la page et de retrouver la « relation d'ordre stricte » telle qu'elle a été définie à la création du document en définissant par exemple un système d'axe conforme à ce qui a été prévu lors de cette création.

L'étape 5 est la même que celle décrite vis-à-vis du schéma 2A avec la simplification due au fait que l'encodage associé à chaque caractère a pu déjà être déterminé ou peut être déterminé par identification de la police utilisée et/ou de la position du caractère dans la police. Cette détermination directe de l'encodage remplace le recours à un ou des « OCR particuliers ».

L'étape 6 est identique à ce qui a été défini pour le schéma 2A. Toutefois le message décodé ne peut être erroné du fait d'une incertitude de reconnaissance puisque les informations principales sont lisibles directement. Un diagnostic peut quand même être défini dans le cas où l'opération de décodage entraine une suspicion sur l'intégrité du « document électronique descriptif » traité que celui-ci ai pu subir des dommages accidentels ou par une tentative d'altération par un tiers.

Le schéma 2D illustre le processus de décodage d'un document encodé, qui n'est pas couvert par l'invention, couplé à l'intégration d'un « marquage » lorsque le document est un « document électronique descriptif ». La description de ce schéma se limite aux différences entre ce processus et celui caractérisé par le schéma 2C qui décrit un processus identique mais non couplé à l'intégration d'un marquage.

Dans le cas du schéma 2C, il n'y avait pas de définition d'étape 1. La recherche du « marquage » est donc soit effectuée en amont de l'étape 2 constituant ainsi une nouvelle étape 1 ou simultanément à cette étape 2.

Pour cette étape ou en complément de cette étape, il est recherché un éventuel marquage sur chaque page du document. En cas où l'encodage est couplé à un marquage, l'encodage joue le rôle de règles définissant les restrictions et règles de reproduction du document, en particulier dans le cas d'identification de la nature authentifiable d'un document.

L'encodage proposé est bien un élément graphique correspondant à la définition des règles lorsque le document est transformé en « document matériel ». Le marquage peut être défini par un autre élément graphique tel qu'un brouillard de points ou une trame particulière, ces éléments graphiques sont toutefois souvent définis de façon descriptive dans un « fichier électronique descriptif » ce qui en facilite la détection.

Dans ce cas, les traitements liés à la détection et à l'extraction d'un encodage n'est effectué que si la détection du « marquage » est positive, dans le cas contraire, le document est considéré comme classique et il n'y a pas de recherches d'éventuels caractères codés et d'extraction de code correspondant. Si cette recherche de marquage est effectuée au sein d'un processus qui ne peut être effectué que sur des documents sensibles, ce processus est avorté avec éventuelle communication d'un diagnostic au processus global ou à l'utilisateur. Cela est par exemple le cas si cette recherche est effectuée sur un document en vue de l'obtention d'une copie authentifiée ne pouvant être obtenue qu'à partir d'une copie authentifiable considérée comme « document sensible ».

Suivant un mode de réalisation particulier de l'invention, la présence d'un nombre minimum de variantes de caractères telles que définies dans le présent brevet et encodant une valeur peut également jouer le rôle de marquage, uniquement par la présence et non par la valeur codée.

Par exemple, s'il est détecté plus de 10 caractères codés, c'est-à-dire des variantes de caractères destinés à coder une valeur, soit par exemple dans le cas de quatre variantes, destinés à coder une des valeurs binaires (0,0), (0,1), (1,0) ou (1,1), alors la page concernée sera réputée posséder un marquage indépendamment de la valeur codée par ces caractères et de l'éventuelle cohérence d'un décodage de ces valeurs.

Le document sera alors considéré comme « sensible » et dans le cas contraire, le document sera considéré comme classique. Dans ce cas, le schéma 2D doit être adapté afin que la bifurcation document classique (non sensible) /document sensible soit effectuée après l'identification des variantes de caractères encodées ce qui correspond à la cinquième étape du schéma 2C. Cette étape pouvant, pour des besoins d'optimisation, dans ce cas être elle-même adaptée afin que le comptage d'éventuelles variantes de caractères support d'encodage soit fait avant le décodage proprement dit.

Le schéma 3 fournit un exemple de jeu de caractères supportant un encodage conforme à l'invention.

Le tableau correspondant contient 5 colonnes. Dans la première colonne, sont représentés des caractères tels qu'ils sont définis classiquement dans une police comme la police « Times New Roman ». Sont ainsi représentés les caractères « a » minuscule, « b » minuscule, « e » minuscule et le chiffre « 4 ». L'encodage peut porter sur ce jeu de caractère ainsi que tout autre jeu de caractères avec l'utilisation de tout ou partie des caractères d'une police que ces caractères aient été définis spécifiquement pour l'invention ou pas.

Sont définis également quatre autres colonnes dénommées « caractère codé à 0 », « caractère codé à 1 », « caractère codé à 2 », « caractère codé à 3 ». Le tableau donne en regard de ces colonnes des caractères qui encodent soit la valeur 0, soit la valeur 1, soit la valeur 2, soit la valeur 3. Dans chacune de ces colonnes, sont représentées des variantes des caractères encodant la valeur désignée de chaque colonne. Chacun de ces caractères est une variante du caractère correspondant non encodé figurant dans la première colonne de la même ligne. Les différentes variantes de caractères fournies dans les 4 colonnes de droite du tableau sont aisément reconnaissables visuellement. Il est possible de définir des variantes moins détectables à l'œil en définissant des caractéristiques adaptées pour la détermination de l' « OCR particulier » qui a pour charge d'identifier les différentes variantes.

Le nombre de 4 variantes est optimum pour encoder suffisamment d'information et pour assurer une bonne qualité de détection des différentes variantes d'un caractère par l'OCR particulier sans sacrifier l'esthétique de ces variantes par rapport au caractère original. Ce nombre est préconisé mais pas imposé. Ce nombre est pratique car il permet d'encoder l'équivalent de 2 bits d'informations.

Toutefois, il n'est pas nécessaire de définir une puissance de 2 comme nombre de variantes, il est possible de définir tout nombre à partir de 2. Toutefois un nombre trop grand rendrait plus difficile la détection des différentes variantes par l'« OCR particulier » déjà décrit ou déformerait trop fortement les différents variantes de caractères afin de rendre possible la détection de celles-ci par l'« OCR particulier » ce qui nuirait à l'esthétique des documents créés dans le cadre de l'invention.

Dans un mode de réalisation classique de l'invention, au moins deux variantes sont nécessaires pour un même caractère, car une seule variante ne permettrait que d'encoder la valeur « 0 » et donc rendrait impossible même par accumulation de ces variantes l'encodage d'une valeur informatique exploitable sauf à définir des valeurs informatiques conditionnées par le séquencement d'apparition de ces caractères.

Dans un mode de réalisation particulier de l'invention, le caractère non modifié peut être considéré comme portant le code 0 et ainsi la première variante porte la valeur 1 et ainsi de suite s'il y a d'autres variantes définies. Dans ce cas, la définition d'une seule variante peut suffire. Ce mode de réalisation impose soit que tous les caractères encodables portent nécessairement une valeur soit que les caractères encodables et encodés soient identifiables lors de la phase de décodage.

Il est ainsi par exemple possible de définir que certaines parties du document sont nécessairement encodés. De même il est possible de définir certaines parties du texte via des définitions géographiques dans le document ou organisationnelles : phrase ou mot d'une certaine typologie. Il est également possible de définir les caractères éligibles via des positions relatives.

Tout ou partie des caractères qui suivent ou qui sont définis via un élément remarquable du document ou une partie textuelle remarquable peuvent déterminer le message à décoder. Ainsi s'il est prévu un « marquage » dans le document, ce « marquage » peut également servir pour définir un point d'origine pour la définition d'un encodage et permettre ainsi de déterminer le premier caractère d'un message, que ce caractère soit inclus dans la partie utile ou la partie structurelle du message. Tous ces modes particuliers définis pour le cas où le caractère non modifié est également porteur d'une valeur encodée sont applicables au cas global où le caractère non modifié n'est pas porteur d'une valeur encodée.

Le nombre de variantes par caractère peut être le même pour chaque caractère ou adapté à chaque caractère que ce nombre de variantes inclut ou non le caractère non modifié. Ce nombre peut être défini à la fois en fonction du caractère et du corps de la police. Il peut également dépendre de la densité des caractères dans une page.

En effet pour encoder une page il faut inclure un certain volume d'information.

Si le nombre de caractères de la page est important, un nombre de variantes limité peut suffire à encoder la page y compris en tenant compte des parties structurelles des messages à inclure et de leur redondance.

Si par contre, le nombre de caractères de la page est peu important, il peut alors être nécessaire de définir un nombre de variantes plus grand afin d'être assuré de pouvoir encoder la page avec les caractéristiques minimales requises pour la partie structurelles des messages et/ou de la redondance minimale requise.

Ce choix peut être fait même s'il a un impact négatif sur la qualité du décodage voire de son exécution, en particulier sur le taux effectif de décodage des messages et/ou du taux de confiance correspondant.

Dans le cas où le nombre de variantes utilisées par caractère peut être défini en fonction de la page encodée, l'opération de décodage doit inclure une phase de détection de ce nombre soit par recherche d'une définition explicite soit par recherche d'une définition implicite. La définition explicite aura pu être ajoutée lors de la phase d'encodage soit par ajout d'un élément graphique adapté soit par une altération détectable lorsqu'il s'agit de produire un document sous forme de « document matériel » ou de « document électronique image ».

Dans le cas d'un « document électronique descriptif », cette définition peut également être faite via positionnement adapté des composants informatiques de ce document. La définition implicite pourra être retrouvée pendant la phase de décodage en s'appuyant sur des éléments statistiques de la page comme le nombre de caractères qui la compose en se limitant par exemple pour cette détermination aux caractères ayant certaines caractéristiques comme le corps.

De façon non exhaustive, pour déterminer la définition implicite, il peut également être tenu compte de tout ou partie des éléments suivants : la puissance potentielle d'encodage des caractères éligibles à supporter un encodage dépendant du corps ou non, l'arrangement des caractères, la détermination de la qualité de production du document comme par exemple la résolution pour un « document matériel », les caractéristiques couleur ou niveaux de gris ou qualité de binarisation, la présence ou l'absence d'éléments graphiques complémentaires tels qu'un fond ou des images et de façon générale tout élément permettant de redéfinir le choix effectué à l'encodage concernant le nombre de variantes par caractère que ce nombre dépende ou non des caractères éligibles à supporter un encodage.

Lorsque l'« OCR particulier » qui doit détecter les variantes d'un même caractère est défini à partir d'un jeu de caractéristiques du caractère, un algorithme peut être défini pour obtenir les différentes variantes du caractère les plus pertinentes pour une détection appropriée.

Cet algorithme sera dépendant de la stratégie de classification utilisée par la suite dans les étapes d'analyse des caractères. Cet algorithme pourra également être itératif, c'est-à-dire qu'un certain nombre de modifications élémentaires sont définies que ces modifications soient de type absolu ou dépendantes de paramètres.

Une modification est de type absolu lorsqu'aucun paramètre ne permet de la moduler. Par exemple, une modification de type absolu est une rotation du caractère de 0,1 degré dans le sens trigonométrique. Une modification dépendante de paramètres est par exemple une rotation du caractère pour laquelle il faut définir l'angle et éventuellement le sens.

Toute modification élémentaire doit être en mesure de provoquer un changement conséquent dans le vecteur de caractéristiques défini pour distinguer les différentes variantes de caractères entres-elles. Ainsi à partir d'un jeu de variantes de caractère obtenu à l'étape P du traitement itératif, on calcule une mesure de distance, un critère de séparation ou toute information équivalente entre les caractères obtenus dans l'espace à N dimensions des N caractéristiques retenues, soit le caractère original et ses variantes.

Cette mesure doit permettre la classification entre plusieurs échantillons par l'intermédiaire d'un classifieur qu'il soit de la forme k-plus proches voisins, SVM, réseaux de neurones ou d'un quel autre type. Un critère de qualité est défini sur ce jeu à partir des distances ou équivalents mesurés.

Ainsi, dans ce cadre l'OCR particulier utilisé pour permettre la reconnaissance des différentes variantes est un « OCR utilisant un méthode de classification statistique ».

A partir de cette position il est appliqué chaque modification élémentaire qui a été définie comme étant disponible. Sur le jeu obtenu pour chacune des modifications élémentaires appliquées de façon indépendante sur le jeu résultant de l'étape P, il est mesuré la distance ou équivalent sur le nouveau jeu obtenu composé du caractère original et de ses nouvelles variantes. Il est recherché le meilleur critère de qualité déduit de ses distances définissant chaque jeu obtenu, celui de l'étape N et ceux de l'étape N+1.

Le jeu correspondant au meilleur critère de qualité sert de référence de l'étape N+1. Si ce jeu est équivalent à celui de l'étape N soit parce que calculé à partir du jeu de l'étape N ou parce que calculé à partir d'un jeu de l'étape N+1 mais avec une différence au niveau de critère de qualité jugée insuffisante, le processus itératif s'arrête et le jeu obtenu à l'étape N est considéré comme le jeu définitif obtenu par le procédé itératif.

En sus du critère de qualité, il est possible de définir un critère d'acceptabilité graphique. Ce critère détermine que le jeu obtenu ne peux pas être retenu car visuellement non satisfaisant suivant tout critère objectif ou subjectif à définir. Si ce critère est défini humainement, le processus itératif est réinitialisé et relancé avec un paramétrage évitant de converger vers le jeu rejeté.

Si le critère est défini informatiquement, le processus itératif est adapté pour rejeter les jeux non satisfaisant à ce critère.

Si le jeu obtenu par le procédé itératif n'est pas satisfaisant pour toute raison subjective ou objective après avoir appliqué ce qui précède, le jeu de caractéristiques peut être adapté soit par modification d'anciennes caractéristiques, soit par suppression d'anciennes caractéristiques, soit par ajout de nouvelles caractéristiques soit par combinaison de ces possibilités.

Le processus itératif peut ainsi être relancé sur ce nouveau jeu de caractéristiques. Le processus itératif peut également être adapté pour définir un niveau supplémentaire d'itération sur la définition des caractéristiques principalement dans le cas ou celles-ci peuvent être adaptées par un mécanisme informatique.

Le schéma 4 illustre le mode d'encodage de valeur par utilisation des variantes de caractères. Le tableau représenté dans ce schéma donne des exemples d'encodage pour le cas où les caractères encodés possèdent de façon constante 4 variantes. Il est possible de définir un encodage sur le même principe que celui que décrit ce schéma sur tout autre nombre N de variantes. Il est également possible d'effectuer un encodage satisfaisant même si les caractères encodables possèdent un nombre de variantes non identique. Ainsi si par exemple, il faut encoder des octets soient des entités de 8 bits, soient 256 valeurs de 0 à 255, il est possible d'initialiser un encodage sur un premier caractère encodable identifié en poursuivant sur les caractères encodables suivants jusqu'à obtenir ce potentiel de 256 valeurs.

Ainsi, si par exemple le nombre de variantes par caractère est le suivant :
- 2 variantes pour le « i »,
- 6 variantes pour le « m »,
- 4 variantes pour le « a »,
- 3 variantes pour le « t »,
- 4 variantes pour le « u »,
- 2 variantes pour le « r »,
- 4 variantes pour le « e »,

Le mot « immature » peut encoder jusqu'à 2x6x6x4x3x4x2x4 valeurs soient 27648 valeurs. Pour obtenir un octet, les 4 premières lettres suffisent car elles permettent d'encoder jusqu'à 288 valeurs soit plus que les 256 valeurs d'un octet. Ainsi l'encodage d'un premier octet peut commencer sur le « i » et se terminer sur le « a », l'encodage du second peut alors commencer sur le « t », les quatre dernières lettres du mot soit la chaine de caractère « ture » permettant d'encoder seulement 96 valeurs il faudra poursuivre l'encodage sur les caractères encodables suivants. Une lettre qui possède 3 variantes suffira à compléter l'octet.

Il est possible mathématiquement de définir que l'encodage d'un octet peut démarrer sur le même caractère que celui qui a clos l'encodage de l'octet suivant. Cela est possible surtout si le caractère peut encoder un nombre important de valeurs. Cela peut être fait simplement par exemple si le caractère encode au moins 4 valeurs et que l'octet précédent nécessite pour être encodé uniquement un bit, ce qui permet de disposer au moins d'un bit pour initialiser l'octet suivant.

Une autre méthode consiste à utiliser la puissance totale de l'encodage et de définir les octets formés par un calcul polynomial de puissance successives de 256 si ce sont des octets qui sont encodés ou de toute autre valeur comme par exemple 26 si l'on souhaite encoder uniquement les caractères de l'alphabet sans notion de minuscule/majuscule.

Dans le cas où le nombre de variantes est fixe, il est possible de définir un encodage unitaire via un nombre constant de caractères encodés. Par exemple dans le cas où chaque caractère possède quatre variantes il est possible d'associer à chaque couple de caractères encodés une valeur de 1 à 16 (ou de 0 à 15). Dans ce cas le premier caractère encode deux bits et le second également deux bits.

Ainsi dans le tableau du schéma 4, en première colonne, il est indiqué la variante utilisée pour le premier caractère et en deuxième colonne celle du deuxième caractère du couple. Ainsi la première variante de l'un ou l'autre encode la valeur binaire (0,0), la seconde (0,1), la troisième (1,0) et la quatrième (1,1). Dans cet exemple, le premier caractère encodant les bits de poids fort et le second ceux de poids faible suivant le principe gros-boutiste (ou big endian) déjà évoqué plus haut, on obtient la valeur binaire représentée en colonne 3. Il est bien sur possible d'inverser le rôle des caractères. Cela nous fournit également la valeur encodée en base 16 qui figure en colonne 4.

Pour permettre un décodage fiable, il peut être nécessaire de réserver certaines séquences de bits à des éléments structurels de l'encodage tel que l'entête qui permet l'identification du début de codage d'un message unitaire. Pour cela, il peut être intéressant d'interdire certaines valeurs binaires tel que le quadruplet (0,0,0,0) dans la partie du message hors entête. En excluant d'autres combinaisons de valeurs tels que (0,0,0,1) et/ou (1,0,0,0) il est possible d'accroitre la fiabilité de l'encodage en évitant plus aisément un faux codage d'entête dans le corps du message.

Dans ce contexte, il est possible de définir un encodage utile en base inférieur à 16 qui est la puissance maximale disponible dans ce cas. Ainsi une colonne du schéma 4 décrit un encodage en base 15, deux autres en base 14 et en base 13, et, enfin une dernière en base 10, ces exemples ne sont pas exhaustifs.

De même il est possible de définir un encodage sur une combinaison comportant un autre nombre de caractères, un codage sur 3 caractères permet de coder 64 valeurs et sur 4 de coder 256 valeurs soit l'équivalent d'un octet. Un message pouvant contenir plusieurs parties y compris au sein de la partie structurelle et/ou de la partie utile, il est possible d'adapter le codage à ces différentes parties qui seront chacune codée sur un nombre de caractère approprié, l'encodage supporté pour un même caractère comme décrit précédemment pouvant se partager sur deux encodages successifs.

Les schémas 5 illustrent différentes structures possibles mais non exhaustives de messages dans le cadre du support de l'encodage sujet de l'invention.

Le schéma 5A montre une première structure de message pour laquelle la partie utile est constituée de N codes utiles, chaque code utile correspond à une structure de données informatique exploitable tel un octet ou un ensemble de bits dans une utilisation d'un système binaire de description de données. Il est possible d'utiliser des systèmes non classiques de représentation de données telles qu'une définition en base 3 ainsi que tout système permettant l'encodage d'information.

En fonction de ce qui a été défini précédemment, un des modes privilégiés de l'invention est d'utiliser des couples de caractères possédant chacun 4 variantes et dans ce cas chaque code utile est une valeur de 0 à 15.

Il est également possible d'utiliser toutes les combinaisons de caractères déjà décrites, ou pouvant se déduire de celles-ci. Dans le cas où chaque code utile est défini par un couple de caractères qui potentiellement encode une valeur de 0 à 15, le message contient N de ces codes. Le message unitaire est initialisé par une séquence spécifique appelée « start message » qui permet à la phase de décodage de détecter le début d'un message unitaire. Une autre séquence spécifique, appelée « end message » est définie pour clore le message, sa détection lors de la phase de décodage permet d'identifier la fin du message en cours de décodage.

Il pourra être utilisé pour les séquences « start message » et « end message » des codes de longueur identique ou différentes des codes utiles utilisés pour le corps du message. Ainsi si le code utile unitaire est composé de 2 caractères qui encodent une valeur de 0 à 15, une valeur spécifique de 0 à 15 pourra également servir de « start message » ou de « end message ». Si la valeur 0 est utilisée en « start message » et la valeur 15 en « end message », ces valeurs pourront ne pas être utilisée dans la partie utile afin d'optimiser la reconnaissance de ces parties structurelles « start message » et « end message ».

En se basant sur le schéma 4 et la colonne qui définit une définition en base 10, le codage en base 10 utilisant des codes qui comporte au maximum un seul « 0 » binaire en poids forts et au maximum 2 « 0 » binaire en poids faibles, il est impossible d'avoir 4 « 0 » binaires consécutifs dans la partie utile de message sauf erreur de lecture. Cela permet dans ce cas au « start message » défini par ce quadruplet de 4 « 0 » consécutifs d'avoir un rôle plus discriminant et de faciliter le décodage. Le fait d'utiliser un « end message » qui n'est pas utilisé dans la partie utile de message permet également d'avoir un nombre N de codes utiles variable puisque la partie utile s'arrête lorsque le « end message » est trouvé.

Le décodage est basé sur des technologies de reconnaissance de caractères et peut être de fiabilité limitée. Il peut donc s'avérer nécessaire de pouvoir vérifier lors du décodage que le code lu est valide ou à minima qu'il y a une forte probabilité que les données lues soient valides. Pour cela dans le schéma 5B il est ajouté un CRC par rapport au schéma 5A. Le processus de décodage est similaire à celui adopté pour le schéma 5A où les données structurelles « start message » et « end message » sont identifiées permettant d'identifier N codes utiles.

Dans le cas du schéma 5B, les données structurelles « start message » et « end message » permettent d'identifier à la foi les N codes utiles ainsi qu'une autre donnée structurelle dénommée « CRC ». Classiquement, le « CRC » est apposé à la suite des données utiles mais rien n'empêche de placer cette donnée structurelle à tout autre endroit convenu du message sous condition que cet endroit puisse être identifié afin qu'à la fois le CRC et les données utiles puissent être décodées. Ainsi le CRC peut se trouver à tout endroit de la partie utile des données entre le premier code utile et le Nième code utile voire entre le « start message » et le premier code utile ou entre le Nième code utile et le « end message » soit encore avant le « start message » ou après le « end message ».

Le CRC, soit « contrôle de redondance cyclique » est une valeur qui est calculée à partir de la valeur utile du message lors de la phase d'encodage. Ce calcul peut également intégrer des éléments de la partie structurelle. Lors de la phase de décodage il suffit de recalculer ce CRC à partir de la valeur utile du message décodé et de le comparer à la valeur CRC lue. Sauf erreur de lecture, le CRC calculé pendant la phase de décodage doit correspondre à la valeur du CRC lu, calculée lors de l'encodage. Si la valeur lue correspond à la valeur recalculée, il est considéré qu'il n'y a pas d'erreur de lecture ou que la probabilité d'erreur de lecture est faible. Si la valeur lue ne correspond pas à la valeur recalculée, c'est qu'il y'a nécessairement une erreur de lecture lors du décodage soit sur la partie utile, soit sur le CRC soit sur les deux. Dans ce cas le message unitaire correspondant est rejeté.

Dans certains cas, le CRC permet en plus de vérifier l'exactitude des valeurs lues de pouvoir corriger plus ou moins efficacement celles-ci en cas d'erreur détectée. La fonction CRC peut être simple comme la « preuve par 9 » qui détermine le reste de la somme des valeurs après division par 9 ou plus complexe intégrant des fonctions de hachage sophistiquée.

Le CRC retenu peut être spécialement orienté pour détecter au moins une erreur de lecture sur un caractère. Dans ce domaine l'état de l'art est suffisamment développé pour pouvoir déterminer un CRC adapté à l'usage effectué dans le cadre de l'invention. On remarquera notamment qu'il est possible de calculer la probabilité d'erreur en fonction de la longueur du CRC. Des algorithmes différents permettent aussi de vérifier l'intégrité de la transmission d'un message et parfois même la correction de celui-ci en cas d'erreur de transmission. Il est tout à fait envisageable d'intégrer de genre d'approche au sein de l'encodage de messages dans le cadre de l'invention où il est cependant recommandé d'avoir un compromis entre sécurité et taille du CRC. En effet plus le CRC utilise de caractères et plus grand est le risque que le CRC lui-même entraîne en rejet du message par son mauvais décodage.

Le schéma 5C est identique au schéma 5A sans intégrer dans la partie structurelle de « end message ». En contrepartie, le nombre de codes utiles du message unitaire est fixe et dans le cas présent est égal à N. Ainsi la fin du message est détectée non pas par identification de la partie structurelle « end message » mais par comptage des codes utiles. Il est toutefois possible de définir une longueur variable sous condition d'insérer cette information dans la partie utile du message, classiquement, l'information de longueur est la première information utile du message dans ce cas.

Le schéma 5D est identique au schéma 5B sans intégrer dans la partie structurelle de « end message ». En contrepartie, le nombre de codes utiles du message unitaire est fixe et dans le cas présent est égal à N. Ainsi la fin du message est détectée non pas par identification de la partie structurelle « end message » mais par comptage des codes utiles. Le CRC suivant sa position relative par rapport à la partie utile est également repérée et permet de valider et le cas échéant de corriger la partie utile du message.

Les schémas 6 illustrent différentes structures possibles de messages dans le cadre du support de l'encodage sujet de l'invention lorsque l'encodage est effectué via plusieurs sous-séquences d'encodage,

Le schéma 6A illustre l'encodage en utilisant trois sous-séquences. Lorsqu'un document ou une page est encodée, le volume de l'encodage peut être plus ou moins volumineux indépendamment du nombre d'informations à encoder.

Plus la longueur d'un message unitaire est importante et plus le risque de lecture erronée est important. Ainsi dans le cas d'un taux d'efficacité de l'« OCR particulier » de 99 %, le taux de lecture correcte d'un message unitaire comportant 20 caractères, partie utile et partie structurelle incluses, et d'environ 80 % (0,99²⁰). Si la longueur est de 60 caractères, le taux de lecture tombe à 54 % (0,99⁶⁰). Avec un taux d'efficacité de l'« OCR particulier » à 99,5 % on obtient des taux de lecture de respectivement environ 90 % et 75 %.

Afin d'éviter un trop grand nombre de rejet, il peut donc être avantageux d'encoder l'information utile sous forme de plusieurs sous-séquences plutôt que d'une seule. Cet avantage est encore accru si on utilise de la redondance, c'est-à-dire si chaque message unitaire est encodé plusieurs fois dans la page.

Dans le cas où le taux d'efficacité de l'OCR particulier » est de 99%, si chaque message unitaire est encodé deux fois dans la page, la probabilité de décoder un message de 60 caractères encodé deux fois est d'environ 79% (1 - 0,46²). Pour un message de 20 caractères encodés deux fois, la probabilité est d'environ 96% (1 - 0,20²). Pour un message de 60 caractères encodé sous forme de trois séquences, chacune encodée deux fois, la probabilité est d'environ 88% (0,96³).

Dans le cas où le taux d'efficacité de l'OCR particulier est de 99,5 %, la probabilité dans les mêmes conditions de décoder un message de 60 caractères est d'environ 93 % contre environ 97 % si le message est découpé en trois sous séquences de 20 caractères. En dehors du gain en fiabilité, le découpage en sous-séquences permet une disposition spatiale plus adaptée à un décodage par un mode photographique ou vidéo comme cela est décrit à partir des schémas suivants.

Pour réaliser cet encodage plusieurs messages sont définis, correspondant chacun à une sous-séquence particulière, chaque sous-séquence étant déterminée par une donnée structurelle « start message » qui lui est propre. Ce « start message » peut être composé d'une première partie commune qui indique le début d'une sous-séquence sans déterminer la sous-séquence initialisée et être complété par une seconde partie qui définit la sous-séquence initialisée.

Ainsi dans le cas où le codage est effectué par des couples de caractères qui codifient jusqu'à 16 positions, le premier couple de caractère qui suit le « start message » commun à toutes les sous-séquences identifie le type de sous-séquence qui suit. Cela autorise jusqu' 16 sous-séquences distinctes.

Toutefois le codage de l'identifiant de sous-séquence peut être défini avec un codage propre distinct du codage de la partie utile du message en particulier sur le nombre de caractères utilisés, les combinaisons admissibles de ces caractères ainsi que leur signification en terme de sous-séquence correspondante. Il est ainsi possible sur la base de caractères possédant 4 variantes encodant chacune une valeur binaire de deux bits, d'encoder 4 sous-séquences distinctes avec 1 seul caractère associé, 16 avec 2, 64 avec 3 caractères et ainsi de suite.

Le nombre réel de sous-séquences encodables peut être restreint du fait que certaines combinaisons de bits peuvent être interdites pour des raisons de fiabilité du décodage. La partie utile de l'encodage de chaque sous-séquence est effectuée suivant des modalités identiques à ce qui est décrit pour l'encodage de la partie utile d'une séquence unique.

Toutefois, l'encodage de cette partie utile pourra être adapté à l'information de la sous-séquence. Ainsi une sous-séquence qui encoderait une information numérique comme un code postal (soit pour la France, un nombre compris entre 0 et 99999) pourra être encodé avec cinq couples de caractères encodant chacun un digit (un chiffre) soit un codage en base 10 comme l'indique la colonne « base 10 » du schéma 4. Un encodage en base autre que 10 est également possible moyennant l'utilisation d'un développement polynomial de puissances successives de B si B est la base utilisée. En se basant sur le schéma 4 qui n'est pas exhaustif, B peut valoir 10, 13, 14, 15 ou 16.

Si un nom de famille doit être encodé, en supposant que ce nom soit défini uniquement avec des lettres majuscules de A à Z soit 26 lettres, il est possible d'encoder jusqu'à 5 lettre en utilisant un développement polynomial avec un encodage en base 16 avec 6 codes utiles. Ainsi si deux lettres permettent d'encoder un code utile de 2 bits (16 positions), il faudra 12 caractères pour encoder la partie utile d'une sous-séquence encodant 5 caractères. Tout en encodant 5 caractères, il est possible d'utiliser en plus des 26 lettres un signe supplémentaire tel que le tiret («-») ou l'espace (« »). En effet 27⁵ (= 14348907, 27 car 26 caractères plus un signe) est inférieur à 16⁶ (= 16777216). Un deuxième signe n'est pas permis car cette fois, 28⁵ (=17210368) est supérieur à 16⁶. De façon générale, si on utilise N codes utiles qui chacun peuvent prendre P valeurs et que l'on désire encoder un message unitaire comportant ces N codes utiles avec des lettres, chiffres ou équivalents d'un espace qui contient Q signes élémentaires, on peut encoder jusqu'à M signes tels que Q^{M} ≤ P^{N} ≤ Q^{(M+1)}. Si l'espace en question est l'ensemble des chiffres, Q = 10, si c'est l'ensemble des caractères alphanumériques soient les chiffres et uniquement les lettres de l'alphabet en minuscule ou majuscule, alors Q = 62 (26+26+10). Il est possible également d'effectuer un encodage dans le cas ou chaque code utile n'a pas la même potentialité en termes de nombre de variantes associées à une valeur et/ou dans le cas les lettres, chiffres, ou équivalents à encoder appartiennent à des espaces de dimension différente. Il suffit alors que la potentialité d'encodage du message unitaire qui est obtenue par le produit de la potentialité de chaque code utile le formant soit supérieure ou égale à la combinatoire de l'information à coder obtenue par le produit des dimensions des espaces associés à chaque lettre, chiffre ou équivalent à encoder. Ainsi un code tel que H524 qui a pour format une lettre majuscule suivie de 3 chiffres représente une combinatoire de 26000 valeurs.

Si la capacité d'encodage d'un message unitaire n'est pas suffisante pour encoder une information dans le cadre de ce qui a été défini, il pourra être utilisé plusieurs sous-séquences pour encoder cette information. Ainsi si l'on désire encoder un nom éventuellement précédé de l'initiale du prénom sur 10 caractères il pourra, en reprenant les définitions précédentes, être encoder les 5 premiers caractères dans une première sous-séquence et le résidu sur une deuxième sous-séquence.

Dans le cas de la définition de sous-séquences et d'une redondance, il est possible de définir la même redondance pour chaque sous-séquence ou de la définir en fonction de la sous-séquence. Certaines sous-séquences peuvent avoir un caractère prioritaire et pourront être associées à une redondance plus forte que les sous-séquences considérées comme moins prioritaires. Ainsi il peut être défini deux sous-séquences qui définissent un référencement de document authentifiable permettant l'obtention de copies authentifiées, ces sous-séquences sont dénommées sous-séquences 1 et 2 et sont dans le cas de notre exemple considérées comme prioritaires. D'autres sous-séquences peuvent être définies pour porter des informations de contrôle du document comme le nom ou l'adresse du destinataire du document qui permettent de vérifier directement et sans accès à un service externe la validité de certaines informations visibles. Ces sous-séquences sont dénommées sous-séquences 3,4 et 5 et sont dans le cas de notre exemple considérées de priorité moindre. En fonction de la capacité d'encodage de la page il pourra dans les limites de celle-ci être défini une redondance de 3 pour les sous-séquences 1 et 2, une redondance de 2 pour la sous-séquence 3 et une redondance de 1 pour les sous-séquences 4 et 5.

Le contenu utile d'un message peut être une référence de base de données, ainsi plutôt que d'encoder une adresse ce qui peut être complexe du fait de la multiplicité des définitions possibles et la longueur extrêmement variable des noms propres utilisés, il est plus rationnel de disposer d'une base des adresses connues pour un pays donné.

Pour la France, il existe de telles bases qui sont commercialisées avec des mises à jour régulières. Une telle base contient moins de 20 millions d'entrées pour la France, ce qui est du même ordre de grandeur que la potentialité de la concaténation de 6 codes utiles pouvant encoder chacun 16 valeurs. Il est donc possible moyennant certaines optimisations de coder la référence d'une adresse sur un message unitaire.

Si ce message unitaire n'a pas la potentialité suffisante, il est possible d'utiliser 2 ou plus messages unitaires distincts pour encoder ces adresses. Par exemple si le nombre d'adresses référencées en base de données est inférieur à 20 millions et qu'un message unitaire peut encoder une valeur de 0 à 10 millions, une première sous-séquence, la sous-séquence P permet de définir une adresse comprise dans les codes 1 à 10 Millions et la sous-séquence P+1 permettra d'atteindre une adresse du résidu.

Le référencement des sous-séquences est libre de même que le référencement des adresses ne doit pas respecter obligatoirement un ordre établi. Il est d'ailleurs recommandé que celui-ci soit le plus erratique possible afin d'éviter à une personne mal intentionnée de découvrir une correspondance de code par déduction.

Il est possible de la même façon de définir des bases de « noms » connus ou de « prénoms » connus pour un référencement du même type. Ces trois bases (adresses, noms, prénoms) peuvent coexister sans atteinte à la vie privée tant qu'elles ne permettent pas d'associer deux éléments entre eux (un Nom et une adresse par exemple).

Ces bases pourront être intégrées directement à l'outil de décodage afin de permettre un décodage sans nécessité de connexion. Elles pourront être accessibles par le réseau et nécessiteront donc pour être définies une connexion spécifique lors de l'opération de décodage pour laquelle la correspondance avec la valeur extraite sera fournie par un service extérieure sur requête spécifique. Ces bases pourront faire l'objet de mises à jour suivant les différentes techniques déjà existantes dans le domaine, en particulier en ce qui concerne les éléments modifiés ou obsolètes dont potentiellement la référence a déjà pu être utilisée.

Dans certains cas le code extrait pourra servir à vérifier la validité d'une information visible, ainsi l'adresse facturée sur le document traité pourra être lisible et cette même adresse pourra être codée sous forme de référence dans le tatouage proposé par l'invention. Dans ce cas, le traitement du document en sus d'extraire les informations définies dans le tatouage proposé par l'invention pourra rechercher par une technique classique d'OCR associé à un technique de LAD/RAD quelle est l'adresse visible figurant sur le document. Ces deux informations « adresse visible » et « code de l'adresse extrait du tatouage cadre de notre invention » sont envoyées à un service distant qui en retour renvoie un diagnostic de validité : les deux informations sont compatibles ou non. Il peut être procédé de même pour d'autres informations (Nom, prénom, date, montants ...). Ce diagnostic sera évidemment utile à l'entité ou la personne qui exploite le document ainsi traité.

Le schéma 6B est une adaptation du schéma 6A avec introduction d'un CRC comme cela a été décrit dans le schéma 5B par rapport au schéma 5A. Dans le cas où le CRC est propre à chaque message élémentaire, la description effectuée pour le schéma 5B peut s'appliquer ici, seule la donnée de structure « start message » diffère avec le schéma 5A et ne modifie pas les principes généraux d'application d'un CRC.

Il est possible de réserver un ou plusieurs messages unitaires pour l'encodage d'un CRC global sur tout ou partie des données encodées de la page ou du document. Ce CRC pouvant cohabiter ou non avec d'autres informations utiles. Le CRC ainsi défini peut soit être autonome et se substituer à des CRC encodés sur chaque message unitaire soit être défini en complément de tout ou partie des CRC définis dans chaque message unitaire.

Comme indiqué dans la description des schémas 5C et 5D, l'utilisation d'une longueur fixe de l'information utile que ce soit pour tout ou partie des sous-séquences permet de se dispenser de l'usage de «end messages » pour les sous-séquences concernées. Le « end message » pourra quand même être utilisé dans une optique de fiabilisation du décodage.

Le schéma 7 comme les schémas 8 et 9 sont des schémas qui ont déjà été référencés dans un de mes brevets récents. Ils définissent la dissémination optimale de « règles » dans un document afin qu'elles soient aisément exploitables via un Smartphone (Téléphone intelligent) ou PDA (tablette informatique) équipés d'une optique pouvant être pilotée par ces dispositifs soit pour une prise photo, simple ou multiple, soit pour une prise vidéo. Le fait que les photos ou la vidéo ainsi définies soient effectuées via des dispositifs disposant d'une intelligence informatique, permet une exploitation des images résultantes satisfaisante dans le cadre de l'invention. Cette intelligence informatique peut également être mise à profit dans le pilotage de la prise d'image, photo ou vidéo, afin d'en optimiser le résultat en vue de l'exploitation envisagée dans le cadre de l'invention.

Ce schéma 7 indique dans le cas où des « règles » comportent 3 sous-séquences un mode d'imposition de celles-ci sur un document composé essentiellement de textes dans le cas où l'encodage de celles-ci peut être supporté par le texte. La présente invention qui permet à chaque caractère d'encoder une information de type informatique est conforme à ce qui est requis dans mon brevet antérieur. En particulier, sur la base de quatre variantes de caractères définies par caractère unitaire chacune de ces variantes correspondant à l'encodage d'une des valeurs binaires suivantes (0,0), (0,1), (1,0) et (1,1) une ligne de texte permet en effet de coder 3 sous-séquences dans une même ligne. Cette possibilité n'est évidemment pas limitative, toute autre définition d'encodage par caractère tel que décrit dans l'invention ainsi que toute autre définitions des sous-séquences d'encodage que ce soit dans le cadre d'une application « règles » ou dans toute autre application nécessitant un tatouage peut être envisagée.

Un des encodages possibles utilisant l'invention peut être définie comme suit :
- Chaque caractère encodable est associé à quatre variantes détectables par un OCR particulier,
- Chaque variante de caractère encodable encode une des valeurs binaires (0,0), (0,1), (1,0) et (1,1),
- Un code utile de base utilise deux caractères encodables et est ainsi une valeur binaire sur 4 bits soit encodant une valeur comprise entre 0 et 15,
- L'encodage des sous-séquences est conforme aux définitions du schéma 6B sans utilisation de « end message » conformément aux descriptions associées à ce schéma,
- Le start message est composé
   o d'une succession de 3 variantes de caractères toutes associées au code binaire (0,0), cet ensemble encode donc la valeur binaire (0,0,0,0,0,0),
   ∘ un caractère suit indiquant quelle est la sous-séquence associée à ce message, dans le cas du schéma 7 ici explicité 3 valeurs sont nécessaires alors qu'un caractère peut en encoder 4. Ainsi nous pouvons associer le code (0,1) à la sous-séquence 1, le code (1,0) à la sous-séquence 2 et le code (1,1) à la sous-séquence 3. Dans le cas où plus de 4 sous-séquences doivent être définis, la définition de la sous-séquence peut utiliser 2 caractères et plus suivant les besoins. Par exemple un ensemble de 2 caractères permet d'encoder les valeurs 0 à 16. Si le nombre de sous-séquences à définir ne dépasse pas 14, les valeurs 0 et 1 ne seront pas utilisées. Ces valeurs étant associées aux valeur binaires (0,0,0,0) et (0,0,0,1), leur non utilisation permet de minimiser la possibilité de trouver accidentellement la valeur remarquable (0,0 ,0,0,0,0) dans le corps du message comme cela sera précisé ci-après,
   o une partie utile d'encodage composée de 6 codes utiles, soient 12 caractères (2 caractères par code utile). Il est préférable de ne pas utiliser les codes utiles associés aux valeurs binaires (0,0,0,0) et (0,0,0,1). Ainsi aucun code utile ne commençant par trois « 0 binaires » et un code utile ne pouvant se finir au maximum par 3 « 0 binaires », il n'est pas possible d'avoir, sauf erreur de lecture, une succession de 6 « 0 binaires se confondant avec la première partie du « start message ». En utilisant un codage en base 13 comme indiqué dans la colonne correspondante du schéma 4, on aura au maximum 2 « 0 binaires » en début de code utile et au maximum 2 « 0 binaires » en fin de code utile ce qui autorise au maximum et sauf erreur de lecture une succession de 4 « 0 binaires » dans la partie utile du message ce qui limite de façon accrue l'apparition accidentelle d'une succession de 6 « 0 binaires »,
   o le CRC est choisi pour être défini sur 3 caractères encodables ce qui définit une valeur binaire sur 6 positions. Si le CRC calculé pendant la phase d'encodage est égal à (0,0,0,0,0,0) celui-ci pourra être remplacé par (1,1,1,1,1,1) afin d'éviter l'apparition inopportune de la séquence spécifique d'initialisation du « start message ». Dans ce cas, lors du décodage si le CRC calculé à partir du message lu est égal à (0,0,0,0,0,0, il sera considéré correct si le CRC lu est égal à (1,1,1,1,1,1), la probabilité pour que le code (1,1,1,1,1,1) soit généré accidentellement étant quasi nulle surtout si le choix du CRC est effectué en ce sens. Afin d'éviter que le code (0,0,0,0,0,0) puisse apparaître accidentellement par concaténation du CRC avec la partie utile du message qui le précède ou du début d'un message suivant, le code CRC ainsi défini sur 6 positions binaire 0/1 peut être encadré par deux « 1 binaires » ce qui définit ainsi pour le bloc CRC une suite de 8 positions binaires 0/1 qui nécessite l'utilisation de 4 caractères.

En prenant appui sur cette définition, une sous séquence nécessite 20 caractères, soit :
- 4 caractères pour le « start message » si on se limite à 3 sous-séquences,
- 12 caractères pour la partie utile du message,
- 4 caractères pour le CRC,
- Pas de caractères pour le « end message » qui n'est pas utilisé dans cet exemple.

Dans le cas d'utilisation d'une police en corps 12 la capacité approximative d'une ligne est d'environ 80 caractères ce qui permet aisément la définition de 3 sous-séquences qui ne nécessite que 60 des 80 caractères potentiels.

Si on utilise un codage en base 14 pour la définition des parties utiles des messages comme défini dans la colonne correspondante du schéma 14, une sous-séquence encode potentiellement jusqu'à 7529536 valeurs. Avec les trois sous-séquences, on peut encoder plus de 4 fois 10²⁰ valeurs ce qui est satisfaisant pour encoder des règles y compris des règles complexes intégrant référencement et cryptage.

Pour des applications de tatouage, des informations stratégiques du document peuvent être aisément autoportées sur une seule ligne du document, soit par une définition directe soit par référencement à une base de données accessible localement ou à distance. Il est ainsi également possible sur une seule ligne d'un livre électronique tel qu'il est visualisé sur une tablette informatique de faire figurer une référence qui identifie à la fois l'œuvre à laquelle cette ligne est associée et l'exemplaire de cette œuvre. Le tatouage ainsi défini permet d'obtenir une sécurité accrue en termes de droit d'auteur :
- Si l'œuvre achetée est dupliquée, il est aisé de savoir à qui appartient l'exemplaire qui a servi de support à la copie ce qui responsabilise le détenteur de la copie de cette œuvre et limite donc sa volonté de produire des copies illégales,
- Si l'œuvre dupliquée est volontairement transformée pour ne plus intégrer le tatouage tel que défini dans l'invention ou pour le rendre inopérant, il est aisé d'identifier quelle est l'œuvre dupliquée et que la copie est illégale ce qui rend l'opération dangereuse sur le plan pénal et est donc dissuasif.

Au-delà de cet exemple, il est possible de prévoir d'autres encodages et d'autres combinaisons de sous-séquences dans le cadre d'applications diverses nécessitant un tatouage compatible avec l'invention et avec une lecture de celui-ci via une prise photo et/ou vidéo par un terminal mobile tels que Smartphone ou PDA.

Dans l'exemple ci-dessus évoqué, pour que ce tatouage soit optimisé vis-à-vis d'une prise photo et/ou vidéo, si 3 sous séquences sont définies, soient les sous-séquences SS1, SS2 et SS3, celles-ci sont disposées comme suit dans la page :
- Lignes 1 et 1 modulo 3 (soient les lignes 4, 7, 10 etc.), les sous-séquences sont codées dans l'ordre SS1, SS2 et SS3 en laissant aux extrémités et entre ces codages un espace vierge non codé fonction de l'espace disponible,
- Lignes 2 et 2 modulo 3 (soient les lignes 5, 8, 11 etc.), les sous-séquences sont codées dans l'ordre SS2, SS3 et SS1 en laissant aux extrémités et entre ces codages un espace vierge non codé fonction de l'espace disponible,
- Lignes 3 et 0 modulo 3 (soient les lignes 6, 9, 12 etc.), les sous-séquences sont codées dans l'ordre SS3, SS1 et SS2 en laissant aux extrémités et entre ces codages un espace vierge non codé fonction de l'espace disponible.

On obtient ainsi un jeu de sous-séquences SS1, SS2 et SS3 suffisant pour reconstituer l'encodage complet dans tout espace élémentaire de texte (extraction partielle, verticale ou en biais). Cette disposition est évidemment donnée à titre d'exemple, toute autre décomposition en sous-séquences d'encodage permettant une reconstitution aisée dans de nombreux cas d'extraction partielle est également satisfaisante. Ce mode d'imposition est également compatible avec tout traitement classique de la page par une numérisation classique dans le cas d'un « document matériel » ou par exploitation informatique d'un « document électronique ».

Dans le cas de présences de sous-séquences encodées dans le document, l'opération de décodage identifie chaque sous-séquence présente dans la page ou l'extrait de page qui est traité. Les sous-séquences valides sont identifiées et en cas de redondance de certaines sous-séquences, celle-ci est utilisée pour définir le contenu de chaque sous-séquence viable avec éventuellement un diagnostic sur la confiance apportée à la valeur extraite. Dans le cas ou ce diagnostic est satisfaisant, tout ou partie des valeurs extraites du tatouage sont utilisées dans le traitement associé. Le diagnostic global sur l'extraction du tatouage de la page peut tenir compte du caractère prioritaire de certaines sous-séquences. Ainsi si les sous-séquences optionnelles sont décodées avec un diagnostic de confiance satisfaisant mais qu'une ou plusieurs des séquences prioritaires présentent un diagnostic de confiance insuffisant alors le traitement pourra être avorté complètement ou partiellement de ce simple fait.

Avec cette description, un paragraphe de quelques lignes est suffisant pour insérer une référence de l'œuvre duquel il est extrait avec de plus la possibilité d'encoder l'exemplaire (c'est-à-dire la copie marchande duquel il est extrait et donc l'identification du propriétaire de cette copie marchande), voire également la page de l'ouvrage d'où est extrait le paragraphe.

Il est ainsi possible de faire coexister sur une même page plusieurs paragraphes issus d'œuvres différentes et de copies marchandes distinctes. Il suffit pour cela que le processus de décodage prévoit de décrypter une multiplicité de références dans une même « page unitaire ». Dans ce cas, cette multiplicité peut être traitée lors du décodage de la page unitaire par une étape complémentaire identifiant les sous parties potentiellement indépendantes de la page et pouvant supporter un encodage spécifique distinct des autres parties de la page.

Pour résoudre ce besoin de multiplicité d'encodage sur une même page, Il est également possible de redéfinir l'encodage de la page pour éviter une confusion au décodage, ainsi les sous-séquences d'un premier encodage auront les numéros 1,2 et 3, celles d'un deuxième encodage 4,5 et 6 et ainsi de suite. Dans ce cas, si un paragraphe résulte d'une insertion avec un encodage de sous-séquences 1,2 et 3 lors de l'insertion, cet encodage est recalculé pour être compatible avec les autres encodages concurrents de la page lorsque la page est figée. Ce principe appliqué lors de la constitution de la page peut être combiné à une analyse adaptée lors de son décodage.

Le schéma 8 illustre à partir d'une disposition de sous-séquences d'encodage conforme à la description du schéma 7 la compatibilité de cet encodage avec une prise photo via une interface de mobilité adaptée tel qu'un Smartphone (« téléphone portable intelligent ») ou un PDA (tablette informatique).

Ainsi si la photo du document est suffisamment grande, dans de nombreux cas elle intégrera au moins une occurrence de chaque sous-séquence d'encodage, soit dans notre illustration les sous-séquences SS1, SS2 et SS3. La prise photo peut alors être pilotée par un logiciel spécifique qui va optimiser les paramètres de prise de vue voire effectuer les corrections d'image nécessaires afin de permettre un décodage de chaque sous-séquence incluse dans la photo prise en y incluant d'éventuels contrôles de validité du décodage effectué si l'encodage le permet.

Ce logiciel peut optimiser la prise photo en introduisant une redondance d'information en prenant de fait plusieurs photos dans un certain laps de temps, de préférence court. La mutualisation des images permet à l'homme du métier d'introduire des algorithmes permettant d'en déduire l'équivalent d'une image unique d'une meilleure précision que chacune des images dont elle est issue ou avec des caractéristiques plus en adéquation avec le traitement de décodage requis. Cet équivalent d'image résultante autorise par conséquent d'obtenir un décodage des sous-séquences d'encodage plus précis que sur le résultat d'une prise photo unique.

A partir de ce décodage des sous-séquences d'encodage et de la reconstitution correspondante du tatouage complet ou d'une partie suffisante de celui-ci, le dispositif pilotant la prise photo peut ainsi enchainer sur le traitement approprié comme par exemple l'obtention de copies authentifiables et/ou de copies authentifiées comme pourrait le permettre une numérisation classique.

Le schéma 9 illustre à partir d'une disposition de sous-séquences d'encodage conforme à la description du schéma 7 la compatibilité de cet encodage avec un balayage vidéo via une interface de mobilité adaptée tels qu'un Smartphone (« téléphone portable intelligent ») ou un PDA (tablette informatique).

Le balayage vidéo peut alors être pilotée par un logiciel spécifique qui va optimiser les paramètres de prise de vue voire effectuer les corrections d'image nécessaires afin de permettre un décodage de chaque sous-séquence incluse dans chaque photo composant le balayage vidéo en déduisant le décodage des décodages effectués à partir de chacune des photos du balayage. Ce logiciel peut également mutualiser les différentes images composant le balayage vidéo afin de construire l'équivalent d'une image unique d'une meilleure précision que chacune des images dont elle est issue ou avec des caractéristiques plus en adéquation avec le traitement de décodage requis. Cet équivalent d'image résultante autorise par conséquent d'obtenir un décodage des sous-séquences d'encodage pouvant être plus précis et/ou plus fiable que la mutualisation des résultats obtenus à partir de chacune des photos constituant le balayage vidéo.

Le schéma 10 illustre la décomposition d'un caractère en graphèmes. Dans ce schéma le caractère « m » identifié « 100 » est défini comme l'agrégation de 3 graphèmes soient les graphèmes identifiés « 101 », « 102 » et « 103 ».

Dans cet exemple les graphèmes « 102 » et « 103 » sont considérés comme identiques, ces deux graphèmes particuliers seront identiques pour le caractère de référence « m » non modifié ou différent en fonction de la police utilisée.

De même ces graphèmes pourront également s'intégrer à la décomposition en graphèmes d'autres caractères, ainsi pour certaines polices le « n » est composé des graphèmes « 101 » et « 102 » qui servent à définir le « m ». Avec un ensemble de graphèmes spécifiquement définis il est possible de recomposer tout ou partie de l'ensemble des caractères utilisés dans une police.

Ainsi de la même façon qu'un caractère entier, un graphème peut être associé à un certain nombre de variantes de graphème encodant chacune une valeur. Le nombre de variantes associées à un caractère peut être relativement réduit, la puissance de l'encodage étant compensée par la multiplicité des graphèmes composant un caractère. Ainsi si le graphème « 101 » est associé à deux variantes et les graphèmes « 102 » et « 103 » associés à trois variantes, on obtient une puissance d'encodage de 2x3x3 soient 18 variantes pour le caractère « m ».

Il est aussi plus aisé de considérer que le graphème non modifié encode également une valeur sur les mêmes bases que ce qui avait été défini pour les caractères. Dans ce cas, avec le même exemple, nous obtenons une puissance d'encodage de (2+1)x(3+1)x(3+1) soient 48 valeurs. Si pour des facilités de détection, on ne conserve que les combinaisons où au moins un des graphèmes utilisés est une variante, on obtient 47 combinaisons (48 moins l'association des trois graphèmes non modifiés).

Ce mode d'encodage est particulièrement adapté à certains alphabets asiatiques comportant un très grand nombre de caractères mais un nombre plus limité de graphèmes. Il est possible de prévoir un encodage mixte, c'est-à-dire un encodage du caractère de base complété par un encodage sur les graphèmes complémentaires. Ainsi un « m » peut pour certaines polices être considéré comme l'association d'un « n » et du graphème « 103 ». Ainsi si le « n » est associé à 4 variantes et le graphème « 103 » à trois variantes, on obtient une puissance d'encodage de 12 valeurs et de 16 si on considère que le graphème « 103 » non modifié encode également une valeur. On peut appliquer le même principe aux caractères accentués ainsi qu'à certains caractères spéciaux :
- Le « é » peut être considéré comme l'association du caractère « e » et du graphème « ' » (accent aigu),
- Le « ç » peut être considéré comme l'association du « c » et de graphème « cédille ».

En plus de l'encodage de base matérialisé par des variantes de caractères et/ou des variantes de graphèmes, les graphèmes peuvent encoder de l'information complémentaire grâce à une variation de niveau de gris. Dans une utilisation classique, les caractères sont imprimés en utilisant de l'encre noire sur du papier blanc. Si on utilise une numérisation du document en effectuant une quantification avec représentation des valeurs des pixels par des niveaux de gris compris entre 0 et 255 (encodage sur 8 bits), le « noir », caractérisant les informations de forme peut être associé à la valeur minimale 0.

Des études scientifiques ont montré que l'œil humain ne répond pas de manière linéaire aux différences d'intensité lumineuses mais de manière logarithmique et de manière contextuelle à l'environnement. Ainsi dans un environnement clair, l'œil pourra détecter facilement de petites différences de niveaux de gris dans les valeurs claires mais aura bien plus de mal à détecter des différences de niveaux de gris dans les mêmes ordres de grandeurs dans les ton foncés. De manière équivalente, dans un environnement faiblement éclairé, la nuit par exemple, le phénomène inverse pourra être observé.

Dans le cadre de la présente invention, il peut utiliser ce phénomène pour introduire une petite variation de niveau gris sur les caractères. Cette différence de niveau de gris difficilement perceptible pour un œil humain par comparaison avec la valeur utilisée par défaut peut en revanche être détectée dans une phase de traitement d'image suite à numérisation. Ainsi, si le caractère encode déjà une valeur de par les variantes associées, l'utilisation ou non d'un niveau de gris spécifique encode un bit d'information complémentaire, soit 0 par exemple si le « noir » de niveau de gris 0 est utilisé pour le caractère et 1 si une autre valeur de niveau de gris, par exemple 20 est utilisée.

Ainsi, si en faisant abstraction du niveau de gris utilisé par le caractère, les variantes associées permettent l'encodage de 4 valeurs, l'utilisation complémentaire du niveau de gris à 0 ou 20 permet l'encodage de 8 valeurs (4x2) et si plusieurs niveaux de gris sont utilisables, c'est-à-dire sans être détectés par l'œil mais pouvant être identifiés dans une phase de traitement d'image suite à numérisation et qu'enfin si en complément du noir à 0 de niveau de gris on peut utiliser par exemple un « noir » à 10 et un « noir » à 20, des quatre valeurs encodées par les variantes, on peut atteindre jusqu'à 12 valeurs encodées et ainsi de suite si on multiple le nombre de niveaux de « noir » identifiables par le traitement d'image suite à numérisation.

Les différents niveaux de noir utilisés peuvent être déterminés par l'application d'intervalles ou de seuils et éventuellement après une opération de calibrage permettant de connaître quel est le niveau de noir de référence du document ou du caractère.

On peut aussi utiliser n'importe quel autre type de méthode permettant de distinguer correctement les différents niveaux de noir après numérisation. Si au lieu d'appliquer ces variantes de « noir » sur le caractère entier mais sur tout ou partie des graphèmes qui le composent, on obtient une plus grande combinatoire.

Ainsi avec deux niveaux de « noir », comme par exemple 0 et 20, si le « m » permet l'encodage de 18 valeurs uniquement en appliquant les variantes soit sur le caractère soit sur les graphèmes qui le compose, les variations à deux valeurs de noir sur chacun des graphèmes « 101 », « 102 » et « 103 » qui le compose permettent d'étendre l'encodage à un total de 144 valeurs soient 18x2x2x2. Si on passe à trois niveaux de « noir » détectables, on encode jusqu'à 486 valeurs soient 18x3x3x3 et ainsi de suite.

Dans tous les cas, l'utilisation d'un encodage basé sur des graphèmes pourra nécessiter de positionner chacun de ces graphèmes séparément dans la page lors de la définition du fichier correspondant avec application du niveau de noir associé si nécessaire. Ainsi plutôt que de positionner un caractère dans la page, il sera positionné chaque graphème séparément avec son niveau de noir (niveau de gris) associé.

Si les caractères sont imprimés en couleur, la variation de noir peut être remplacée par toute variation de couleur détectable par un traitement sur le résultat de la numérisation, que ce soit une variation élémentaire sur une des couleurs de base ou sur une valeur résultante de l'application de ces couleurs comme la luminance. Un tel encodage nécessite de connaître de façon suffisamment précise quelle est la couleur normalement attribuée au caractère encodé afin de détecter quelle est la variation auquel il a été soumis. L'application d'une extension de l'encodage par utilisation des niveaux de gris ou de couleur peut être systématique ou défini sur une sélection de caractères ou de graphèmes par le processus d'encodage en fonction de son paramétrage.

En appliquant le même principe, il est également possible d'élargir l'encodage porté par un caractère en utilisant les zones blanches ou assimilées du caractère, bien que l'œil soit plus sensible à des variations de blanc qu'à des variations de noir. Ces zones internes ou externes aux caractères doivent pouvoir être définies de par leur position relative par rapport au caractère. Ainsi, dans le cadre d'une impression noir et blanche ou plutôt noire sur blanc. Les zones normalement blanches, correspondent à un niveau de gris de 255 ou à une valeur voisine. Ainsi la zone blanche du « m » définie entre les graphèmes « 101 » et « 102 » soit la zone « 104 » et de façon identique la zone « 105 » définie entre les graphèmes « 102 » et « 103 » peuvent être légèrement grisées par exemple avec un niveau de gris à 235 afin de ne pas être facilement perceptible à l'œil mais d'être détectables par un traitement de l'image résultante d'une numérisation. Dans ce cas, un niveau de gris à 255 de la zone « 104 » ou de la zone « 105 » pourra correspondre à la valeur binaire 0 alors que la valeur 235 correspondra à la valeur binaire 1. Les différents niveaux de blancs utilisés peuvent être déterminés par l'application d'intervalle ou de seuil et éventuellement après une opération de calibrage permettant de connaître quel est le niveau de blanc de référence du document ou du caractère. Le codage de chacune des zones « 104 » et « 105 » suivant ce principe permet l'encodage d'un bit d'information en complément des autres possibilités d'encodage déjà définies sur le caractère. Il est ainsi possible de définir d'autres zones blanches dans l'espace lié à l'empâtement du caractère comme les zones 106 à 111, chacune de ces zones permettant l'encodage d'un bit d'information. Si on multiplie les niveaux de blancs détectables par un traitement sur le résultat de numérisation, il est possible d'obtenir encore une plus grande puissance d'encodage, ainsi avec 3 niveaux de blancs y compris le blanc de référence non modifié, il est possible d'encoder sur les zones blanches 104 à 111 jusqu'à 38 valeurs soient 6561 valeurs, si on y associe les zones noires 101 à 103 elles-mêmes pouvant supporter 3 niveaux de noir y compris le noir de référence, on obtient 311 valeurs soient 177147 valeurs. Si ces variations de zones noires et blanches sont associées à des variantes des graphèmes comme précédemment défini, on obtient jusqu'à 177147x47 soient 8325909 valeurs soit pratiquement la puissance d'encodage de 3 octets (exactement un peu plus que 22 bits). De façon générale, en tenant compte que le caractère « m » est un caractère qui permet un encodage aisé, chaque caractère peut porter plus d'un octet d'information soit une information plus riche que celle qu'il véhicule de façon directe par sa lecture classique. Dans le cas, ou l'encodage doit être effectué quelque soit la police utilisée, le codage via les zones blanches et noires ainsi définies pourra se substituer à l'encodage via des variantes de caractère.

Dans un mode de réalisation préféré de l'invention, l'utilisation du niveau de noir des graphèmes d'un caractère support d'encodage ainsi que du niveau de blanc des différentes zones blanches du caractère ou connexes à celui-ci permettent de compléter la capacité d'encodage d'un tel caractère encodé.

Dans un autre mode de réalisation préféré de l'invention, le niveau de noir des graphèmes d'un caractère avec support d'encodage ou non ainsi que le niveau de blanc des différentes zones blanches du caractère ou connexes à celui-ci sont utilisés comme « marques » du document ou de la page. C'est-à-dire que l'utilisation de tels niveau de noir ou de blancs utilisés suivant une norme préétablie définissant tout ou partie des éléments suivants. Il pourra ainsi être déterminé la présence d'un marquage si une ou une combinaison des conditions suivantes est établie :
- Un ou certains graphèmes d'un ou plusieurs caractères utilisent des niveaux de noirs prédéterminés ou inclus dans un intervalle de niveau de noir prédéterminé,
- Une ou certaines zones blanches d'un caractère ou connexes à celui-ci utilisent des niveaux de blancs prédéterminés ou sont inclus dans un intervalle de niveau de blanc prédéterminé,
- Les niveaux de noirs ou les niveaux de blancs ainsi utilisés sur un caractère encodent l'équivalent d'une valeur numérique prédéterminée ou appartenant à un ensemble prédéterminé,
- La combinatoire des niveaux de noirs ou des niveaux de blancs ainsi définis pour un ensemble de caractères lui-même défini par un algorithme prédéterminé ou statistique est conforme à une règle de dissémination préétablie.

Ainsi par exemple, il pourra être établi qu'il y'a présence de marque si au moins 5 caractères possèdent au moins un graphème qui possède un niveau de noir compris entre N - 20 et N - 30 si N est le noir de référence. Le noir de référence est idéalement à 0 mais du fait des incertitudes liées à l'impression et la numérisation, celui-ci peut avoir une valeur différente comme 5 ou 10 par exemple.

La solution proposée fonctionne idéalement si une seule police est utilisée dans le document, c'est-à-dire à la fois une même police, un même corps et un même style. Il est possible d'utiliser d'autres polices en complément qui ne supporteraient pas d'encodage sous la condition que le processus de décodage puisse ne pas tenir compte des caractères utilisant ces polices évitant ainsi de les considérer comme des caractères encodables et/ou encodés. Ces caractères peuvent être aisément éliminés si ils appartiennent à des zones du document ou de la page unitaire dont le processus de décodage peut déterminer qu'elle ne sont pas support d'encodage. Cela peut être le cas en utilisant un système de LAD/RAD qui pourra ne sélectionner que les zones éligibles à un encodage. Certains algorithmes permettent également de déterminer quelle est la police utilisée ou ses caractéristiques telles que corps ou style. Dans ce cas, l'application d'un tel algorithme permet de ne conserver que les parties textuelles éligibles à un encodage.

Il est possible dans le cadre de notre invention de faire supporter notre encodage par différentes polices, intégrant éventuellement les différentes déclinaisons d'un même police avec des caractéristiques distinctes telles que corps ou style. Le traitement de décodage pourra alors être effectué comme dans le cas « monopolice » après application d'un traitement déterminant la police et/ou les caractéristiques telles que style et corps du caractère à décoder. Toutefois cette reconnaissance peut être optimisée par l'insertion de l'encodage d'une information complémentaire indiquant la police et ses caractéristiques telles que corps ou style du caractère à décoder.

Ainsi, les variations de graphèmes ou de zones blanches comme définies précédemment peuvent jouer ce rôle. Le niveau de noir des graphèmes d'un caractère avec support d'encodage ou non ainsi que le niveau de blanc des différentes zones blanches du caractère ou connexes à celui-ci sont utilisés pour définir certaines des caractéristiques du caractère. Ainsi une combinatoire particulière de ces niveaux de blanc et niveaux de noir permettront définir quel est la police utilisée et/ou le style utilisé et/ou le corps de la police utilisée. Cette combinatoire pourra être définie à partir d'un seul caractère ou à partir d'un ensemble de caractères pouvant être associés lors du processus de numérisation par un algorithme adapté. La définition résultante pourra s'appliquer à ces caractères ou à tout autre ensemble de caractères comprenant ou non tout ou partie de ces caractères.

Ainsi, si on désire autoriser l'utilisation de 16 polices, chacune pouvant être utilisée avec 4 corps différents et 4 styles différents, cela nous donne 256 possibilités de caractéristiques « police » des caractères associés. Pour réaliser l'identification de cette caractéristique « police », Il pourra être utilisé ainsi deux niveaux de noirs en plus du niveau de noir de référence pour les graphèmes de caractères.

Le premier caractère d'une ligne possédant au moins un graphème utilisant un noir différent du noir de référence mais correspondant à un des deux niveaux de noirs préétablis détermine la présence d'un encodage de caractéristique à partir du caractère suivant. Chaque caractère suivant possède en moyenne deux graphèmes, chaque graphème encode un bit d'information suivant qu'il utilise l'un des deux noirs préétablis différents du noir de référence. Il faudra 8 bits pour encoder une des 256 possibilités de police, cet encodage est établi en moyenne avec 4 caractères. A partir du caractère suivant, en général le 6ième, il est procédé au décodage tel que défini classiquement dans l'invention intégrant ou non l'utilisation des niveaux de noirs et des niveaux de blancs. La caractéristique de police ainsi définie pourra être considérée comme s'appliquant aux caractères suivant de la ligne, du paragraphe ou de la page ou de toute autre entité de texte comme par exemple le contenu d'une colonne. Elle pourra également être considérée comme valable jusqu'à la détection d'une nouvelle occurrence de définition de caractéristique de police. Les caractères encodant la caractéristique pourront également être support d'un encodage classique si celui-ci est compatible avec l'encodage de caractéristique de police. Ce mode d'encodage n'est pas limitatif, tout autre mode permettant à la phase de décodage d'identifier la police utilisée par chaque caractère encodable est satisfaisant.

L'invention possède de nombreux avantages. Le tatouage d'un livre papier ou électronique peut ainsi se faire sans surcoût du à cette phase bien que chaque page, voire chaque portion élémentaire de page, pourra inclure un tatouage différent. Il est ainsi par exemple aisé d'identifier l'acheteur d'un livre numérique sur chaque portion de celui-ci ce qui est un avantage indéniable pour la juste rétribution des droits d'auteur.

Cette méthode peut aisément être complétée par des technologies de tatouage des parties non textuelles du document. Les images d'un document par exemple de par leur complexité permettent par exemple l'utilisation de méthodes de watermarking aujourd'hui maîtrisées et suffisamment efficaces.

La solution proposée par la présente invention permet ainsi de sécuriser tout document constitué totalement ou partiellement de texte, ce qui englobe entre autres les documents de type administratif, les documents publics ou privés associés à des transactions mais également des documents nouveaux comme les livres électroniques dont l'essor est aujourd'hui limité du fait du non contrôle des copies pirates. Pour ce dernier, la solution selon l'invention permet de définir un tatouage efficace de ces derniers garantissant le respect des droits d'auteur lorsqu'une copie est requise.

## Revendications

1. Procédé de **décodage** d'un document comprenant au moins une partie textuelle,
ladite partie textuelle étant représentée sous une forme graphique, dont la détermination des caractères ne peut être obtenue par une analyse directe du contenu du fichier mais doit être retrouvée indirectement à partir des images que ce document permet de reconstituer, au moyen d'une police de caractères spécifique comportant, pour au moins un caractère dit encodable, un graphisme original et au moins une variante, chacune des variantes étant associée à une valeur différente d'encodage,
le graphisme original et la ou les variantes étant agencés pour être, lors d'une phase de décodage, identifiés comme un même caractère par un processus de reconnaissance optique de caractères ne disposant pas de ladite police de caractères spécifique, dénommé processus d'OCR classique,
ladite police spécifique ayant été utilisée au sein d'un processus de tatouage pour encoder une information dans ladite partie textuelle du document, par remplacement d'au moins un graphisme d'origine par une variante, pour un ou plusieurs caractères encodables,
une relation d'ordre stricte étant définie sur les caractères encodables afin d'établir dans quel ordre les caractères encodables seront traités lors de la phase de décodage,
ledit procédé de **décodage** comprenant les étapes de :
- appliquer à ladite partie textuelle d'un premier processus de reconnaissance de caractère formant un processus d'OCR classique, de façon à **reconnaître** au moins le sous-ensemble de caractères incluant lesdits caractères encodables,
et à fournir une image de chacun des caractères ainsi identifiés, lesdites images étant appelées imagettes,
- établir la « relation d'ordre strict » sur les caractères ainsi reconnus,
- appliquer auxdites imagettes un second processus de reconnaissance de caractère utilisant une classification statistique, dénommé OCR particulier, afin de déterminer si le caractère représenté est le graphisme original ou une des ses variantes et dans ce dernier cas déterminer la variante représentée, dans ladite police spécifique, ainsi que sa valeur d'encodage correspondante,
- les données ainsi déduites permettant une reconstitution de l'information encodée.

2. Procédé de décodage de document selon l'une quelconque des revendications précédentes, **caractérisé en ce qu'**il est appliqué à un encodage supporté par des variantes de parties de caractères ou graphèmes, l'encodage pouvant ainsi s'appuyer exclusivement sur des caractères et leurs variantes ou exclusivement sur des graphèmes et leurs variantes ou de façon mixte à la fois sur des caractères et leurs variantes et sur des graphèmes et leurs variantes.

3. Procédé de décodage de document selon l'une quelconque des revendications précédentes, **caractérisé en ce que** le document est décomposé en pages unitaires et que chaque page unitaire est éventuellement porteuse d'un encodage qui lui est propre et/ou de plusieurs encodages indépendants, ce ou ces encodages pouvant être complémentaires d'un autre mode de tatouage dépendant ou non de la partie textuelle du document.

4. Procédé de décodage de document selon l'une quelconque des revendications précédentes, **caractérisé en ce que** les différentes variantes d'un même caractère associées à des valeurs distinctes d'encodage sont intégrées à la même police que le caractère original mais à des positions distinctes, l'encodage de la valeur sur le caractère sélectionné se faisant par un changement adapté de la position du caractère dans la police du caractère sélectionné.

5. Procédé de décodage de document selon l'une quelconque des revendications précédentes, **caractérisé en ce que** il est utilisé, en plus d'une police de caractères originale de référence, autant de polices nouvelles que de valeurs d'encodage possible, la police associée à une valeur d'encodage regroupant toutes les variantes de caractères de la police originale de référence encodant cette valeur, l'encodage de la valeur sur le caractère sélectionné se faisant par un changement adapté de la police associée à ce caractère.

6. Procédé de décodage de document selon l'une quelconque des revendications précédentes, **caractérisé en ce qu'**il est utilisé un nombre suffisant de polices qui intègrent ensemble au moins une fois le caractère original si nécessaire, et chaque occurrence de variante de chaque caractère encodable, l'encodage étant alors effectué par une substitution de police adaptée pour chaque caractère nécessitant un tel changement dans le cadre de l'encodage global du document ou de la page unitaire.

7. Procédé de décodage de document selon l'une quelconque des revendications précédentes, **caractérisé en ce que** le décodage d'un document encodé est activé soit dès qu'un tel document est soumis à un processus de reproduction soit par une action spécifique du détenteur du document ou de celui qui doit l'exploiter

8. Procédé de décodage de document selon l'une quelconque des revendications précédentes, **caractérisé en ce que** les images prises par un terminal mobile tel qu'un téléphone intelligent ou une tablette numérique, qu'elles soient issues d'une succession de prises de photos ou d'une séquence vidéo, sont assemblées par un processus spécifique dont le résultat est l'équivalent d'une image unique sur laquelle l'opération de décodage est effectuée.

9. Procédé de décodage de document selon l'une quelconque des revendications précédentes, **caractérisé en ce que** la définition des pages unitaires et des éventuelles sous-parties des pages unitaires est effectuée postérieurement aux opérations de décodage et est définie implicitement par le résultat global du décodage en combinaison ou non avec d'autres éléments résultant de l'analyse du document à exploiter.

10. Procédé de décodage de document selon l'une quelconque des revendications précédentes, **caractérisé en ce que** des algorithmes de réduction de bruit ou de compensation des déformations potentielles résultant soit de la phase de numérisation soit de la phase de constitution de l'image via une prise photo simple ou multiple ou via une prise vidéo sont appliqués avant l'application d'un des OCR ou les deux, un premier processus spécifique pouvant être défini avant application de l'OCR Classique puis un autre processus spécifique avant l'application de l'OCR particulier, ces deux processus étant cumulatifs ou non, ces processus pouvant inclure des phases de nettoyage de la page et/ou de pixellisation et/ou de désaturation et/ou de binarisation.

11. Procédé de décodage de document selon l'une quelconque des revendications précédentes, **caractérisé en ce que** le décodage du document inclut une décomposition en composantes connexes, la décomposition pouvant être optimisée pour ne conserver que les amas de pixels pouvant correspondre à des caractères encodables, cette décomposition pouvant permettre la constitution d'imagettes de caractère indépendamment des phases d'OCR, cette phase servant de phase préparatoire aux phases d'OCR, la relation d'ordre stricte pouvant être affinée et/ou rectifiée à l'issue de chaque phase de traitement, et en particulier après la phase d'OCR classique pouvant permettre de mieux identifier le séquencement des caractères.

12. Procédé de décodage de document selon l'une quelconque des revendications précédentes, **caractérisé en ce que** le décodage du document inclut un OCR particulier distinct et dédié pour chaque caractère encodable identifié par l'OCR Classique et/ou inclut un ou plusieurs OCR particuliers globaux, un OCR particulier global étant capable de distinguer le caractère original et ses variantes de tout ou partie des caractères encodables, ce ou ces OCR particuliers globaux pouvant eux-mêmes être fusionnés à l'OCR Classique.

13. Procédé de décodage de document selon l'une quelconque des revendications précédentes, **caractérisé en ce que** l'encodage d'un document ou d'une page unitaire inclut un ou plusieurs encodage unitaires distincts, chacun des encodages unitaires pouvant être encodé une ou plusieurs fois dans ce document ou cette page unitaire, chaque encodage unitaire pouvant utiliser un mode d'encodage qui lui est propre avec utilisation ou non de cryptage et/ou de clé de hachage, le nombre d'occurrences de chaque encodage unitaire encodé dans une même page pouvant alors être défini en fonction de l'importance relative de chaque encodage unitaire, l'identification de chaque encodage unitaire est soit défini explicitement dans son contenu soit implicitement de fait du séquencement d'apparition.

14. Procédé de décodage de document selon l'une quelconque des revendications précédentes, **caractérisé en ce que** le décodage est effectué sur un document électronique par une exploitation directe de son contenu sans qu'il soit nécessaire d'appliquer des OCR, les caractères et leurs variantes étant discernables par un processus informatique adapté.

15. Procédé de décodage de document selon l'une quelconque des revendications précédentes, **caractérisé en ce que** sont définies par défaut quatre variantes par caractère afin que chaque caractère encodé encode 2 bits d'information et que la détection du caractère original et de ses variantes est réalisée par l'OCR particulier avec un taux de confiance satisfaisant tout en gardant une esthétique pour les variantes de caractères proche de celle du caractère original.

16. Procédé de décodage de document selon l'une quelconque des revendications précédentes, **caractérisé en ce que** le caractère original en sus de ses variantes encode une valeur, seules certaines parties textuelles identifiables lors de la phase de décodage étant porteuses d'encodage.

17. Procédé de décodage de document selon l'une quelconque des revendications précédentes, **caractérisé en ce que** le nombre de variantes par caractère est soit fixe soit variable, si le nombre est variable il peut soit dépendre du caractère soit du document ou de la page unitaire à encoder ou par une combinaison de ces critères ; et si le nombre de variantes est dépendant du document ou de la page unitaire encodée, ce nombre est déduit par le processus de décodage soit par une information explicite intégrée au document soit par une information implicite.

18. Procédé de décodage de document selon l'une quelconque des revendications précédentes, **caractérisé en ce que** l'OCR particulier, qui permet de distinguer les différentes variantes d'un même caractère ainsi que le caractère original non modifié, effectue cette distinction par une comparaison adaptée d'un nombre N de caractéristiques identifiées du caractère, un certain nombre de modifications élémentaires influençant les valeurs de ces N caractéristiques pouvant alors être définis.

19. Procédé de décodage de document selon l'une quelconque des revendications précédentes, **caractérisé en ce qu'**un message unitaire encodé intègre un corps de message qui est la partie utile du message et des parties structurelles permettant le repérage du message pendant le décodage et/ou la validation du corps de message décodé dans cette phase du décodage et/ou le mode de décodage du corps de message.

20. Procédé de décodage de document selon l'une quelconque des revendications précédentes, **caractérisé en ce que** la partie utile à encoder dans un document ou une page unitaire est encodée sous forme de plusieurs sous séquences, la redondance c'est-à-dire le nombre d'occurrences par page ou document, appliquée à chaque sous-séquence pouvant être corrélée à l'importance de l'information véhiculée et de la capacité d'encodage du document ou de la page unitaire.

21. Procédé de décodage de document selon l'une quelconque des revendications précédentes, **caractérisé en ce que** la partie du message à encoder dans un message unitaire est transformée en un nombre via un calcul polynomial adapté et que ce nombre est transformé en une séquences de caractères encodés par l'utilisation également d'un calcul polynomial adapté et que la valeur du message encodée est soit une valeur exploitable directement soit une valeur pointant sur une base de données, dans le cas où la valeur pointe sur une base de données, la correspondance pouvant être fournie par appel à un service extérieur, la ou les valeurs extraites du tatouage pouvant également être associées à d'autres valeurs correspondantes extraites du document tel qu'il est visible par une technique de LAD/RAD afin d'être envoyées ensemble à un service extérieur qui en détermine la cohérence et renvoie un diagnostic en ce sens via utilisation éventuelle d'une base de données.

22. Procédé de décodage de document selon l'une quelconque des revendications précédentes, **caractérisé en ce que** lorsque le décodage est effectué à partir d'une prise photo ou d'un balayage vidéo par un terminal mobile, une application spécifique installée sur celui-ci permet d'optimiser les caractéristiques de la prise de vue pour que la photo résultante soit compatible avec les traitements nécessaires à ce décodage, le décodage pouvant alors être obtenu soit par mutualisation des résultats de décodage effectué sur chacune des images résultantes soit obtenu par une mutualisation des images obtenues avant application du décodage sur le résultat de cette mutualisation.

23. Procédé de décodage de document selon l'une quelconque des revendications précédentes, **caractérisé en ce que** l'encodage normalement supporté par des variantes de caractères et/ou de variantes de graphèmes est complété
- par des variantes de niveau de gris sur les caractères ou les graphèmes encodés afin d'accroitre la potentialité d'encodage des chaque caractères ou des graphèmes, cette potentialité étant utilisée soit systématiquement soit sur une sélection particulière de caractères ou de graphème du document ou de la page unitaire à encoder définie par le processus d'encodage.
- et/ou par des variantes de niveau de gris sur des zones blanches connexes aux caractères que ces zones soient intégrées au caractère ou soient externes à celui-ci mais dans les deux cas soient définissables de par leur position relative par rapport au caractère.

24. Procédé de décodage de document selon l'une quelconque des revendications précédentes, **caractérisé en ce qu'**un document ou une page unitaire encodé intègre plusieurs polices ou des polices différentes par leurs caractéristiques, telles que corps ou style, supportant un encodage dans le cas où la phase d'encodage est capable d'intégrer un algorithme capable de différencier les différentes polices support d'encodage utilisées dans le document, cette différenciation pouvant s'appuyer sur des éléments identifiables additionnels ajoutés lors de la phase d'encodage.

## Patentansprüche

1. Verfahren zum Dekodieren eines Dokuments, das mindestens einen Textteil umfasst,
wobei der Textteil in einer grafischen Form dargestellt ist, bei der die Identifizierung der Zeichen nicht durch eine direkte Analyse des Inhalts der Datei erhalten werden kann, sondern auf indirektem Wege auf der Grundlage der Bilder neu ermittelt werden muss, die sich durch dieses Dokument mittels eines spezifischen Zeichensatzes rekonstruieren lassen, der für mindestens ein kodierbares Zeichen eine ursprüngliche grafische Darstellung und wenigstens eine Variante umfasst, wobei jede der Varianten einem anderen Kodierwert zugeordnet ist,
wobei die ursprüngliche grafische Darstellung und die Variante oder die Varianten derart angeordnet sind, dass sie bei einer Dekodierungshase durch ein klassisches OCR-Verfahren genanntes Verfahren zur optischen Zeichenerkennung, welches nicht über den spezifischen Zeichensatz verfügt, als ein und dasselbe Zeichen identifiziert werden,
wobei der spezifische Zeichensatz, der im Rahmen eines Verfahrens des verdeckten Kennzeichnens zum Kodieren einer Information in dem Textteil des Dokuments durch Austausch von mindestens einer ursprünglichen grafischen Darstellung gegen eine Variante, ein oder mehrere kodierbare Zeichen verwendet wurde,
wobei eine strenge Reihenfolge für die kodierbaren Zeichen definiert ist, um festzulegen, in welcher Reihenfolge die kodierbaren Zeichen bei der Dekodierungsphase behandelt werden,
**dadurch gekennzeichnet, dass** das Verfahren zum Dekodieren folgende Schritte umfasst:
- Anwendung auf den Textteil eines ersten, ein klassisches OCR-Verfahren darstellenden Verfahrens zur Zeichenerkennung, um zumindest die Untergruppe der Zeichen zu erkennen, die die kodierbaren Zeichen umfasst,
und um ein Bild jedes der auf diese Weise identifizierten Zeichen bereitzustellen, wobei diese Bilder als Miniaturbilder bezeichnet werden,
- Erstellung der "strengen Reihenfolge" für die auf diese Weise erkannten Zeichen,
- Anwendung auf die Miniaturbilder eines zweiten, auf einer statistischen Klassifikation beruhenden Verfahrens zur Zeichenerkennung, das als spezielles OCR-Verfahren bezeichnet wird, um zu ermitteln, ob es sich bei dem dargestellten Zeichen um die ursprüngliche grafische Darstellung oder um eine ihrer Varianten handelt und in diesem Fall die dargestellte Variante mit dem spezifischen Zeichensatz sowie ihrem entsprechenden Kodierungswert zu ermitteln,
- wobei die auf diese Weise abgeleiteten Daten eine Wiederherstellung der kodierten Information ermöglichen.

2. Verfahren zum Dekodieren eines Dokuments nach dem vorhergehenden Anspruch, **dadurch gekennzeichnet, dass** es für eine für Varianten von Teilen von Zeichen oder Graphemen geeignete Kodierung verwendet wird, wobei die Kodierung auf diese Weise ausschließlich auf Zeichen oder ihren Varianten oder ausschließlich auf Graphemen und ihren Varianten oder gemischt gleichzeitig auf Zeichen und ihren Varianten und auf Graphemen und ihren Varianten beruhen kann.

3. Verfahren zum Dekodieren eines Dokuments nach einem oder mehreren der vorhergehenden Ansprüche, **dadurch gekennzeichnet, dass** das Dokument in einzelne Seiten zerlegt wird und dass jede einzelne Seite gegebenenfalls Trägerin einer ihr eigenen Kodierung und/oder mehrerer unabhängiger Kodierungen ist, wobei diese Kodierung oder Kodierungen komplementär zu einem anderen Modus zum verdeckten Kennzeichnen sein können, der von dem Textteil des Dokuments abhängig oder unabhängig ist.

4. Verfahren zum Dekodieren eines Dokuments nach einem oder mehreren der vorhergehenden Ansprüche, **dadurch gekennzeichnet, dass** die verschiedenen, mit diskreten Kodierungswerten assoziierten Varianten eines selben Zeichens in denselben Zeichensatz wie das Original-Zeichen aber an diskreten Stellen integriert werden, wobei die Kodierung des Wertes des ausgewählten Zeichens durch eine geeignete Änderung der Stellung des Zeichens in dem Zeichensatz des ausgewählten Zeichens erfolgt.

5. Verfahren zum Dekodieren eines Dokuments nach einem oder mehreren der vorhergehenden Ansprüche, **dadurch gekennzeichnet, dass** zusätzlich zu einem Original-Referenzzeichensatz so viele neue Zeichensätze verwendet werden, wie sie den möglichen Kodierwerten entsprechen, wobei der einem Kodierwert zugeordnete Zeichensatz alle Varianten des Original-Referenzzeichensatzes umfasst, der diesen Wert kodiert, wobei die Kodierung des Wertes des ausgewählten Zeichens durch eine geeignete Änderung des diesem Zeichen zugeordneten Zeichensatzes erfolgt.

6. Verfahren zum Dekodieren eines Dokuments nach einem oder mehreren der vorhergehenden Ansprüche, **dadurch gekennzeichnet, dass** eine ausreichende Anzahl an Zeichensätzen verwendet wird, die falls erforderlich wenigstens einmal gemeinsam das Original-Zeichen und jedes Auftreten einer Variante jedes kodierbaren Zeichens umfassen, wobei die Kodierung durch eine geeignete Substituierung des Zeichensatzes für jedes Zeichen erfolgt, das eine solche Änderung im Rahmen der globalen Kodierung des Dokuments oder der einzelnen Seite erfordert.

7. Verfahren zum Dekodieren eines Dokuments nach einem oder mehreren der vorhergehenden Ansprüche, **dadurch gekennzeichnet, dass** die Dekodierung eines kodierten Dokuments entweder aktiviert wird, sobald ein derartiges Dokument einem Reproduktionsverfahren unterzogen wird oder durch eine spezifische Aktion des Inhabers des Dokuments oder desjenigen, der es nutzen soll, aktiviert wird.

8. Verfahren zum Dekodieren eines Dokuments nach einem oder mehreren der vorhergehenden Ansprüche, **dadurch gekennzeichnet, dass** die von einem mobilen Endgerät wie einem Smartphone oder einem Tablet-PC aufgenommenen Bilder, unabhängig davon, ob es sich um eine Reihe von Fotoaufnahmen oder um eine Videosequenz handelt, mittels eines spezifischen Verfahrens zusammengefügt werden, dessen Ergebnis einem Einzelbild entspricht, an dem die Dekodierungsoperation vorgenommen wird.

9. Verfahren zum Dekodieren eines Dokuments nach einem oder mehreren der vorhergehenden Ansprüche, **dadurch gekennzeichnet, dass** die Festlegung der einzelnen Seiten und der möglichen Unterabschnitte der einzelnen Seiten im Anschluss an die Dekodierungsoperationen durchgeführt wird und implizit durch das globale Ergebnis der Dekodierung allein oder in Verbindung mit anderen Elementen erfolgt, die aus der Analyse des auszuwertenden Dokuments resultieren.

10. Verfahren zum Dekodieren eines Dokuments nach einem oder mehreren der vorhergehenden Ansprüche, **dadurch gekennzeichnet, dass** Algorithmen zur Rauschunterdrückung oder zur Kompensierung von möglichen Verformungen, die entweder aus der Phase der Digitalisierung oder der Phase des Bildaufbaus mittels einer Einzel- oder Mehrfachfotoaufnahme oder einer Videoaufnahme resultieren, vor der Anwendung eines der OCR-Verfahren oder beider angewendet werden, wobei ein erster spezifischer Prozess vor der Anwendung des klassischen OCR-Verfahrens und ein anderer spezifischer Prozess vor der Anwendung des speziellen OCR-Verfahrens festgelegt werden kann, wobei diese beiden Prozesse kumuliert werden können oder nicht, Phasen der Reinigung der Seite und/oder der Pixelierung und/oder der Entsättigung und/oder der Binärisierung umfassen können.

11. Verfahren zum Dekodieren eines Dokuments nach einem oder mehreren der vorhergehenden Ansprüche, **dadurch gekennzeichnet, dass** die Dekodierung des Dokuments eine Zerlegung in miteinander verbundene Komponenten umfasst, wobei die Zerlegung derart optimiert werden kann, dass nur die Ansammlungen von Bildpunkten erhalten bleiben, die kodierbaren Zeichen entsprechen können, wobei diese Zerlegung zur Erstellung von Miniaturbildern von Zeichen unabhängig von den OCR-Phasen dienen kann, wobei diese Phase als Vorbereitungsphase zu den OCR-Phasen dient, wobei die strenge Reihenfolge verfeinert und/oder nach jeder Bearbeitungsphase korrigiert werden kann, und insbesondere nach der klassischen OCR-Phase, dazu beitragen kann, dass die Sequenz der Zeichen besser identifiziert werden kann.

12. Verfahren zum Dekodieren eines Dokuments nach einem oder mehreren der vorhergehenden Ansprüche, **dadurch gekennzeichnet, dass** die Dekodierung des Dokuments ein spezielles separates und eigenes OCR-Verfahren für jedes durch das klassische OCR-Verfahren identifizierte kodierbare Zeichen und/oder ein oder mehrere spezielle globale OCR-Verfahren umfasst, wobei ein spezielles globales OCR-Verfahren in der Lage ist, das Original-Zeichen und seine Varianten von allen oder einem Teil der kodierbaren Zeichen zu unterscheiden, wobei dieses oder diese speziellen globalen OCR-Verfahren selbst mit dem klassischen OCR-Verfahren fusioniert werden können.

13. Verfahren zum Dekodieren eines Dokuments nach einem oder mehreren der vorhergehenden Ansprüche, **dadurch gekennzeichnet, dass** die Kodierung eines Dokuments oder einer einzelnen Seite eine oder mehrere einzelne diskrete Kodierungen umfasst, wobei jede der einzelnen Kodierungen einmal oder mehrere Male auf diesem Dokument oder dieser einzelnen Seite kodiert werden kann, wobei jede einzelne Kodierung einen eigenen Kodierungsmodus unter Nutzung oder Nichtnutzung einer Verschlüsselung und/oder eines Hash-Schlüssels verwenden kann, wobei die Anzahl des Auftretens jeder einzelnen auf derselben Seite kodierten Kodierung in Abhängigkeit der relativen Wichtigkeit jeder einzelnen Kodierung definiert werden kann, wobei die Identifizierung jeder einzelnen Kodierung entweder explizit durch ihren Inhalt oder implizit durch die Sequenz des Auftretens definiert ist.

14. Verfahren zum Dekodieren eines Dokuments nach einem oder mehreren der vorhergehenden Ansprüche, **dadurch gekennzeichnet, dass** die Dekodierung von einem elektronischen Dokument durch direkte Verwertung seines Inhalts erfolgt, ohne die Anwendung von OCR-Verfahren zu erfordern, da die Zeichen und ihre Varianten durch einen geeigneten EDV-Prozess erkennbar sind.

15. Verfahren zum Dekodieren eines Dokuments nach einem oder mehreren der vorhergehenden Ansprüche, **dadurch gekennzeichnet, dass** standardmäßig vier Varianten pro Zeichen definiert sind, so dass jedes kodierte Zeichen 2 Informationsbits kodiert und die Erkennung des Original-Zeichens und seiner Varianten durch das spezielle OCR-Verfahren mit einem zufriedenstellenden Vertrauensgrad durchgeführt wird, wobei eine gewisse Ästhetik für die Varianten der Zeichen erhalten bleibt, die jener des Original-Zeichens nahekommt.

16. Verfahren zum Dekodieren eines Dokuments nach einem oder mehreren der vorhergehenden Ansprüche, **dadurch gekennzeichnet, dass** das das Original-Zeichen über seine Varianten hinaus einen Wert kodiert, wobei nur gewisse, während der Dekodierungsphase identifizierbare Textteile Träger einer Kodierung sind.

17. Verfahren zum Dekodieren eines Dokuments nach einem oder mehreren der vorhergehenden Ansprüche, **dadurch gekennzeichnet, dass** die Anzahl der Varianten pro Zeichen entweder fix oder variabel ist, wobei sie entweder von dem zu kodierenden Zeichen oder von dem Dokument oder von der einzelnen Seite oder von einer Kombination dieser Kriterien abhängen kann, wenn die Anzahl variabel ist; und wenn die Anzahl der Varianten von dem Dokument oder von der kodierten einzelnen Seite abhängt, diese Zahl durch den Dekodierungsprozess entweder mittels einer in das Dokument integrierten expliziten Information oder mittels einer impliziten Information abgeleitet wird.

18. Verfahren zum Dekodieren eines Dokuments nach einem oder mehreren der vorhergehenden Ansprüche, **dadurch gekennzeichnet, dass** das spezielle OCR-Verfahren, das es ermöglicht, zwischen den verschiedenen Varianten desselben Zeichens sowie dem nicht modifizierten Original-Zeichen zu unterscheiden, diese Unterscheidung durch einen geeigneten Vergleich einer Anzahl N von identifizierten Merkmalen des Zeichens vornimmt, wobei eine gewisse Anzahl an elementaren Änderungen, die die Werte dieser N Merkmale beeinflussen, definiert werden kann.

19. Verfahren zum Dekodieren eines Dokuments nach einem oder mehreren der vorhergehenden Ansprüche, **dadurch gekennzeichnet, dass** eine kodierte Einzelnachricht einen Nachrichtentext umfasst, bei dem es sich um den nutzbaren Teil der Nachricht handelt und strukturelle Teile, die zur Erkennung der Nachricht bei der Dekodierung und/oder der Validierung des dekodierten Nachrichtentextes bei dieser Dekodierungsphase und/oder dem Dekodierungsmodus des Nachrichtentextes dienen.

20. Verfahren zum Dekodieren eines Dokuments nach einem oder mehreren der vorhergehenden Ansprüche, **dadurch gekennzeichnet, dass** der in einem Dokument oder auf einer einzelnen Seite nutzbare, zu kodierende Teil in Form von mehreren Unterfolgen kodiert wird, wobei die auf jede Unterfolge angewandte Redundanz, das heißt die Anzahl des Auftretens pro Seite oder pro Dokument, mit der Wichtigkeit der enthaltenen Information und der Eignung zur Kodierung des Dokuments oder der einzelnen Seite korreliert sein kann.

21. Verfahren zum Dekodieren eines Dokuments nach einem oder mehreren der vorhergehenden Ansprüche, **dadurch gekennzeichnet, dass** der Teil der zu kodierenden Nachricht in einer Einzelnachricht mittels einer geeigneten Polynomberechnung in eine Zahl umgewandelt wird und dass diese Zahl ebenfalls durch Anwendung einer geeigneten Polynomberechnung in eine Zeichenfolge umgewandelt wird und dass der Wert der kodierten Nachricht entweder ein direkt verwendbarer Wert oder ein Wert ist, der auf eine Datenbank verweist, wobei im Falle, dass der Wert auf eine Datenbank verweist, die Entsprechung durch Inanspruchnahme eines externen Dienstes geliefert werden kann, wobei der oder die aus dem verdeckten Kennzeichnen extrahierten Werte ebenfalls anderen entsprechenden, aus dem Dokument extrahierten Werten zugeordnet werden können, wie es durch eine automatische Dokumentenlesungs-/automatische Dokumentenerkennungs-Technik sichtbar gemacht werden kann, um gemeinsam an einen externen Dienst versandt zu werden, der deren Kohärenz prüft und eine Diagnose in diesem Sinne mittels der möglichen Nutzung einer Datenbank zurücksendet.

22. Verfahren zum Dekodieren eines Dokuments nach einem oder mehreren der vorhergehenden Ansprüche, **dadurch gekennzeichnet, dass** bei der Dekodierung durch ein mobiles Endgerät von einer Fotoaufnahme oder einer Videoabtastung eine spezifische, auf diesem installierte Applikation es ermöglicht, die Merkmale der Aufnahme zu optimieren, damit das resultierende Foto mit den für diese Dekodierung erforderlichen Behandlungen kompatibel wird, wobei die Dekodierung entweder durch Zusammenfassung der Ergebnisse der bei jedem einzelnen der resultierenden Bilder durchgeführten Dekodierungen oder durch Zusammenfassung der vor Anwendung der Dekodierung auf das Ergebnis dieser Zusammenfassung erhaltenen Bilder erhalten wird.

23. Verfahren zum Dekodieren eines Dokuments nach einem oder mehreren der vorhergehenden Ansprüche, **dadurch gekennzeichnet, dass** die normalerweise für Varianten von Zeichen und/oder für Varianten von Graphemen geeignete Kodierung folgendermaßen ergänzt wird
- durch Graustufenvarianten der kodierten Zeichen oder Grapheme, um das Potenzial zur Kodierung jedes Zeichens oder Graphems zu steigern, wobei dieses Potenzial entweder systematisch oder bei einer besonderen Auswahl von Zeichen oder Graphemen des Dokuments oder der zu kodierenden, durch den Kodierungsprozess definierten einzelnen Seite angewendet wird
- und/oder durch Graustufenvarianten von mit den Zeichen verbundenen weißen Zonen, unabhängig davon ob diese Zonen in das Zeichen integriert sind oder sich außerhalb von diesem befinden, jedoch in beiden Fällen aufgrund ihrer relativen Lage in Bezug auf das Zeichen definierbar sind.

24. Verfahren zum Dekodieren eines Dokuments nach einem oder mehreren der vorhergehenden Ansprüche, **dadurch gekennzeichnet, dass** ein Dokument oder eine kodierte einzelne Seite mehrere Zeichensätze oder durch ihre Merkmale wie die Zeichengröße oder der Stil unterschiedliche, für eine Kodierung geeignete Zeichensätze umfasst, für den Fall, dass die Kodierungsphase in der Lage ist, einen Algorithmus zu umfassen, der die unterschiedlichen, in dem Dokument verwendeten Kodierungs-Zeichensätze unterscheiden kann, wobei diese Unterscheidung sich auf zusätzliche identifizierbare Elemente stützen kann, die während der Kodierungsphase hinzugefügt werden.

## Claims

1. A method for decoding a document comprising at least one textual part,
said textual part being represented in a graphic form, the character determination of which cannot be obtained by directly analysing the content of the file but has to be indirectly retrieved from images that this document allows to reconstitute, by a specific font including, for at least one so-called encodable character, an original written form and at least one variant, each of the variants being associated with a different encoding value,
the original written form and the variant(s) being arranged to be, during a decoding phase, identified as a same character by an optical character recognition process not having said specific font available, referred to as a conventional OCR process,
said specific font having been used within a watermarking process to encode a piece of information in said textual part of the document, by replacing at least one original written form by a variant, for one or more encodable characters,
a strict order relation being defined on the encodable characters in order to establish in which order the encodable characters will be processed during the decoding phase,
said decoding method comprising the steps of:
- applying to said textual part a first character recognition process forming a conventional OCR process, so as to recognise at least the character sub-set including said encodable characters,
and to provide an image of each of the characters thus identified, said images being called thumbnail images,
- establishing the "strict order relation" on the characters thus recognised,
- applying to said thumbnail images a second character recognition process using a statistical classification, referred to as particular OCR, in order to determine whether the represented character is the original written form or one of its variants and in the latter case determining the variant represented, in said specific font, as well as its corresponding encoding value,
- data thus deduced allowing the encoded piece of information to be reconstituted.

2. The document decoding method according to the preceding claim, **characterised in that** it is applied to an encoding supported by variants of parts of characters or graphemes, the encoding being thus able to solely rely on characters and their variants or solely on graphemes and their variants or in a mixed way both on characters and their variants and on graphemes and their variants.

3. The document decoding method according to any of the previous claims, **characterised in that** the document is split into unitary pages and each unitary page is possibly bearing an encoding peculiar thereto and/or several independent encodings, this or these encoding(s) being possibly complementary to another watermarking mode depending on the textual part of the document or not.

4. The document decoding method according to any of the previous claims, **characterised in that** the different variants of a same character associated with distinct encoding values are integrated into the same font as the original character but at distinct positions, the encoding of the value on the selected character being made by an adapted change of the position of the character in the selected font.

5. The document decoding method according to any of the previous claims, **characterised in that**, in addition to a reference original font, as many new fonts as possible encoding values are used, the font associated with an encoding value gathering all the character variants of the reference original font encoding this value, encoding the value on the selected character being made by an adapted change of the font associated with this character.

6. The document decoding method according to any of the previous claims, **characterised in that** a sufficient number of fonts which integrate together at least once the original character if necessary is used, and each occurrence of variant of each encodable character, the encoding being then performed by a font substitution adapted for each character requiring such a change in the scope of the overall encoding of the document or unitary page.

7. The document decoding method according to any of the previous claims, **characterised in that** decoding an encoded document is activated either as soon as such a document is subjected to a reproduction process or by an action specific from the document's owner or from the one which has to utilise it.

8. The document decoding method according to any of the previous claims, **characterised in that** the images taken by a mobile terminal such as a smartphone or a tablet computer, whether they come from a succession of photo shoot or from a video sequence, are assembled by a specific process the result of which is the equivalent of a single image on which the decoding operation is performed.

9. The document decoding method according to any of the previous claims, **characterised in that** defining the unitary pages and possible subparts of unitary pages is performed subsequently to the decoding operations and is implicitly defined by the overall decoding result in combination or not with other elements resulting from analysing the document to be utilised.

10. The document decoding method according to any of the previous claims, **characterised in that** algorithms of noise reduction or compensation of potential deformations resulting either from the digitising phase or from the image constituting phase via a single or multiple photo shoot or via a video recording are applied before applying one of the OCRs or both, a first specific process can be defined before applying the conventional OCR and then another specific process before applying the particular OCR, these two processes being cumulative or not, these processes can include phase cleaning and/or pixelisation and/or desaturation and/or binarisation phases.

11. The document decoding method according to any of the previous claims, **characterised in that** decoding the document includes splitting into related components, the splitting can be optimised to only retain pixel clusters which can correspond to encodable characters, this separating can allow character thumbnail images to be constituted independently of OCR phases, this phase acting as a preparatory phase for OCR phases, the strict order relation can be refined and/or corrected at the end of each processing phase, and in particular after the conventional OCR phase, which can allow sequencing of characters to be better identified.

12. The document decoding method according to any of the previous claims, **characterised in that** decoding the document includes a distinct particular OCR dedicated to each encodable character identified by the conventional OCR and/or includes one or more overall particular OCRs, an overall particular OCR being capable of distinguishing the original character and its variants from all or part of the encodable characters, this or these overall particular OCR(s) being in turn able to be merged with the conventional OCR.

13. The document decoding method according to any of the previous claims, **characterised in that** encoding a document or a unitary page includes several distinct unitary encodings, each of the unitary encodings being able to be encoded ones or several times in this document or unitary page, each unitary encoding can use an encoding mode peculiar thereto with or without the use of ciphering and/or hash key, the number of occurrences of each unitary encoding encoded in a same page can then be defined as a function of the relative importance of each unitary encoding, identifying each unitary encoding is either explicitly defined in its content or implicitly due to the appearance sequencing.

14. The document decoding method according to any of the previous claims, **characterised in that** decoding is performed on an electronic document by directly utilising its content without the need to apply OCRs, the characters and their variants being distinguishable by an adapted computing process.

15. The document decoding method according to any of the previous claims, **characterised in that** four variants per character are defined by default so that each encoded character encodes 2 information bits and **in that** detecting the original character and its variants is carried out by the particular OCR with a satisfactory confidence level while keeping aesthetics for the character variants close to that of the original character.

16. The document decoding method according to any of the previous claims, **characterised in that** the original character in addition to its variants encodes a value, only some textual parts identifiable during the decoding phase bearing an encoding.

17. The document decoding method according to any of the previous claims, **characterised in that** the number of variants per character is either fixed or variable, if the number is variable, it can either depend on the character or on the document or on the unitary page to be encoded or by a combination of these criteria; and if the number of variants is dependent on the document or encoded unitary page, this number is deduced by the decoding process either by an explicit piece of information integrated into the document or by an implicit piece of information.

18. The document decoding method according to any of the previous claims, **characterised in that** the particular OCR, which allows the different variants of a same character as well as the unmodified original character to be distinguished, performs this distinction by an adapted comparison of a number N of identified characteristics of the character, wherein a number of elementary modifications affecting the values of these N characteristics can thereby be defined.

19. The document decoding method according to any of the previous claims, **characterised in that** an encoded unitary message integrates a message body which is the useful part of the message and structural parts for locating the message during decoding and/or validating the decoded message body in this decoding phase and/or the decoding mode of the message body.

20. The document decoding method according to any of the previous claims, **characterised in that** the useful part to be encoded in a document or unitary page is encoded as several sub-sequences, wherein the redundancy that is the number of occurrences per page or document, applied to each sub-sequence can be correlated to the importance of the conveyed piece of information and of the encoding capacity of the document or unitary page.

21. The document decoding method according to any of the previous claims, **characterised in that** the part of the message to be encoded into a unitary message is transformed into a number via an adapted polynomial calculation and **in that** this number is transformed into a sequence of encoded characters by the use also of an adapted polynomial calculation and **in that** the value of the encoded message is either a directly utilisable value or a value pointing to a database, in the case where the value points to a database, wherein the correspondence can be provided by invoking an external service, wherein the value(s) extracted from the watermarking can also be associated with other corresponding values extracted from the document as is visible by an LAD/RAD technique before being sent together to an external service which determines consistency thereof and sends back a diagnosis to this end via the possible use of a database.

22. The document decoding method according to any of the previous claims, **characterised in that** when decoding is performed from a phot shoot or a video scanning by a mobile terminal, a specific application installed therein allows the characteristics of the photo shoot to be optimised so that the resulting photograph is compatible with processing operations necessary to this decoding, wherein decoding can thereby be obtained either by mutualising decoding results performed on each of the resulting images or obtained by mutualising the images obtained before applying decoding on the result of this mutualisation.

23. The document decoding method according to any of the previous claims, **characterised in that** encoding normally supported by character variants and/or grapheme variants is completed
- by grey level variants on the encoded characters or graphemes in order to increase the encoding potentiality of each character or grapheme, this potentiality being used either systematically or on a particular selection of characters or graphemes of the document or unitary page to be encoded defined by the encoding process.
- and/or by grey level variants on white zones related to the characters whether these zones are integrated into the character or are external thereto but in both cases are definable through their relative position with respect to the character.

24. The document decoding method according to any of the previous claims, **characterised in that** an encoded document or unitary page integrates several fonts or fonts differing in their characteristics, such as the body or style, supporting an encoding in the case where the encoding phase is capable of integrating an algorithm capable of differentiating different encoding support fonts used in the document, wherein this differentiation can rely on additional identifiable elements added during the encoding phase.
